(19) Europäisches Patentamt
European Patent Office
Office européen des brevets

(11) EP 4 012 004 A1

(12) # EUROPEAN PATENT APPLICATION

(43) Date of publication:
**15.06.2022 Bulletin 2022/24**

(21) Application number: **21213024.9**

(22) Date of filing: **08.12.2021**

(51) International Patent Classification (IPC):
***C09K 19/20*** *(2006.01)* ***C09K 19/30*** *(2006.01)*
***C09K 19/04*** *(2006.01)* ***C09K 19/34*** *(2006.01)*
***C09K 19/12*** *(2006.01)*

(52) Cooperative Patent Classification (CPC):
**C09K 19/2014;** C09K 2019/0448; C09K 2019/0466; C09K 2019/123; C09K 2019/3004; C09K 2019/301; C09K 2019/3422

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.12.2020 EP 20213541**

(71) Applicant: **Merck Patent GmbH**
**64293 Darmstadt (DE)**

(72) Inventors:
- **Siemianowski, Simon**
  **64293 DARMSTADT (DE)**
- **Schneider, Konstantin**
  **64293 DARMSTADT (DE)**

(54) **LIQUID CRYSTAL DEVICE**

(57) The invention relates to a liquid crystal (LC) device comprising at least two opposing transparent substrates, at least one liquid crystal switching layer sandwiched between said opposing substrates, comprising one or more nematogenic compounds, an electrode structure provided on one or both of the opposing substrates, characterized in that the electrode structure comprises at one or more electrode layers provided on one or both inner sides of the opposing substrates having a surface roughness ≤ 10 nm RMS (root mean square). The invention further relates to a method of production of said liquid crystal device, to the use of said liquid crystal device in various types of optical and electro-optical devices, and to electro-optical devices comprising the liquid crystal device

EP 4 012 004 A1

## Description

### Technical Field

The invention relates to a liquid crystal (LC) device comprising at least two opposing transparent substrates, at least one liquid crystal switching layer sandwiched between said opposing substrates, comprising one or more nematogenic compounds, an electrode structure provided on one or both of the opposing substrates, characterized in that the electrode structure comprises at one or more electrode layers provided on one or both inner sides of the opposing substrates having a surface roughness ≤ 10 nm RMS (root mean square). The invention further relates to a method of production of said liquid crystal device, to the use of said liquid crystal device in various types of optical and electro-optical devices, and to electro-optical devices comprising the liquid crystal device

### Background and Prior Art

Rubbed polyimide has been used for a long time to align liquid crystals. The rubbing process causes a number of problems, such as, mura, contamination, problems with static discharge, debris, etc.

Photoalignment is a technology for achieving liquid crystal (LC) alignment that avoids rubbing by replacing it with a light-induced orientational ordering of the alignment surface. This can be achieved through the mechanisms of photodecomposition, photodimerization, and photoisomerization (N.A. Clark et al. Langmuir 2010, 26(22), 17482-17488, and literature cited therein) by means of polarised light. However, still a suitably derivatised polyimide layer is required that comprises the photoreactive group. A further improvement would be to avoid the use of polyimide at all. For VA displays this was achieved by adding a self-alignment agent to the LC that induces homeotropic alignment in situ by a self-assembling mechanism as disclosed in WO 2012/104008 and WO 2012/038026.

N.A. Clark et al. Langmuir 2010, 26(22), 17482-17488 have shown that it is possible to self-assemble a compound onto a substrate to give a monolayer that is able to be photoaligned to induce homogeneous alignment of a liquid crystal. However, a separate step of self-assembly before manufacture of the LC cell is required and the nature of the azo group causes reversibility of the alignment when exposed to light.

Another functional group known to enable photoalignment is the phenylethenylcarbonyloxy group (cinnamate). Such materials were used in a photoalignment process, as disclosed in WO 99/49360, to give an orientation layer for liquid crystals. A disadvantage of orientation layers obtained by this process is that they give lower voltage holding ratios (VHR) than polyimides.

Further photocrosslinkable cinnamates and processes to induce homogeneous alignment of a liquid crystal by photoalignment are known from the prior art, e.g. so called SA-FFS devices as disclosed in M.H. Lee et al. published in Liquid Crystals (https://doi.org/10.1080/02678292.2018.1441459).

By utilizing the described photoalignment materials and process devices can be realized having contrast ratio levels typically in the range of 500:1 to 1000:1. Further improvement in contrast ratio is difficult to achieve up to now due to light leakage arising from the alignment domains.

Therefore, there is a demand for improved SA-FFS devices enabled by photoalignment of a liquid crystal mixture in situ, i.e. after assembly of the display, by means of linearly polarized light exhibiting preferably less alignment domains and consequently a higher contrast ratio.

In addition to this requirement, a liquid crystal display having favourable high dark state and contrast ratio as well as a favourable high voltage holding ratio is required. Furthermore, the process for the production of the LCD should be obtainable from a process that is compatible with common mass production processes.

Other aims of the present invention are immediately evident to the person skilled in the art from the following detailed description.

Surprisingly, the inventors have found out that one or more of the above-mentioned aims can be achieved by providing a compound according to claim 1.

### Terms and Definitions

A photoreactive group according to the present invention is a functional group of a molecule that causes a change of the geometry of the molecule either by bond rotation, skeletal rearrangement or atom- or group- transfer, or by dimerization, upon irradiation with light of a suitable wavelength that can be absorbed by the molecule.

The term "mesogenic group" as used herein is known to the person skilled in the art and described in the literature, and means a group which, due to the anisotropy of its attracting and repelling interactions, essentially contributes to causing a liquid-crystal (LC) phase in low-molecular-weight or polymeric substances. Compounds containing mesogenic groups (mesogenic compounds) do not necessarily have to have an LC phase themselves. It is also possible for mesogenic compounds to exhibit LC phase behaviour only after mixing with other compounds and/or after polymerisation.

Typical mesogenic groups are, for example, rigid rod- or disc-shaped units. An overview of the terms and definitions used in connection with mesogenic or LC compounds is given in Pure Appl. Chem. 2001, 73(5), 888 and C. Tschierske, G. Pelzl, S. Diele, Angew. Chem. 2004, 116, 6340-6368.

A photoreactive mesogen according to the present invention is a mesogenic compound comprising one or more photoreactive groups, preferably those photoreactive mesogens enabling photoalignment, preferably homogenous or planar alignment of a liquid crystal mixture in situ, i.e. after assembly of the display, by means of linearly polarized light.

Examples of photoreactive groups are -C=C- double bonds and azo groups (-N=N-).

Examples of molecular structures and sub-structures comprising such photoreactive groups are stilbene, (1,2-difluoro-2-phenyl-vinyl)-benzene, cinnamate, 4-phenylbut-3-en-2-one, chalcone, coumarin, chromone, pentalenone and azobenzene.

According to the present application, the term "linearly polarised light" means light, which is at least partially linearly polarized. Preferably, the aligning light is linearly polarized with a degree of polarization of more than 5:1. Wavelengths, intensity and energy of the linearly polarised light are chosen depending on the photosensitivity of the photoalignable material. Typically, the wavelengths are in the UV-A, UV-B and/or UV-C range or in the visible range. Preferably, the linearly polarised light comprises light of wavelengths less than 450 nm, more preferably less than 420 nm at the same time the linearly polarised light preferably comprises light of wavelengths longer than 280nm, preferably more than 320nm, more preferably over 350nm.

The term "director" is known in prior art and means the preferred orientation direction of the long molecular axes (in case of calamitic compounds) or short molecular axes (in case of discotic compounds) of the liquid-crystalline molecules. In case of uniaxial ordering of such anisotropic molecules, the director is the axis of anisotropy.

The term "alignment" or "orientation" relates to alignment (orientation ordering) of anisotropic units of material such as small molecules or fragments of big molecules in a common direction named "alignment direction". In an aligned layer of liquid-crystalline material, the liquid-crystalline director coincides with the alignment direction so that the alignment direction corresponds to the direction of the anisotropy axis of the material.

The term "planar orientation/alignment" or "homogenous orientation/alignment", for example in a layer of an liquid-crystalline material, means that the long molecular axes (in case of calamitic compounds) or the short molecular axes (in case of discotic compounds) of a proportion of the liquid-crystalline molecules are oriented substantially parallel (about 180°) to the plane of the layer.

The terms "uniform orientation" or "uniform alignment" of a liquid-crystalline material, for example in a layer of the material, mean that the long molecular axes (in case of calamitic compounds) or the short molecular axes (in case of discotic compounds) of the liquid-crystalline molecules are oriented substantially in the same direction. In other words, the lines of liquid-crystalline director are parallel.

The wavelength of light generally referred to in this application is 550 nm, unless explicitly specified otherwise.

The birefringence $\Delta n$ herein is defined by the following equation

$$\Delta n = n_e - n_o$$

wherein $n_e$ is the extraordinary refractive index and $n_o$ is the ordinary refractive index and the effective average refractive index $n_{av.}$ is given by the following equation

$$n_{av.} = [(2\, n_o^2 + n_e^2)/3]^{1/2}$$

The extraordinary refractive index $n_e$ and the ordinary refractive index $n_o$ can be measured using an Abbe refractometer.

In the present application the term "dielectrically positive" is used for compounds or components with $\Delta\varepsilon > 3.0$, "dielectrically neutral" with $-1.5 \leq \Delta\varepsilon \leq 3.0$ and "dielectrically negative" with $\Delta\varepsilon < -1.5$. $\Delta\varepsilon$ is determined at a frequency of 1 kHz and at 20°C. The dielectric anisotropy of the respective compound is determined from the results of a solution of 10 % of the respective individual compound in a nematic host mixture. In case the solubility of the respective compound in the host medium is less than 10 % its concentration is reduced by a factor of 2 until the resultant medium is stable enough at least to allow the determination of its properties. Preferably, the concentration is kept at least at 5 %, however, to keep the significance of the results as high as possible. The capacitance of the test mixtures is determined both in a cell with homeotropic and with homogeneous alignment. The cell gap of both types of cells is approximately 20 $\mu$m. The voltage applied is a rectangular wave with a frequency of 1 kHz and a root mean square value typically of 0.5 V to 1.0 V; however, it is always selected to be below the capacitive threshold of the respective test mixture.

$\Delta\varepsilon$ is defined as $(\varepsilon_{||} - \varepsilon_{\perp})$, whereas $\varepsilon_{av.}$ is $(\varepsilon_{||} + 2\, \varepsilon_{\perp}) / 3$. The dielectric permittivity of the compounds is determined from the change of the respective values of a host medium upon addition of the compounds of interest. The

values are extrapolated to a concentration of the compounds of interest of 100 %. A typical host medium is ZLI-4792 or ZLI-2857 both commercially available from Merck, Darmstadt.

For the present invention,

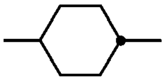 , 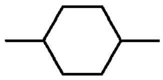 , 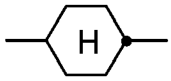 and 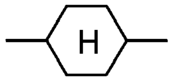

denote trans-1,4-cyclohexylene,

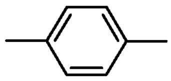 and 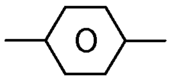

denote 1,4-phenylene.

For the present invention the groups -CO-O-, -COO- -C(=O)O- or -$CO_2$-denote an ester group of formula

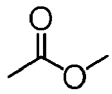 ,

and the groups -O-CO- -OCO-, -OC(=O)-, -$O_2$C- or -OOC- denote an ester group of formula

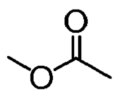 .

Furthermore, the definitions as given in C. Tschierske, G. Pelzl and S. Diele, Angew. Chem. 2004, 116, 6340-6368 shall apply to non-defined terms related to liquid crystal materials and the definitions as given by http://goldbook.iupac.org in the instant application shall apply for non-defined terms related to scientific terms.

Detailed Description

In a preferred embodiment of the invention the utilized substrates are substantially transparent. Transparent materials suitable for the purpose of the present invention are commonly known by the skilled person. In accordance with the invention, the substrates may consist or comprise, inter alia, each and independently from another of a polymeric material, of metal oxide, for example ITO and of glass or quartz plates, preferably each and independently of another of glass and/or ITO, in particular glass/glass.

Suitable and preferred polymeric substrates are for example films of cyclo olefin polymer (COP), cyclic olefin copolymer (COC), polyester such as polyethyleneterephthalate (PET) or polyethylene-naphthalate (PEN), polyvinylalcohol (PVA), polycarbonate (PC) or triacetylcellulose (TAC), very preferably PET or TAC films. PET films are commercially available for example from DuPont Teijin Films under the trade name Melinex ®. COP films are commercially available for example from ZEON Chemicals L.P. under the trade name Zeonor ® or Zeonex ®. COC films are commercially available for example from TOPAS Advanced Polymers Inc. under the trade name Topas ®.

The substrates can be kept at a defined separation from one another by, for example, spacers, in particular printed spacers, or projecting structures in the layer. Typical spacer materials are commonly known to the expert and are selected, for example, from plastic, silica, epoxy resins, etc.

In a preferred embodiment, the substrates are arranged with a maximum separation in the range from approximately 1 μm to approximately 100 μm from one another, preferably in the range from approximately 1 μm to approximately 75 μm from one another, and more preferably in the range from approximately 1 μm to approximately 50 μm from one another. The LC switching layer is thereby located in the interspace.

Consequently the invention relates to a device as described above and below, wherein the maximum thickness of the LC switching layer is in the range from approximately 1 μm to approximately 100 μm from one another, preferably in the range from approximately 1 μm to approximately 75 μm from one another, and more preferably in the range from

approximately 1 μm to approximately 50 μm from one another.

The device in accordance with the present invention comprises an electrode structure capable of electrically switching the LC switching layer and the electrode structure comprises at least one electrode layer having a surface roughness determined by AFM ≤ 10 nm RMS, preferably ≤ 8 nm RMS, more preferably ≤ 6 nm RMS, even more preferably ≤ 4 nm RMS and in particular ≤ 2 nm RMS.

In a preferred embodiment the electrodes are provided on the inner side of each of the opposing substrates Preferably, the electrode structure is provided as an electrode layer covering the whole surface of one or both substrates.

Suitable transparent electrode materials are commonly known to the expert, as for example electrode structures made of metal or metal oxides, such as, for example transparent indium tin oxide (ITO), which is preferred according to the present invention.

It has to be understood that the present invention refers to any kind of electrode configurations suitable for generating an electric field substantially perpendicular to a surface of the substrate mentioned above, such as electrode structures commonly known for the VA mode, or even ITO doped substrate materials. Such ITO doped substrate materials are either commercially available such as from Itochu Plastic INC., Japan or Opto Science INC., Japan or can be obtained by surface treatments known to the skilled person or as described below.

In this regard, Kim et al. disclose in Jpn. J. Appl. Phys. Vol. 41, 2002, pp.1523 to 1526
effects of mechanically polished and annealed indium-tin-oxide (ITO) substrates on tris-(8-hydroxyquinoline)aluminium (Alq3)-based light-emitting diodes. It was found that the roughness and oxygen content at the ITO surface were reduced after mechanical polishing. Organic light-emitting diodes (OLEDs) fabricated on polished ITO surfaces showed ten fold better electroluminescence and current injection than OLEDs fabricated on as-received ITO surfaces, due to the increase of the smooth contact area between the ITO surface and the organic layer. The ITO substrate annealed at 300°C did not show much enhancement of electroluminescence, even though it showed high current injection at low voltage. Therefore, mechanical polishing is an effective treatment for enhancing the performance of OLEDs. LCD's are not disclosed or suggested.

Further US 6849165 B2 discloses a process for the deposition of transparent and conductive indium-tin oxide (ITO) films with a particularly low resistance of preferably less than 200 μΩcm and a small surface roughness of preferably less than 1 nm on a substrate, wherein combined HF/DC sputtering of an indium-tin oxide (ITO) target is employed and wherein the process gas is supplemented by an argon/hydrogen mixture as reaction gas during the sputtering, as well as ITO-films with the above named characteristics. LCD's are not disclosed or suggested.

Typically, thin films of ITO are commonly deposited on substrates by physical vapour deposition, electron beam evaporation, or sputter deposition techniques. The electrode material can than further treated by chemical treatment (aquaregia, RCA) or physical treatments such as oxygen plasma treatment or polishing treatment such as polishing with fine particles such as fine $Al_2O_3$.

In a further preferred embodiment, the electrode material is typically annealed at elevated temperature. Annealing can be performed under an inert gas atmosphere such as, xenon, argon, $N_2$. The electrode material can further be cleaned for instance ultrasonically cleaned in an organic solvent, such as trichloroethylene, acetone or ethanolic solutions in order to degrease the substrate and to eliminate remnants after the polishing process and/or annealing treatment and subsequently dried, typically under reduced pressure and at an elevated temperature..

The determination of surface roughness of the electrode material can be performed by atomic force microscope (AFM), scanning electron microscope (SEM) and/or X-ray photoelectron spectroscopy (XPS). Preferably the surface roughness is determined as root mean square (RMS) by AFM.

In particular, the inventors have surprisingly found out that SA-FFS systems are more sensitive to surface roughness than conventional LCD modes requiring polyimide alignment systems. One result is that if the surface roughness of the applied electrode arrangement is reduced the impact of domain formation on dark state quality is reduced. A significant improvement in dark state quality is observed with a system containing polished ITO, whereby surface roughness has less than 2nm variation in contrast to conventional ITO for LCD applications that have much higher surface roughness in the region of 15-20nm. Therefore, a direct correlation between surface roughness, domain formation and resulting dark state quality is concluded. In a preferred embodiment, the LC device comprises at least one dielectric layer, which is provided on the electrode structure.

In another preferred embodiment, the LC device comprises at least two dielectric layers, which are provided on the opposing electrode structures.

Typical dielectric layer materials are commonly known to the expert, such as, for example, SiOx, SiNx, Cytop, Teflon, and PMMA.

The dielectric layer materials can be applied by conventional coating techniques like spin coating, roll-coating, blade coating, or vacuum deposition such as PVD or CVD. It can also be applied to the substrate or electrode layer by conventional printing techniques which are known to the expert, like for example screen printing, offset printing, reel-to-reel printing, letter press printing, gravure printing, rotogravure printing, flexographic printing, intaglio printing, pad printing, heat-seal printing, ink-jet printing or printing by means of a stamp or printing plate.

Preferably, the dielectric layers exhibit a surface roughness determined by AFM ≤ 10 nm RMS, preferably ≤ 8 nm RMS, more preferably ≤ 6 nm RMS, even more preferably ≤ 4 nm RMS and in particular ≤ 2 nm RMS.

Preferably, the LC device comprises at least two opposing transparent substrates, a LC switching layer sandwiched between said opposing substrates comprising a polymer obtainable from one or more polymerizable photoreactive mesogens, preferably of formula I,

$$R^{11}\text{-}Sp^{11}\text{-}X^{11}[\text{-}A\text{-}Z]_o\text{-}A^{11}\text{-}CY^{11}\text{=}CY^{12}[\text{-}C\text{=}O]_x[\text{-}O]_y\text{-}A[\text{-}Z\text{-}A]_p\text{-}X^{21}\text{-}Sp^{21}\text{-}R^{21} \quad I$$

wherein

A11 denotes a radical selected from the following groups: a) a group consisting of 1,4-phenylene and 1,3-phenylene, wherein, in addition, one or two CH groups are optionally replaced by N and wherein, in addition, one or more H atoms are optionally replaced by L, b) a group selected from the group consisting of

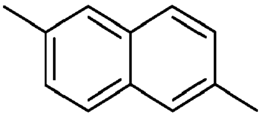, 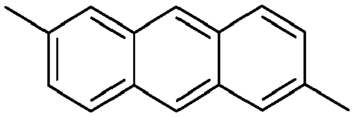,

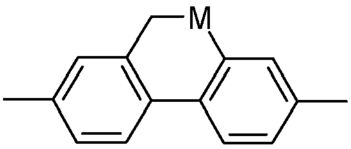, 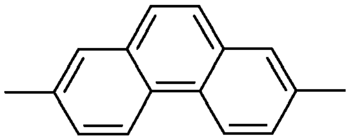,

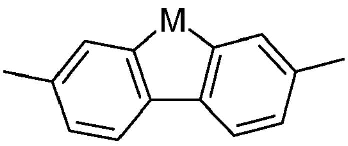, 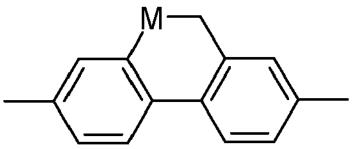,

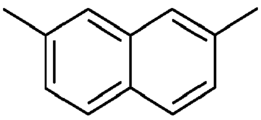, 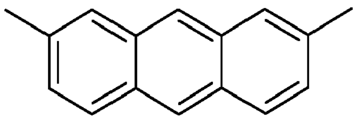,

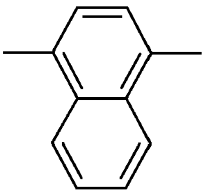, 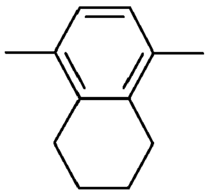,

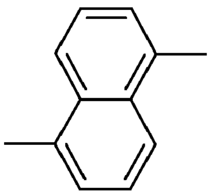,

where, in addition, one or more H atoms in these radicals are optionally replaced by L, and/or one or more double bonds are optionally replaced by single bonds, and/or one or more CH groups are optionally replaced by N,

A have each, independently of one another, in each occurrence one of the meanings for $A^{11}$ or a) group consisting of trans-1,4-cyclohexylene, 1,4-cyclohexenylene, wherein, in addition, one or more non-adjacent

$CH_2$ groups are optionally replaced by -O- and/or -S- and wherein, in addition, one or more H atoms are optionally replaced by F, or b) a group consisting of tetrahydropyran-2,5-diyl, 1,3-dioxane-2,5-diyl, tetrahydrofuran-2,5-diyl, cyclobutane-1,3-diyl, piperidine-1,4-diyl, thiophene-2,5-diyl and selenophene-2,5-diyl, each of which may also be mono- or polysubstituted by L,

L on each occurrence, identically or differently, denotes -OH, -F, -Cl, -Br, -I, -CN, $-NO_2$, SFs, -NCO, -NCS, -OCN, -SCN, $-C(=O)N(R^z)_2$, $-C(=O)R^z$, $-N(R^z)_2$, optionally substituted silyl, optionally substituted aryl having 6 to 20 C atoms, or straight-chain or branched or cyclic alkyl, alkoxy, alkylcarbonyl, alkoxycarbonyl, alkylcarbonyloxy or alkoxycarbonyloxy having 1 to 25 C atoms, or $X^{21}$-$Sp^{21}$-$R^{21}$,

M denotes -O-, -S-, $-CH_2-$, $-CHR^z-$ or $-CR^yR^z-$,

$R^y$ and $R^z$ each, independently of one another, denote H, CN, F or alkyl having 1-12 C atoms, wherein one or more H atoms are optionally replaced by F,

$Y^{11}$ and $Y^{12}$ each, independently of one another, denote H, F, phenyl or optionally fluorinated alkyl having 1-12 C atoms,

Z denotes, independently of each other, in each occurrence, a single bond, -COO-, -OCO-, -O-CO-O-, -OCH2-, $-CH_2O-$, $-OCF_2-$, $-CF_2O-$, $-(CH_2)n-$-$CF_2CF_2-$, -CH=CH-, -CF=CF-, -CH=CH-COO-, -OCO-CH=CH-, -CO-S-, -S-CO-, -CS-S-, -S-CS-, -S-CSS- or -C≡C-,

n denotes an integer between 2 and 8,

o and p denote each and independently 0, 1 or 2,

x and y denote each and independently 0 or 1, however under the condition that if x denotes 0, y cannot denote 1.

$X^{11}$ and $X^{21}$ denote independently from one another, in each occurrence a single bond, -CO-O-, -O-CO-, -O-COO-, -O-, -CH=CH-, -C=C-, $-CF_2-O-$, $-O-CF_2-$, $-CF_2-CF_2-$, $-CH_2-O-$, $-O-CH_2-$, -CO-S-, -S-CO-, -CS-S-, -S-CS-, -S-CSS- or -S-,

$Sp^{11}$ and $Sp^{21}$ denote each and independently, in each occurrence a single bond or a spacer group comprising 1 to 20 C atoms, wherein one or more non-adjacent and non-terminal $CH_2$ groups are optionally replaced by -O-, -S-, -NH-, $-N(CH_3)-$, -CO-, -O-CO-, -S-CO-, -O-COO-, -CO-S-, -CO-O-, $-CF_2-$, $-CF_2O-$ $-OCF_2-$ -C(OH)-, -CH(alkyl)-, -CH(alkenyl)-, -CH(alkoxyl)-, -CH(oxaalkyl)-, -CH=CH- or -C≡C-, however in such a way that no two O-atoms are adjacent to one another and no two groups selected from -O-CO-, -S-CO-, -O-COO-, -CO-S-, -CO-O- and -CH=CH- are adjacent to each other,

$R^{11}$ denotes P,

$R^{21}$ denotes P, halogen, CN, optionally fluorinated alkyl or alkenyl with up to 15 C atoms in which one or more non-adjacent $CH_2$-groups are optionally replaced by -O-, -S-, -CO-, -C(O)O-, -O-C(O)-, O-C(O)-O-,

P each and independently from another in each occurrence a polymerizable group,

and one or more nematogenic compounds, an electrode structure provided on one or both of the opposing substrates, characterized in that the electrode structure comprises one, preferably two electrode layers provided each on the inner sides of the opposing substrates having a surface roughness ≤ 10 nm RMS.

Suitable and preferred compounds of formula I are for example disclosed in EP 19178130.1, EP 18168779.9, EP 18168775.7, EP 18168774.0, EP 18168776.5, EP 18199489.8, or EP 18211999.0.

In the instant application, polymerizable groups (P) are groups that are suitable for a polymerisation reaction, such as, for example, free-radical or ionic chain polymerisation, polyaddition or polycondensation, or for a polymer-analogous reaction, for example addition or condensation onto a main polymer chain. Particular preference is given to groups for chain polymerisation, in particular those containing a C=C double bond or -C≡C-triple bond, and groups which are suitable for polymerisation with ring opening, such as, for example, oxetane or epoxide groups.

Preferred groups P are selected from the group consisting of

$CH_2=CW^1-CO-O-$, $CH_2=CW^1-CO-$,

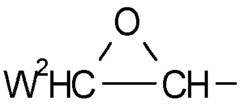, 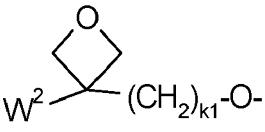,

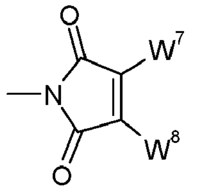, 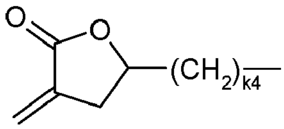,

$CH_2=CW^2-(O)_{k3}-$, $CW^1=CH-CO-(O)_{k3}-$, $CW^1=CH-CO-NH-$, $CH_2=CW^1-CO-NH-$, $CH_3-CH=CH-O-$, $(CH_2=CH)_2CH-OCO-$, $(CH_2=CH-CH_2)_2CH-OCO-$, $(CH_2=CH)_2CH-O-$, $(CH_2=CH-CH_2)_2N-$, $(CH_2=CH-CH_2)_2N-CO-$, $HO-CW^2W^3-$, $HS-CW^2W^3-$, $HW^2N-$, $HO-CW^2W^3-NH-$, $CH_2=CW^1-CO-NH-$, $CH+_2=CH-(COO)_{k1}-Phe-(O)_{k2}-$, $CH_2=CH-(CO)_{k1}-Phe-(O)_{k2}-$, Phe-CH=CH-, HOOC-, OCN- and $W^4W^5W^6Si-$ wherein $W^1$ denotes H, F, Cl, CN, $CF_3$, phenyl or alkyl having 1 to 5 C atoms, in particular H, F, Cl or $CH_3$, $W^2$ and $W^3$ each, independently of one another, denote H or alkyl having 1 to 5 C atoms, in particular H, methyl, ethyl or n-propyl, $W^4$, $W^5$ and $W^6$ each, independently of one another, denote Cl, oxaalkyl or oxacarbonylalkyl having 1 to 5 C atoms, $W^7$ and $W^8$ each, independently of one another, denote H, Cl or alkyl having 1 to 5 C atoms, Phe denotes 1,4-phenylene, which is optionally substituted by one or more radicals L as defined above, $k_1$, $k_2$ and $k_3$ each, independently of one another, denote 0 or 1, $k_3$ preferably denotes 1, and $k_4$ denotes an integer from 1 to 10.

Further preferred, P denotes a group

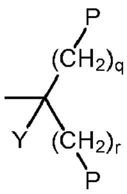,

preferably a group

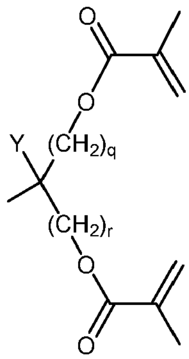, or 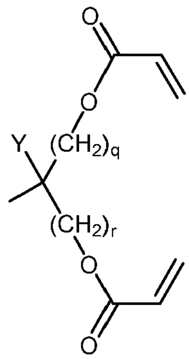

Y denotes H, F, phenyl or optionally fluorinated alkyl having 1-12 C atoms, preferably H, methyl, ethyl, propyl, butyl, more preferably H or methyl, in particular H,

q and r denote each and independently an integer from 0 to 8, preferably q+r ≥ 1 and ≤ 16, more preferably q and r each and independently denotes an integer from 1 to 8.

Particularly preferred groups P are selected from the group consisting of $CH_2=CW^1-CO-O-$, in particular $CH_2=CH-CO-O-$, $CH_2=C(CH_3)-CO-O-$ and $CH_2=CF-CO-O-$, furthermore $CH_2=CH-O-$, $(CH_2=CH)_2CH-O-CO-(CH_2=CH)_2CH-O-$,

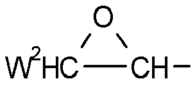 and 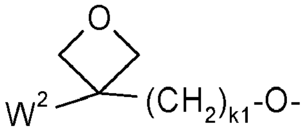

or a group

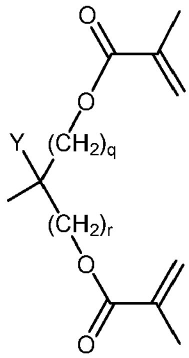 , or 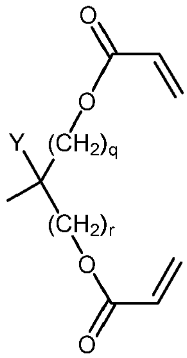

Y denotes H or methyl, in particular H,

q and r denote each and independently an integer from 0 to 8, preferably $q+r \geq 1$ and $\leq 16$, more preferably q and r each and independently denotes an integer from 1 to 8.

Very particularly preferred groups P are selected from the group consisting of acrylate, methacrylate, fluoroacrylate, furthermore vinyloxy, chloroacrylate, oxetane, epoxide groups and a group,

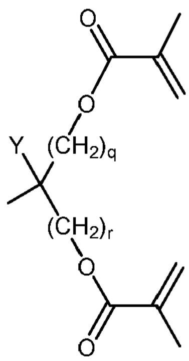 , or 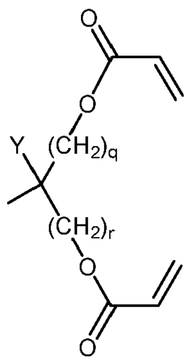

Y denotes H or methyl, in particular H, and of these preferably an acrylate or methacrylate group or a group,

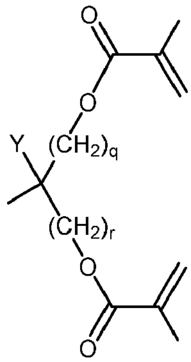

or

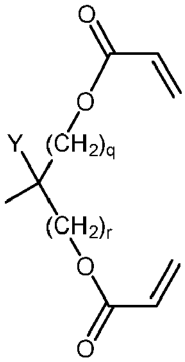

wherein Y denotes H or methyl, and q and r each and independently denotes an integer from 1 to 8.

The compounds of formula I are preferably selected from compounds of the following sub-formulae,

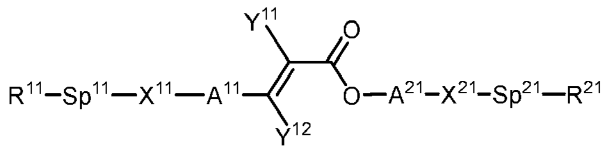

I-1

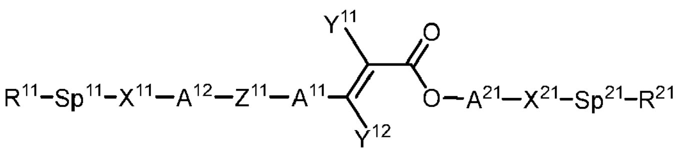

I-2

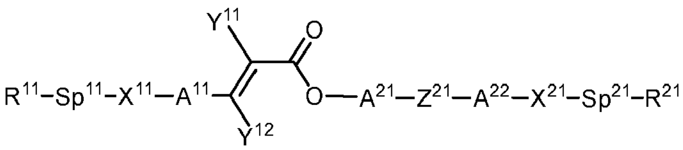

I-3

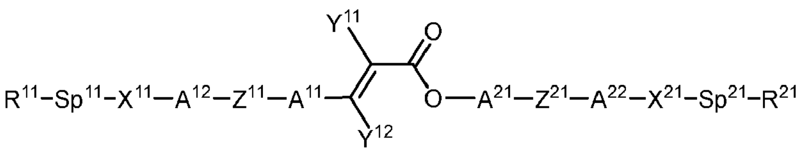

I-4

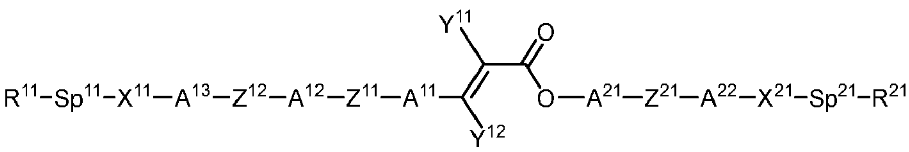

I-5

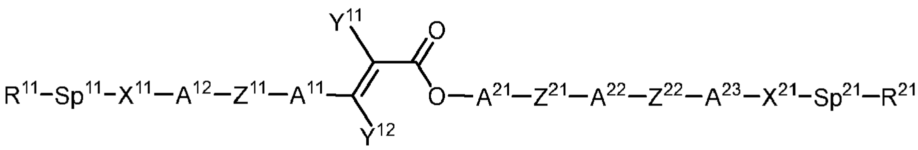

I-6

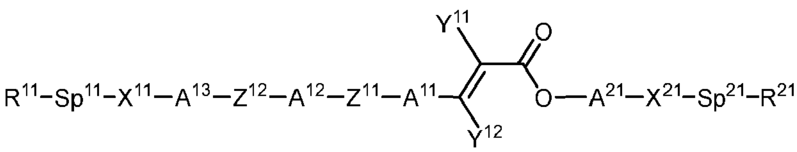

I-7

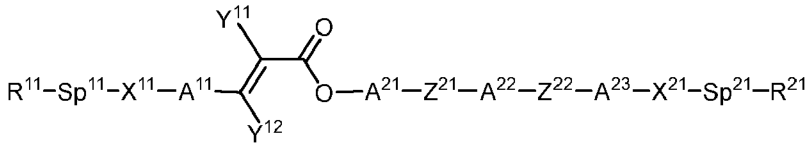

I-8

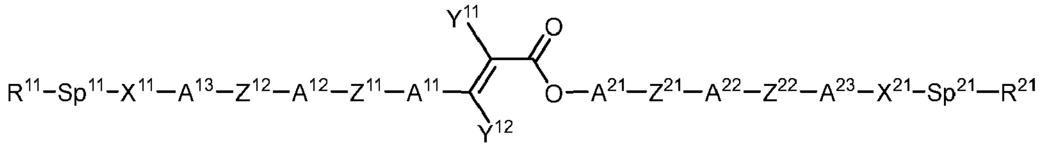

I-9

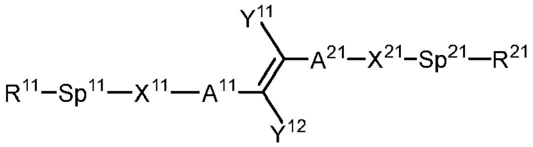

I-10

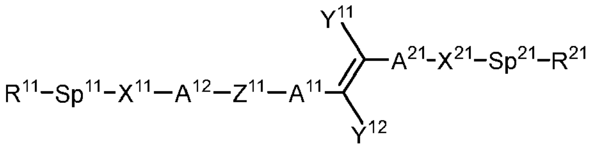

I-11

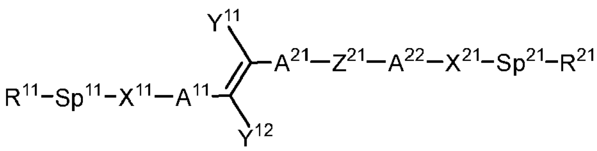

I-12

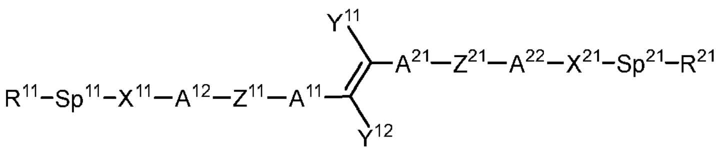

I-13

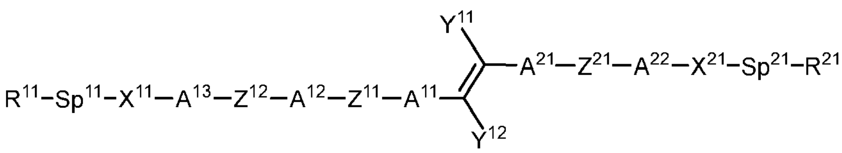

I-14

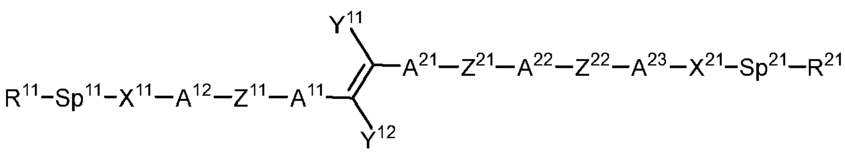

I-15

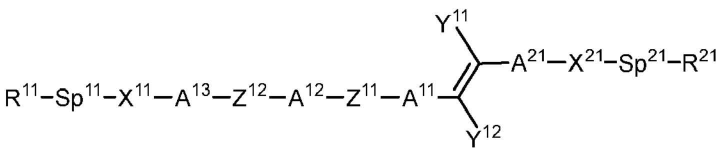

I-16

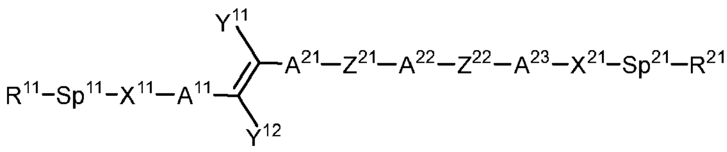

I-17

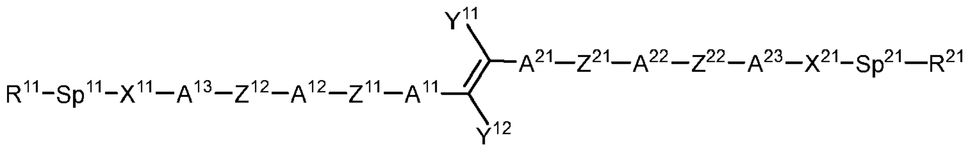

I-18

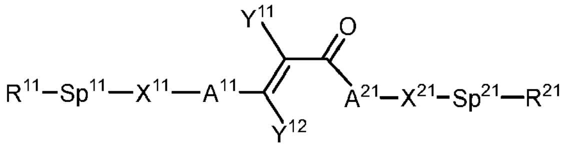

I-19

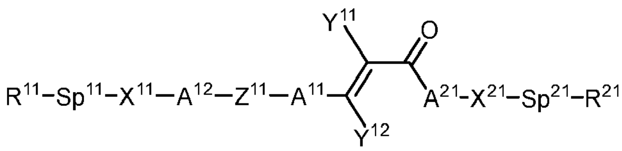

I-20

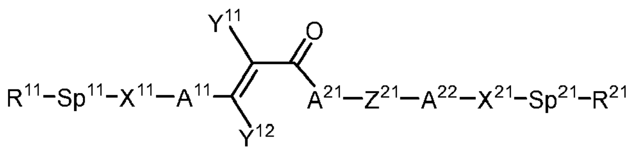

I-21

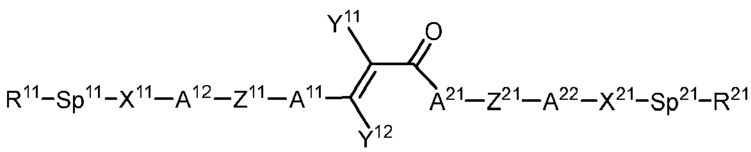

I-22

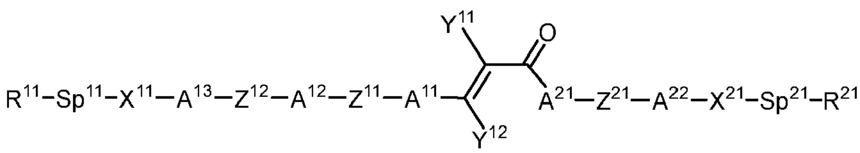

I-23

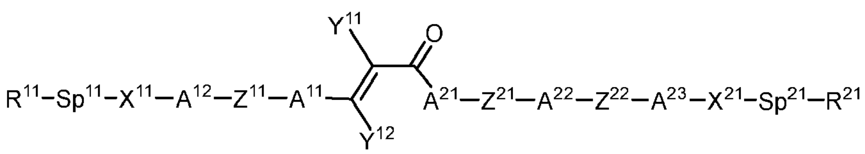

I-24

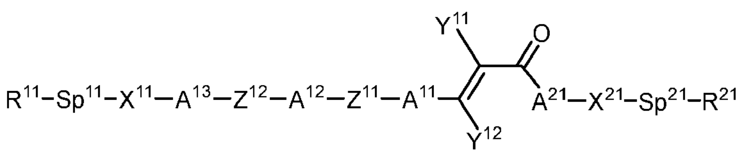

I-25

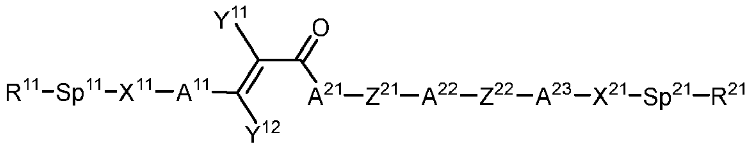

I-26

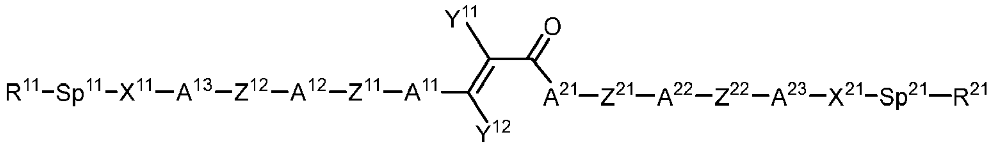

I-27

wherein $R^{11}$, $R^{21}$, $A^{11}$, $X^{11}$, $X^{21}$, $Y^{11}$, $Y^{12}$, $Sp^{11}$, and $Sp^{21}$ have one of the meanings as given above in formula I, $A^{12}$ to $A^{23}$ have one of the meanings for A in formula I, $A^{11}$ has one of the meanings as given above under formula I, and $Z^{11}$ to $Z^{22}$ have one of the meanings for Z as given above under formula I.

$A^{11}$ denotes preferably denotes 1,4-phenylene and 1,3-phenylene, wherein, in addition, one or two CH groups are optionally replaced by N and wherein, in addition, one or more H atoms are optionally replaced by L, as given above under formula I.

$A^{12}$ to $A^{23}$ have each and independently one of the meanings for A in formula I and preferably denotes 1,4-phenylene and 1,3-phenylene, wherein, in addition, one or two CH groups are optionally replaced by N and wherein, in addition, one or more H atoms are optionally replaced by L, as given above under formula I.

L for the parameter $A^{11}$ to $A^{23}$ preferably denotes on each occurrence, identically or differently -OH, -F, -Cl, -Br, -I, -CN, $-NO_2$, $SF_5$, -NCO, -NCS, - OCN, -SCN, $-C(=O)N(R^z)_2$, $-C(=O)R^z$, $-N(R^z)_2$, or straight-chain or branched or cyclic alkyl, alkoxy, alkylcarbonyl, alkoxycarbonyl, alkylcarbonyloxy or alkoxycarbonyloxy having 1 to 25 C atoms, more preferably -OH, -F, -CN, -NCS, -OCN, -SCN, or straight-chain or branched or cyclic alkyl, alkoxy, alkylcarbonyl, alkoxycarbonyl, alkylcarbonyloxy or alkoxycarbonyloxy having 1 to 12 C atoms.

More preferably $A^{11}$ to $A^{23}$ preferably denotes on each occurrence, identically or differently the group

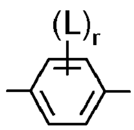

which is each and independently

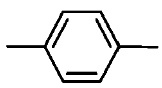

or

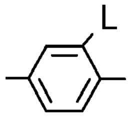

,

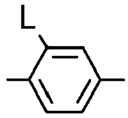

or

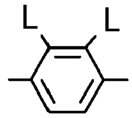

,

furthermore

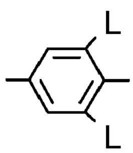

,

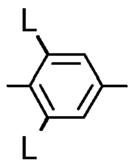, 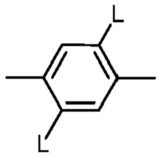, or 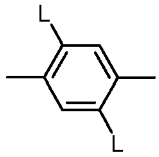,

wherein L is preferably F, Cl, $CH_3$, $OCH_3$ and $COCH_3$ or alkylene or alkoxylene having 1 to 6 C Atoms.

$Y^{11}$ and $Y^{12}$ preferably denotes each, independently of one another, H, or F, more preferably H.

$Z^{11}$ to $Z^{22}$ preferably denotes, independently of each other, in each occurrence, a single bond, -COO-, -OCO-, -O-CO-O-, $-OCH_2-$, $-CH_2O-$, $-OCF_2-$, $-CF_2O-$, $-(CH_2)_n-$, $-CF_2CF_2-$, -CH=CH-, -CF=CF-, -CH=CH-COO-, -OCO-CH=CH-, or -C≡C-, more preferably -COO-, -OCO-, -O-CO-O-, $-OCF_2-$, $-CF_2O-$, $-CF_2CF_2-$. $X^{11}$ and $X^{21}$ denote independently from one another, in each occurrence a single bond, -CO-O-, -O-CO-, -O-COO-, -O-, -CH=CH-, -C=C-, $-CF_2-O-$, $-O-CF_2-$, $-CF_2-CF_2-$, $-CH_2-O-$, $-O-CH_2-$, -CO-S-, -S-CO-, -CS-S-, -S-CS-, -S-CSS- or -S-, more preferably -CO-O-, -O-CO-, -O-, in particular O.

$Sp^{11}$ and $Sp^{21}$ denote each and independently, in each occurrence a single bond or a spacer group comprising 1 to 12 C atoms, wherein one or more non-adjacent and non-terminal $CH_2$ groups are optionally replaced by -O-, -S-, -NH-, $-N(CH_3)-$, -CO-, -O-CO-, -S-CO-, -O-COO-, -CO-S-, -CO-O-, $-CF_2-$, $-CF_2O-$, $-OCF_2-$ -CH(OH)-, -CH(alkyl)-, -CH(alkenyl)-, -CH(alkoxyl)-, -CH(oxaalkyl)-, -CH=CH- or -C≡C-, however in such a way that no two O-atoms are adjacent to one another and no two groups selected from -O-CO-, -S-CO-, -O-COO-, -CO-S-, -CO-O- and -CH=CH- are adjacent to each other, preferably straight chain alkyl comprising 1 to 20 C atoms.

$R^{21}$ preferably denotes P.

The compounds of formula I and subformulae thereof are preferably synthesised according to or in analogy to the procedures described in WO 2017/102068 and JP 2006-6232809:
The medium preferably comprises from 0.01 to 10%, particularly preferably from 0.05 to 5% and most preferably from 0.1 to 3% of compounds of formula I.

The medium preferably comprises one, two or three, more preferably one or two and most preferably one compound of the formula I according to the invention.

The utilized LC medium contains one or more nematogenic compounds with negative dielectric anisotropy. Preferred embodiments of such an LC medium are those of sections a)-z) below:

a) LC medium which comprises one or more compounds of the formulae CY and/or PY:

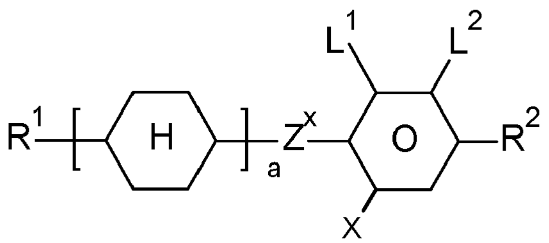

CY

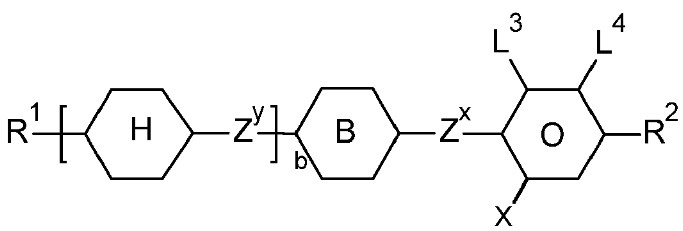

PY

wherein

a denotes 1 or 2,

b denotes 0 or 1,

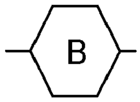

denotes

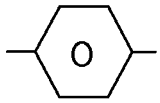 or 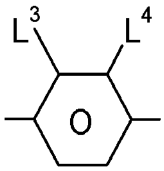

$R^1$ and $R^2$ each, independently of one another, denote alkyl having 1 to 12 C atoms, where, in addition, one or two non-adjacent $CH_2$ groups may be replaced by -O-, -CH=CH-, -CO-, -OCO- or -COO- in such a way that O atoms are not linked directly to one another one or more $CH_2$-groups may be replaced by

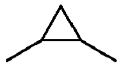, 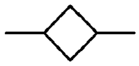,

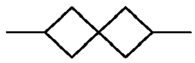, 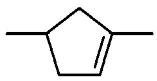 or 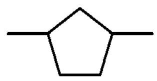,

and one or more H atoms may be replaced by F or Cl, preferably alkyl or alkoxy having 1 to 6 C atoms,
$Z^x$ and $Z^y$ each, independently of one another, denote $-CH_2CH_2-$, -CH=CH-, $-CF_2O-$, $-OCF_2-$, $-CH_2O-$, $-OC H_2-$, -CO-O-, -O-CO-, $-C_2F_4-$, -CF=CF-, $-CH=CH-CH_2O-$ or a single bond, preferably a single bond,
X denotes H or $CH_3$,
$L^{1-4}$ each, independently of one another, denote F, Cl, $OCF_3$, $CF_3$, $CH_3$, $CH_2F$, $CHF_2$.

Preferably, both $L^1$ and $L^2$ denote F or one of $L^1$ and $L^2$ denotes F and the other denotes Cl, or both $L^3$ and $L^4$ denote F or one of $L^3$ and $L^4$ denotes F and the other denotes Cl.

The compounds of the formula CY are preferably selected from the group consisting of the following sub-formulae:

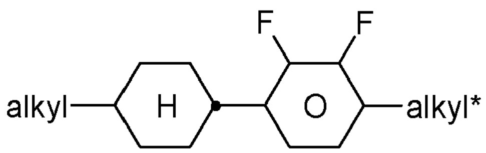

CY1

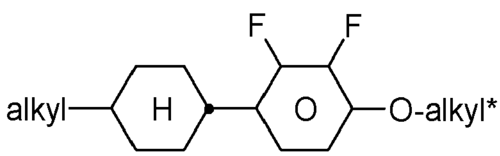

CY2

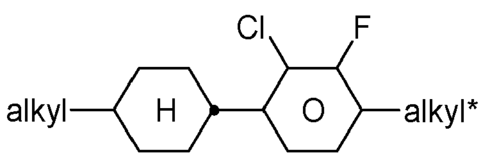

CY3

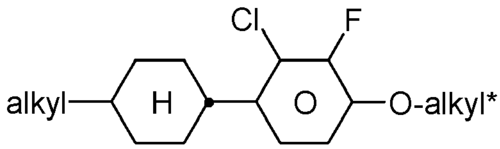

CY4

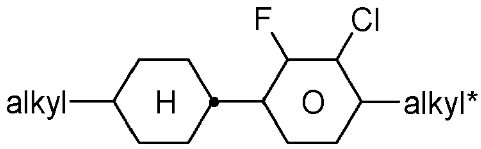

CY5

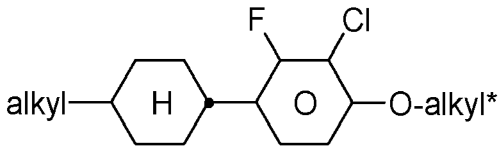

CY6

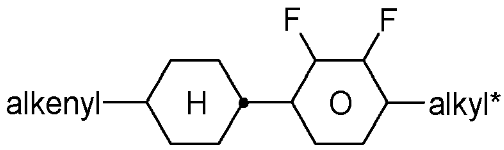

CY7

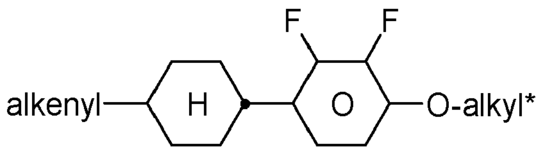

CY8

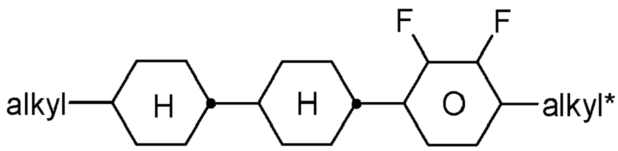

CY9

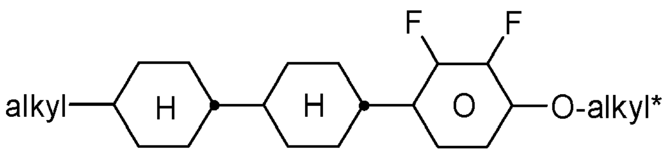

CY10

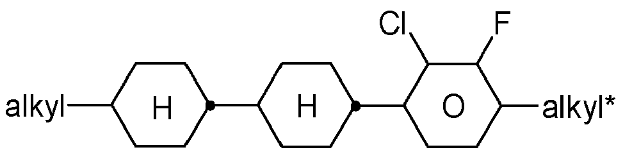

CY11

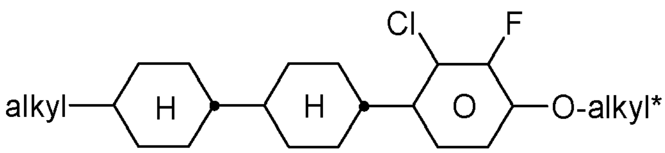

CY12

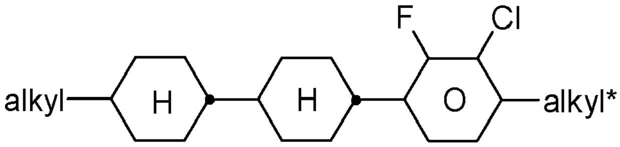

CY13

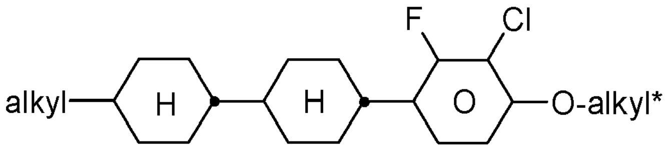

CY14

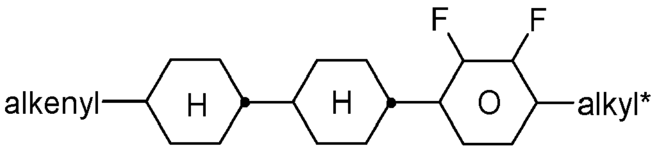

CY15

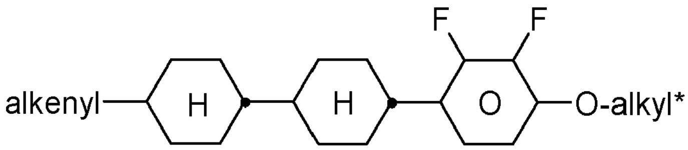

CY16

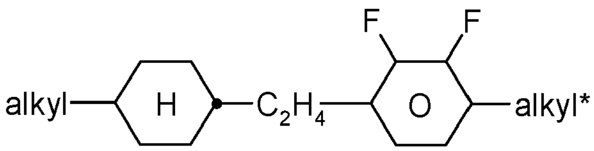

CY17

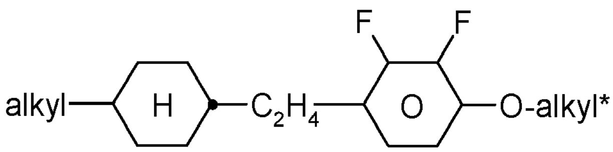

CY18

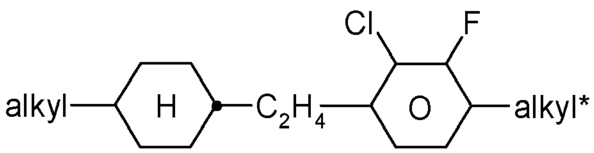

CY19

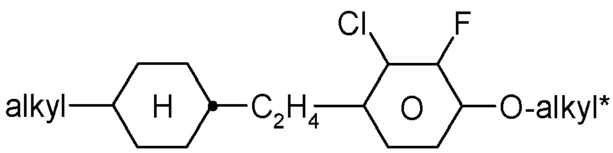

CY20

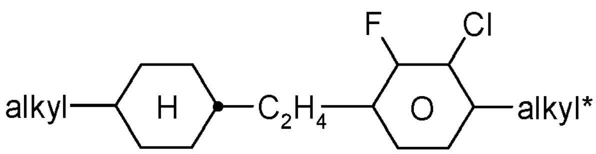

CY21

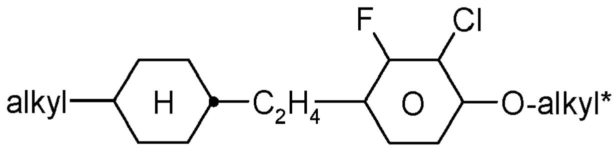
CY22

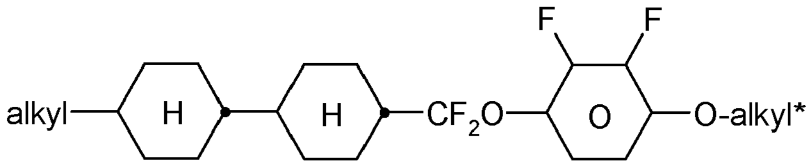
CY23

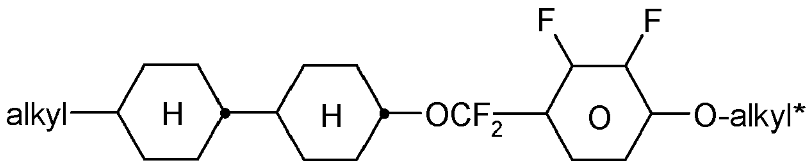
CY24

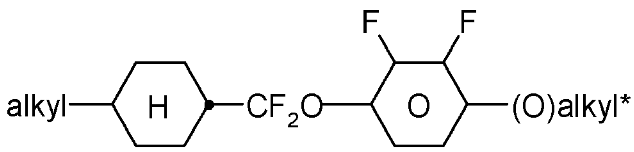
CY25

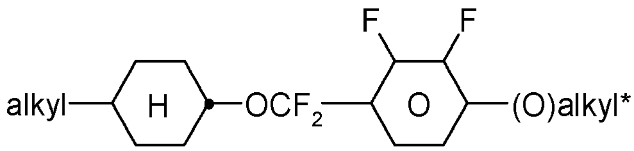
CY26

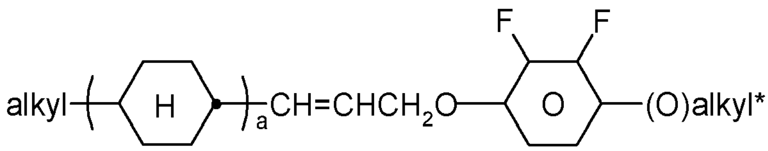
CY27

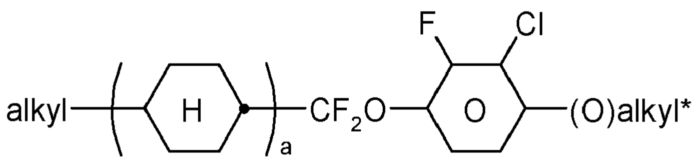
CY28

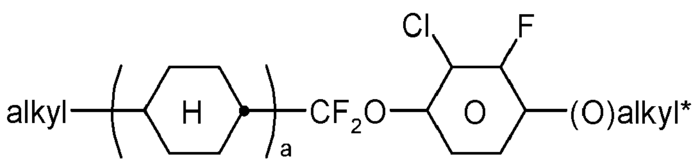
CY29

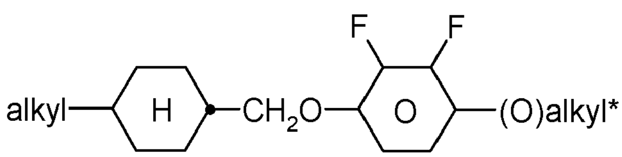
CY30

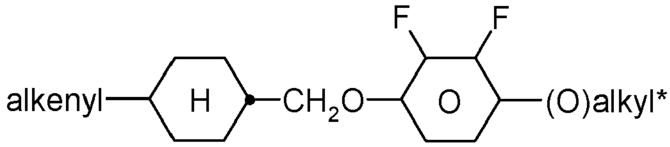

CY31

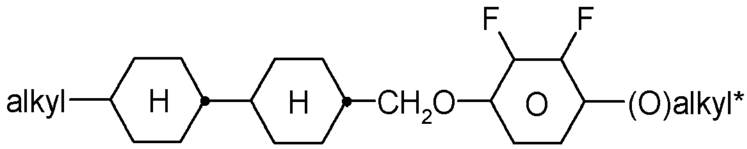

CY32

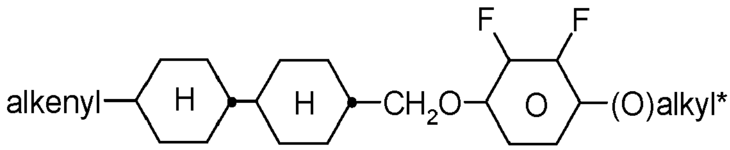

CY33

wherein a denotes 1 or 2, alkyl and alkyl* each, independently of one another, denote a straight-chain alkyl radical having 1-6 C atoms, and alkenyl denotes a straight-chain alkenyl radical having 2-6 C atoms, and (O) denotes an oxygen atom or a single bond. Alkenyl preferably denotes $CH_2=CH-$, $CH_2=CHCH_2CH_2-$, $CH_3-CH=CH-$, $CH_3-CH_2-CH=CH-$, $CH_3-(CH_2)_2-CH=CH-$, $CH_3-(CH_2)_3-CH=CH-$ or $CH_3-CH=CH-(CH2)2-$.

The compounds of the formula PY are preferably selected from the group consisting of the following sub-formulae:

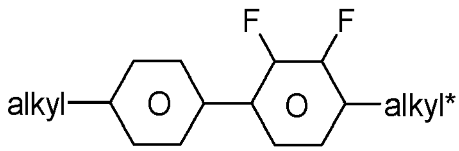

PY1

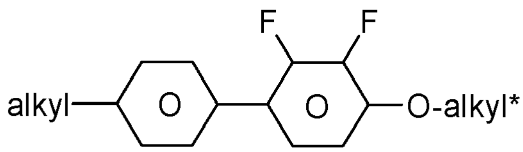

PY2

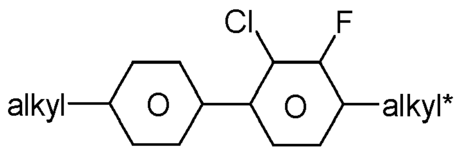

PY3

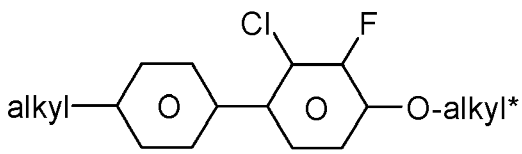

PY4

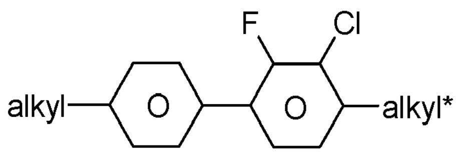

PY5

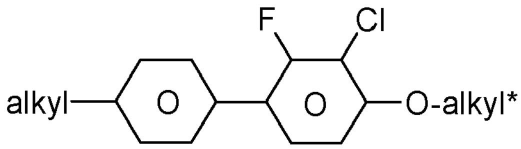

PY6

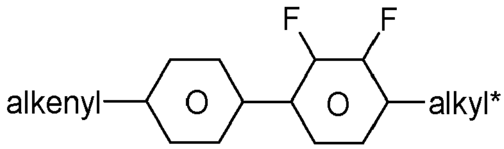

PY7

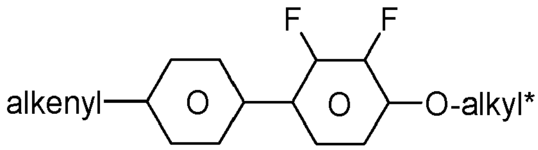

PY8

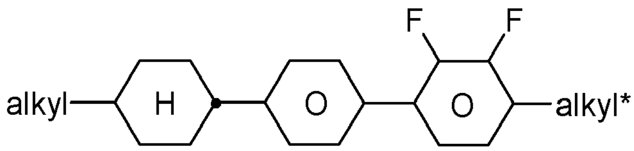

PY9

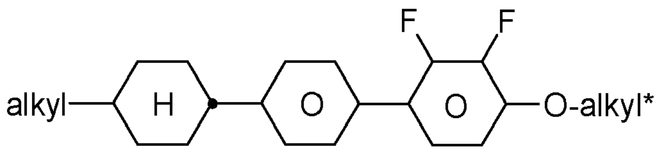

PY10

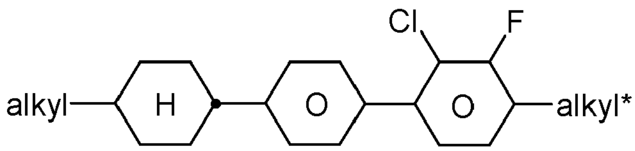

PY11

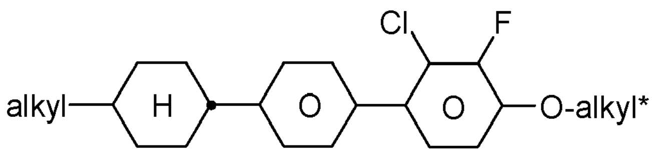

PY12

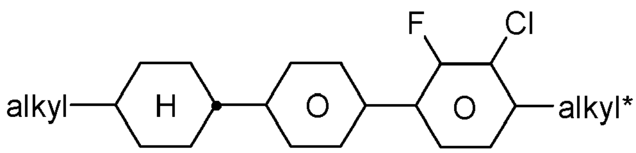

PY13

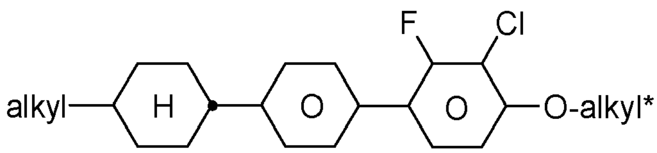

PY14

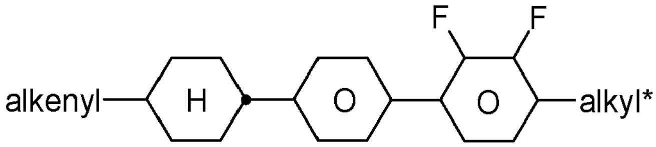

PY15

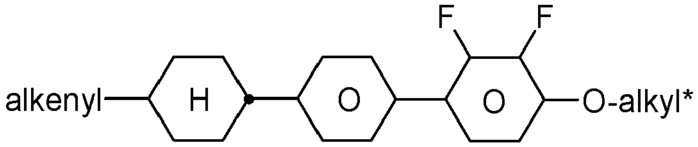

PY16

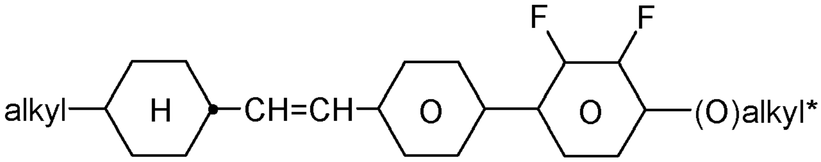

PY17

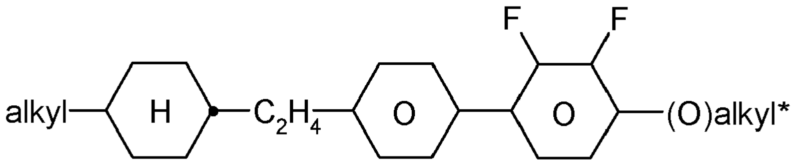

PY18

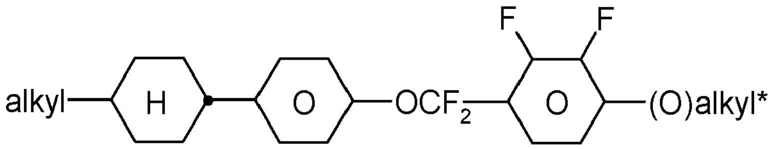

PY19

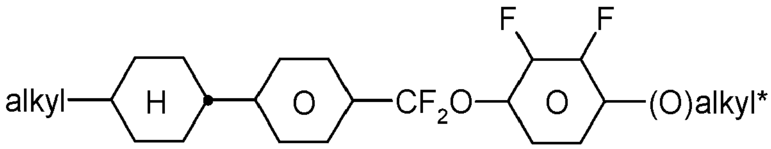

PY20

wherein alkyl and alkyl* each, independently of one another, denote a straight-chain alkyl radical having 1-6 C atoms, and alkenyl denotes a straight-chain alkenyl radical having 2-6 C atoms, and (O) denotes an oxygen atom or a single bond. Alkenyl preferably denotes $CH_2=CH-$, $CH_2=CHCH_2CH_2-$, $CH_3-CH=CH-$, $CH_3-CH_2-CH=CH-$, $CH_3-(CH_2)_2-CH=CH-$, $CH_3-(CH_2)_3-CH=CH-$ or $CH_3-CH=CH-(CH_2)_2-$.

b) LC medium which additionally comprises one or more compounds of the following formula:

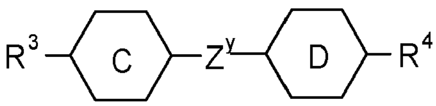

ZK

in which the individual radicals have the following meanings:

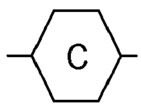

denotes

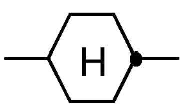 , 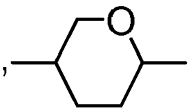 , 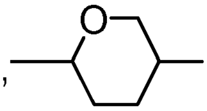 ,

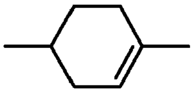 or 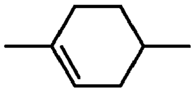 ,

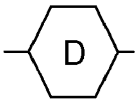

denotes

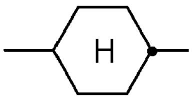 or 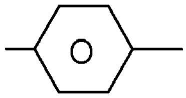 ,

R3 and R4 each, independently of one another, denote alkyl having 1 to 12 C atoms, in which, in addition, one or two non-adjacent $CH_2$ groups may be replaced by -O-, -CH=CH-, -CO-, -O-CO- or -CO-O- in such a way that O atoms are not linked directly to one another, and one or more $CH_2$-groups may be replaced by

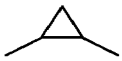 ,

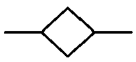 , 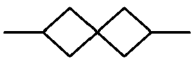 , 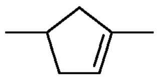 or 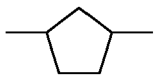 ,

$Z^y$ denotes $-CH_2CH_2-$, -CH=CH-, $-CF_2O-$, $-OCF_2-$, $-CH_2O-$,$-OCH_2-$, -CO-O-, -O-CO-, $-C_2F_4-$, -CF=CF-, $-CH=CH-CH_2O-$ or a single bond, preferably a single bond.

The compounds of the formula ZK are preferably selected from the group consisting of the following sub-formulae:

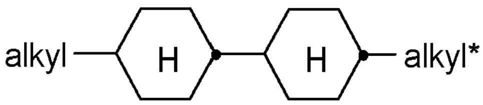 ZK1

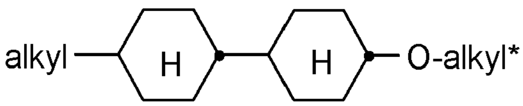 ZK2

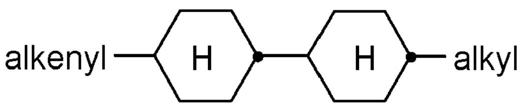 ZK3

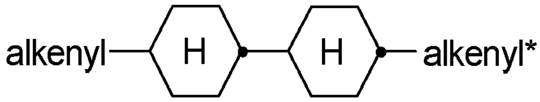

ZK4

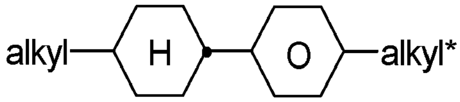

ZK5

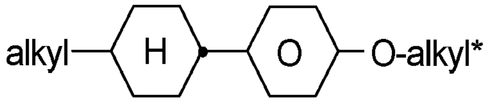

ZK6

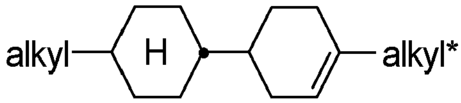

ZK7

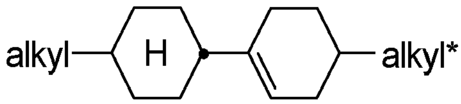

ZK8

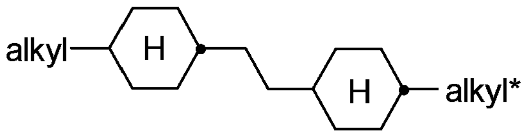

ZK9

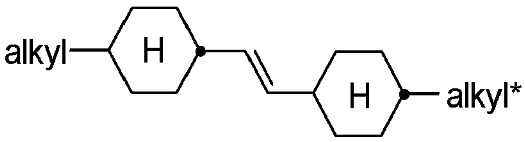

ZK10

in which alkyl and alkyl* each, independently of one another, denote a straight-chain alkyl radical having 1-6 C atoms, and alkenyl denotes a straight-chain alkenyl radical having 2-6 C atoms. Alkenyl preferably denotes CH2=CH-, CH2=CHCH2CH2-, CH3-CH=CH-, CH3-CH2-CH=CH-, CH3-(CH2)2-CH=CH-, CH3-(CH2)3-CH=CH- or CH3-CH=CH-(CH2)2-.

Especially preferred are compounds of formula ZK1 and ZK3.

Particularly preferred compounds of formula ZK are selected from the following sub-formulae:

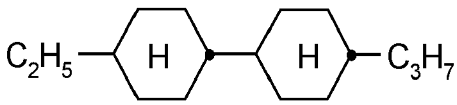

ZK1a

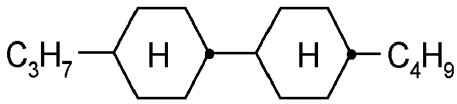

ZK1b

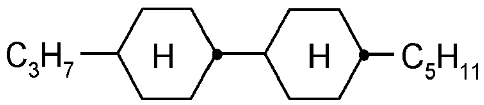

ZK1c

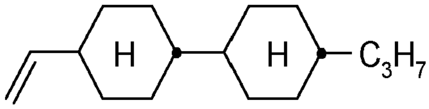

ZK3a

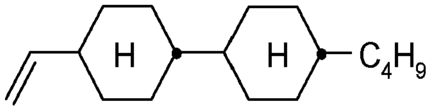

ZK3b

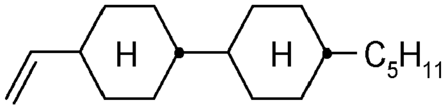

ZK3c

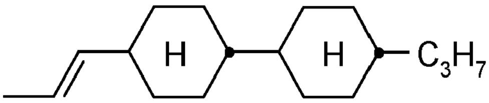

ZK3d

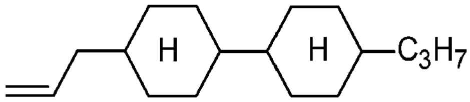

ZK3e

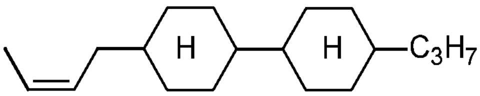

ZK3f

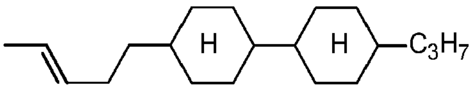

ZK3g

wherein the propyl, butyl and pentyl groups are straight-chain groups.

Most preferred are compounds of formula ZK1a and ZK3a.

c) LC medium which additionally comprises one or more compounds of the following formula:

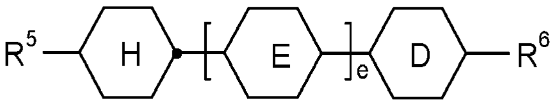

DK

in which the individual radicals on each occurrence, identically or differently, have the following meanings:

$R^5$ and $R^6$ each, independently of one another, denote alkyl having 1 to 12 C atoms, where, in addition, one or two non-adjacent $CH_2$ groups may be replaced by -O-, -CH=CH-, -CO-, -OCO- or -COO- in such a way that O atoms are not linked directly to one another and one or more $CH_2$-groups may be replaced by

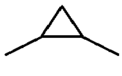

,

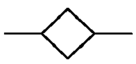

,

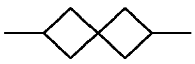

,

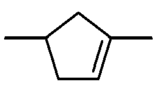

or

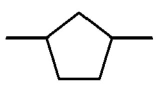

,

preferably alkyl or alkoxy having 1 to 6 C atoms,

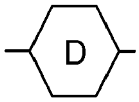

denotes

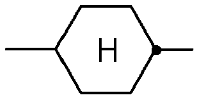 or 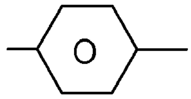 ,

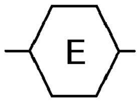

denotes

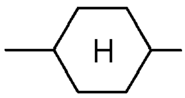 , 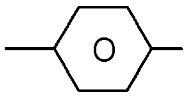 or 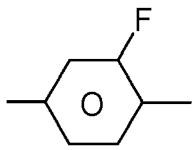 ,

and

e denotes 1 or 2.

The compounds of the formula DK are preferably selected from the group consisting of the following sub-formulae:

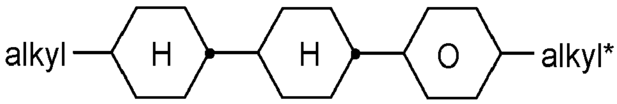 DK1

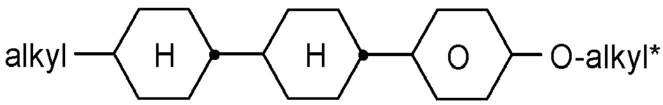 DK2

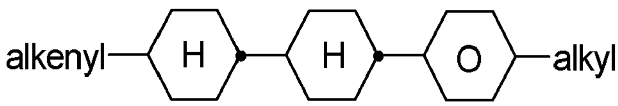 DK3

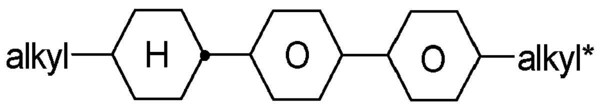 DK4

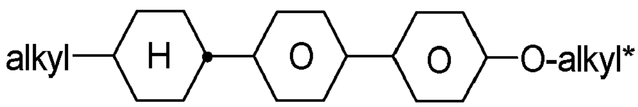 DK5

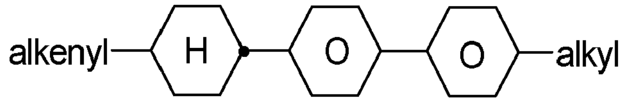

DK6

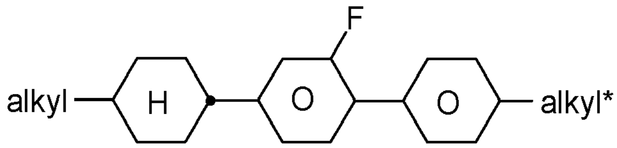

DK7

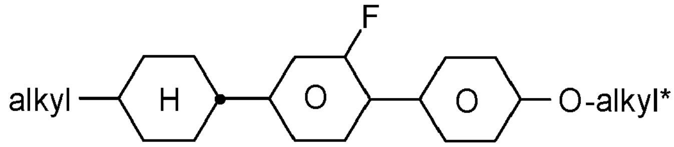

DK8

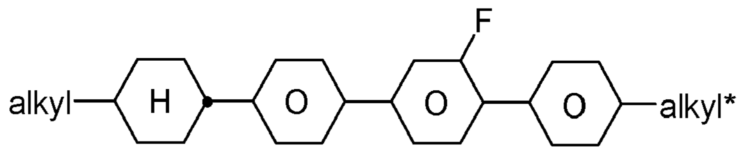

DK9

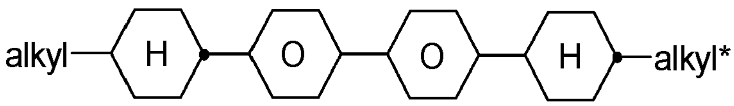

DK10

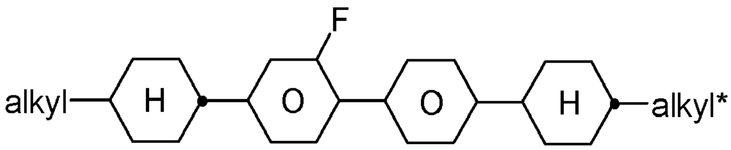

DK11

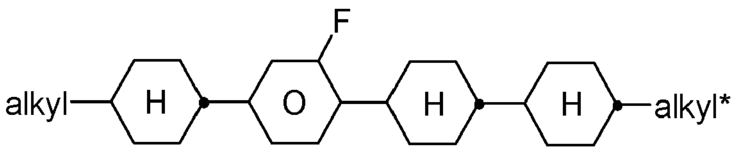

DK12

in which alkyl and alkyl* each, independently of one another, denote a straight-chain alkyl radical having 1-6 C atoms, and alkenyl denotes a straight-chain alkenyl radical having 2-6 C atoms. Alkenyl preferably denotes $CH_2$=CH-, $CH_2$=$CHCH_2CH_2$-, $CH_3$-CH=CH-, $CH_3$-$CH_2$-CH=CH-, $CH_3$-$(CH_2)_2$-CH=CH-, $CH_3$-$(CH_2)_3$-CH=CH- or $CH_3$-CH=CH-$(CH_2)_2$-.

d) LC medium which additionally comprises one or more compounds of the following formula:

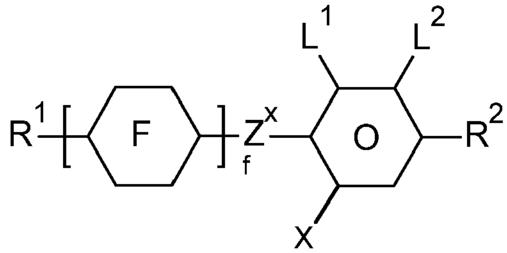

LY

in which the individual radicals have the following meanings:

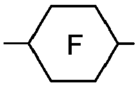

denotes

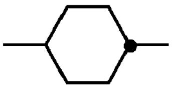, 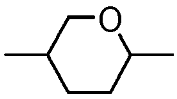, 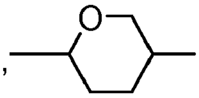,

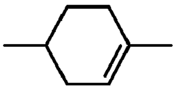 or 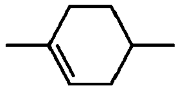

with at least one ring F being different from cyclohexylene,

f denotes 1 or 2,

$R^1$ and $R^2$ each, independently of one another, denote alkyl having 1 to 12 C atoms, where, in addition, one or two non-adjacent $CH_2$ groups may be replaced by -O-, -CH=CH-, -CO-, -OCO- or -COO- in such a way that O atoms are not linked directly to one another, and one or more $CH_2$-groups may be replaced by

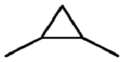,

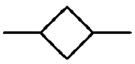, 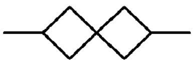, 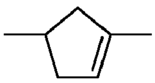 or 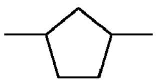,

$Z^x$ denotes $-CH_2CH_2-$, -CH=CH-, $-CF_2O-$, $-OCF_2-$, $-CH_2O-$,-O $CH_2-$, -CO-O-, -O-CO-, $-C_2F_4-$, -CF=CF-, $-CH=CH-CH_2O-$ or a single bond, preferably a single bond,

X denotes H or $CH_3$,

$L^1$ and $L^2$ each, independently of one another, denote F, Cl, $OCF_3$, $CF_3$, $CH_3$, $CH_2F$, $CHF_2$.

Preferably, both radicals $L^1$ and $L^2$ denote F or one of the radicals $L^1$ and $L^2$ denotes F and the other denotes Cl.

The compounds of the formula LY are preferably selected from the group consisting of the following sub-formulae:

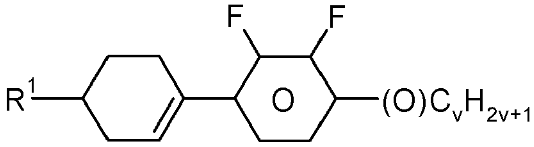

LY1

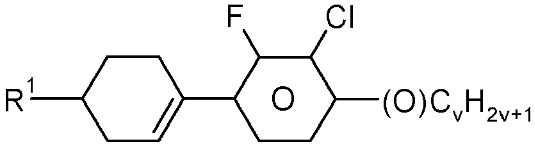

LY2

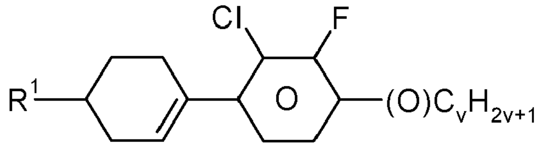

LY3

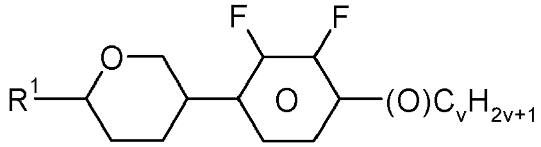

LY4

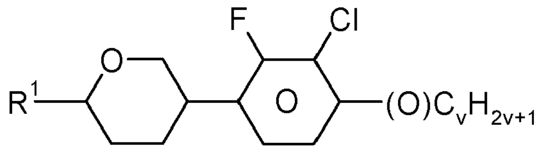

LY5

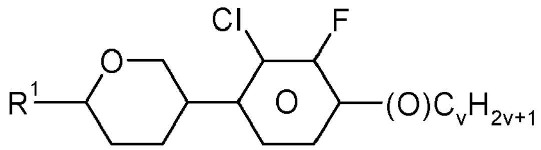

LY6

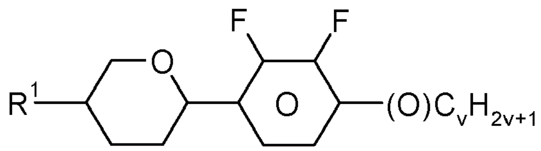

LY7

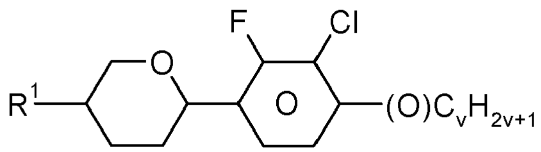

LY8

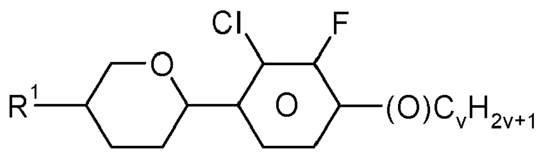

LY9

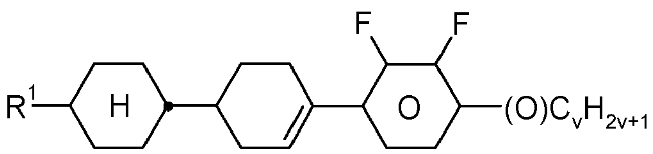

LY10

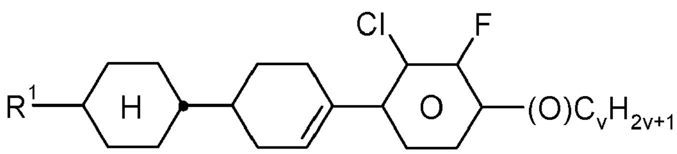

LY11

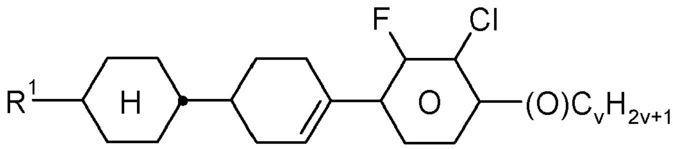

LY12

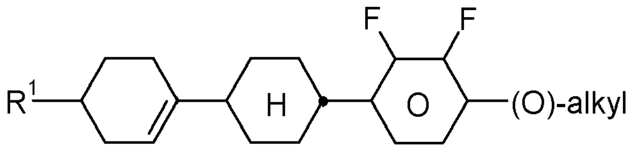

LY13

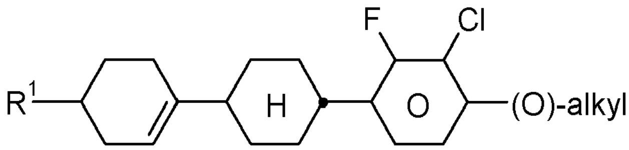

LY14

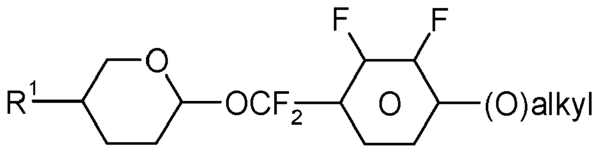

LY15

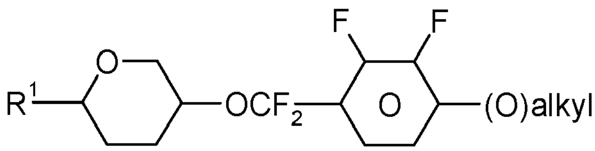

LY16

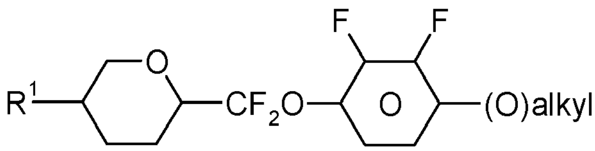

LY17

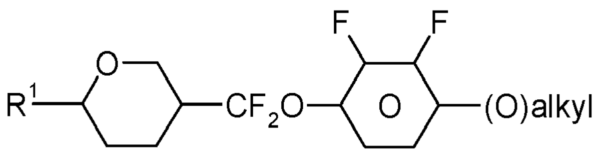

LY18

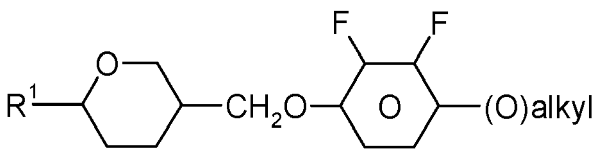

LY19

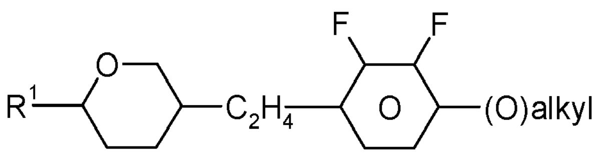

LY20

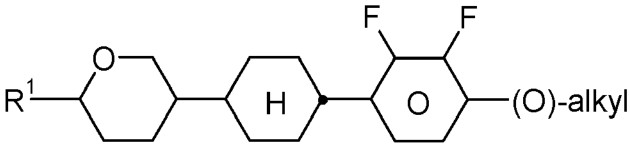

LY21

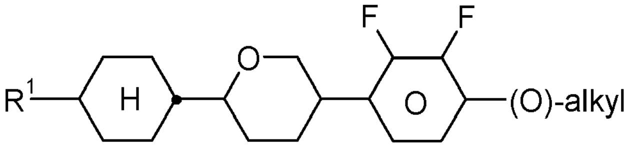

LY22

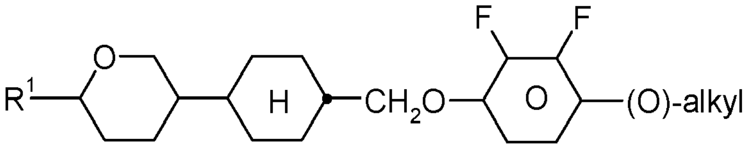

LY23

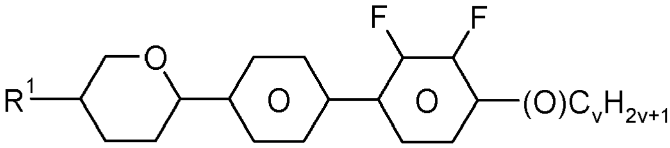

LY24

in which $R^1$ has the meaning indicated above, alkyl denotes a straight-chain alkyl radical having 1-6 C atoms, (O) denotes an oxygen atom or a single bond, and v denotes an integer from 1 to 6. $R^1$ preferably denotes straight-chain alkyl having 1 to 6 C atoms or straight-chain alkenyl having 2 to 6 C atoms, in particular $CH_3$, $C_2H_5$, n-$C_3H_7$, n-$C_4H_9$, n-$C_5H_{11}$, $CH_2$=CH-, $CH_2$=$CHCH_2CH_2$-, $CH_3$-CH=CH-, $CH_3$-$CH_2$-CH=CH-, $CH_3$-$(CH_2)_2$-CH=CH-, $CH_3$-$(CH_2)_3$-CH=CH- or $CH_3$-CH=CH-$(CH_2)_2$-.

e) LC medium which additionally comprises one or more compounds selected from the group consisting of the following formulae:

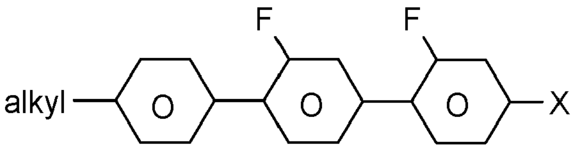

G1

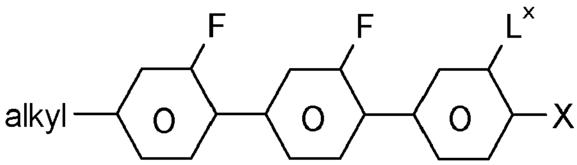

G2

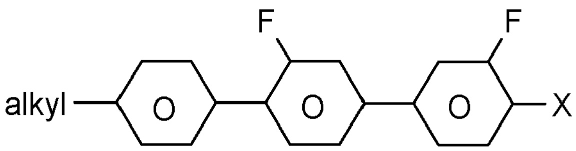

G3

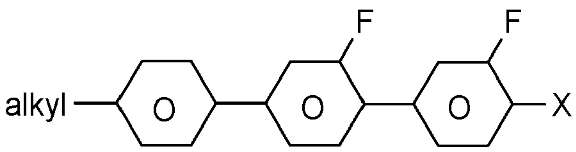

G4

in which alkyl denotes $C_{1-6}$-alkyl, $L^x$ denotes H or F, and X denotes F, Cl, $OCF_3$, $OCHF_2$ or OCH=$CF_2$. Particular

preference is given to compounds of the formula G1 in which X denotes F.

f) LC medium which additionally comprises one or more compounds selected from the group consisting of the following formulae:

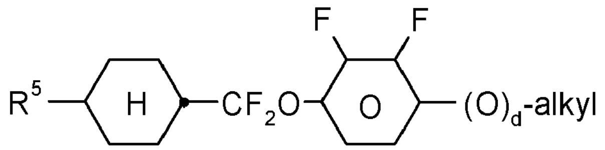

Y1

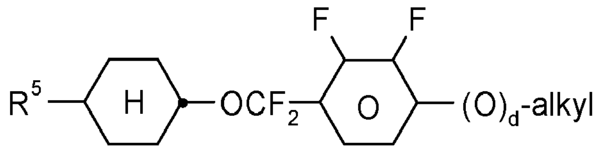

Y2

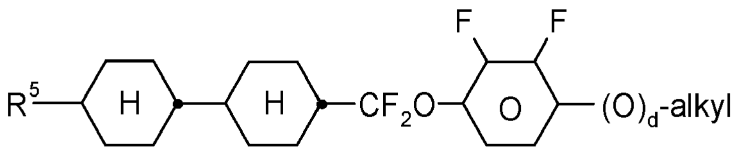

Y3

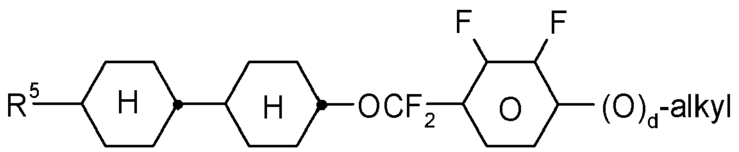

Y4

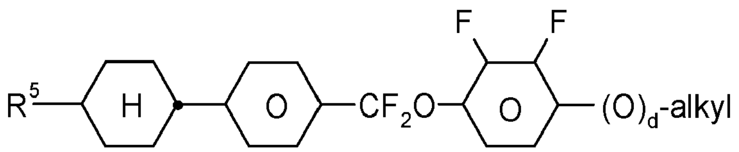

Y5

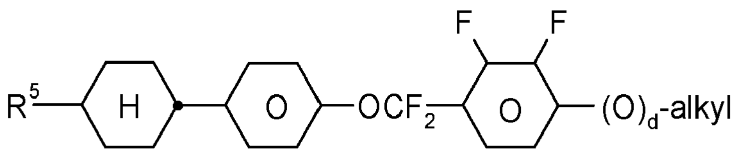

Y6

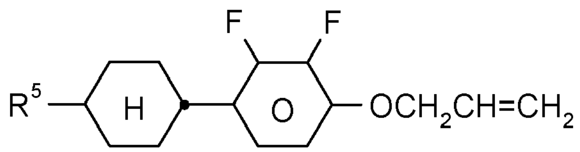

Y7

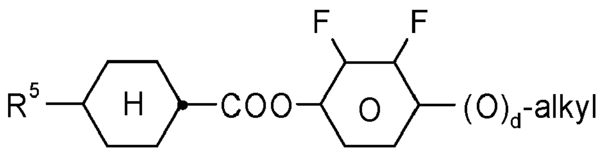

Y8

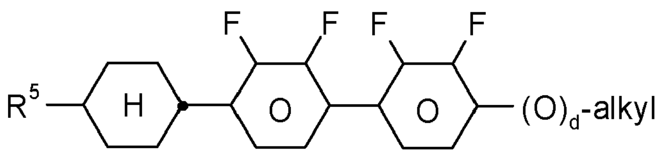

Y9

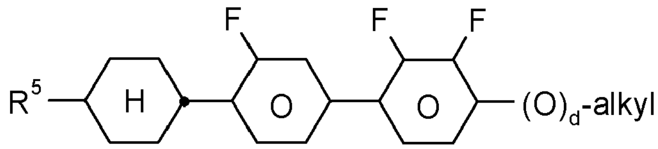

Y10

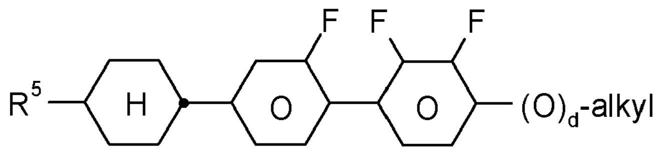

Y11

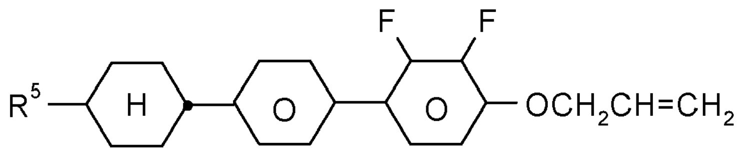

Y12

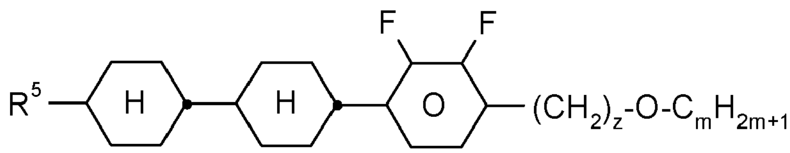

Y13

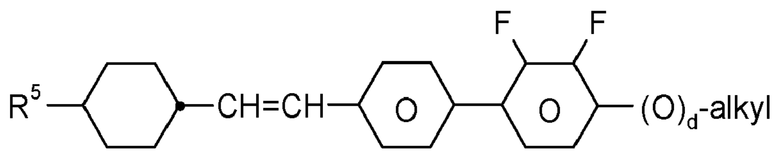

Y14

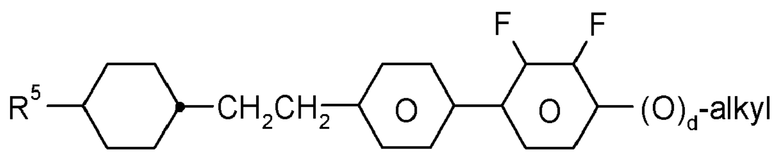

Y15

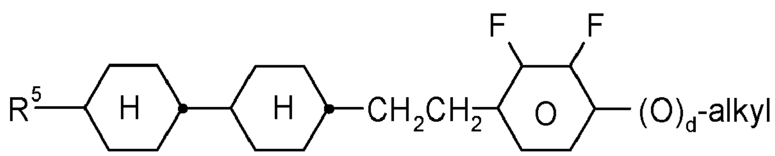

Y16

in which $R^5$ has one of the meanings indicated above for $R^1$, alkyl denotes $C_{1-6}$-alkyl, d denotes 0 or 1, and z and m each, independently of one another, denote an integer from 1 to 6. $R^5$ in these compounds is particularly preferably $C_{1-6}$-alkyl or -alkoxy or $C_{2-6}$-alkenyl, d is preferably 1. The LC medium according to the invention preferably comprises one or more compounds of the above-mentioned formulae in amounts of ≥ 5% by weight.

g) LC medium which additionally comprises one or more biphenyl compounds selected from the group consisting of the following formulae:

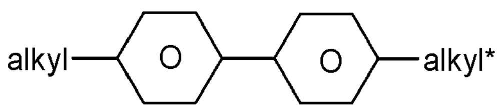

B1

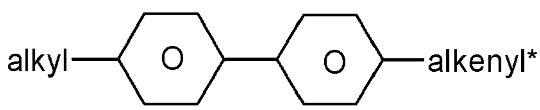

B2

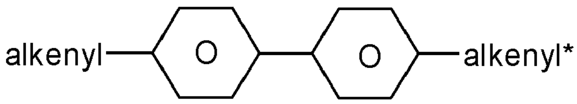

B3

in which alkyl and alkyl* each, independently of one another, denote a straight-chain alkyl radical having 1-6 C atoms, and alkenyl and alkenyl* each, independently of one another, denote a straight-chain alkenyl radical having 2-6 C atoms. Alkenyl and alkenyl* preferably denote $CH_2$=CH-, $CH_2$=$CHCH_2CH_2$-, $CH_3$-CH=CH-, $CH_3$-$CH_2$-CH=CH-, $CH_3$-$(CH_2)_2$-CH=CH-, $CH_3$-$(CH_2)_3$-CH=CH- or $CH_3$-CH=CH-$(CH_2)_2$-.

The proportion of the biphenyls of the formulae B1 to B3 in the LC mixture is preferably at least 3% by weight, in particular ≥ 5% by weight.

The compounds of the formula B2 are particularly preferred.

The compounds of the formulae B1 to B3 are preferably selected from the group consisting of the following sub-formulae:

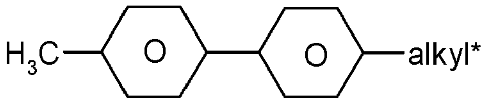

B1a

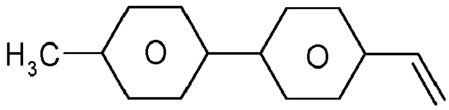

B2a

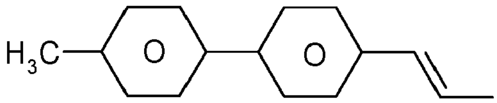

B2b

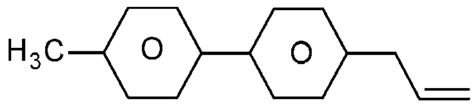

B2c

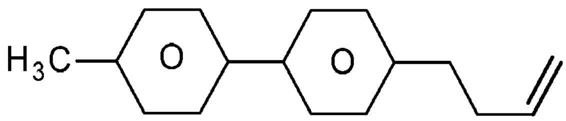

B2d

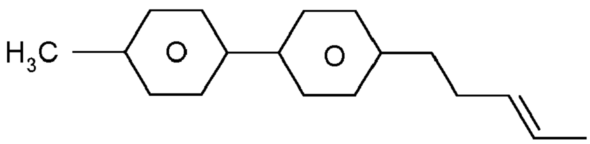

B2e

in which alkyl* denotes an alkyl radical having 1-6 C atoms. The medium according to the invention particularly preferably comprises one or more compounds of the formulae B1a and/or B2e.

h) LC medium which additionally comprises one or more terphenyl compounds of the following formula:

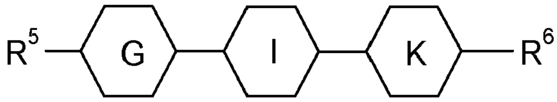

T

in which $R^5$ and $R^6$ each, independently of one another, have one of the meanings indicated above, and

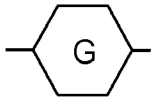 , 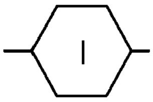 and 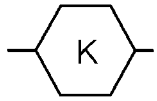

each, independently of one another, denote

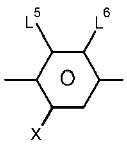 , 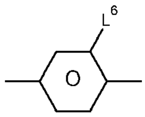 , 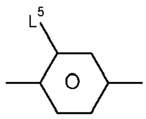 or 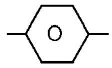

in which X denotes H or $CH_3$, $L^5$ denotes F or Cl, preferably F, and $L^6$ denotes F, Cl, $OCF_3$, $CF_3$, $CH_3$, $CH_2F$ or $CHF_2$, preferably F.

The compounds of the formula T are preferably selected from the group consisting of the following sub-formulae:

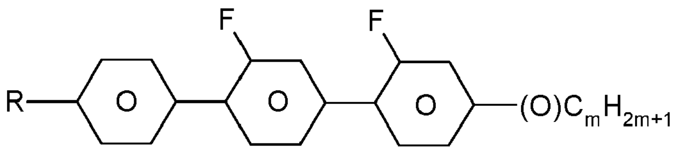 T1

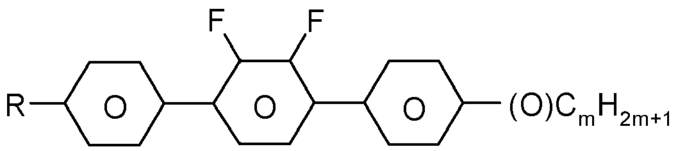 T2

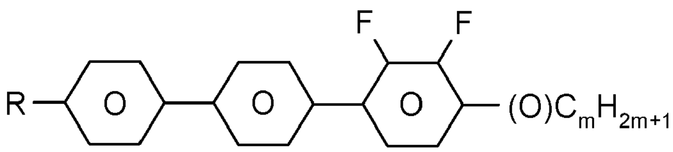 T3

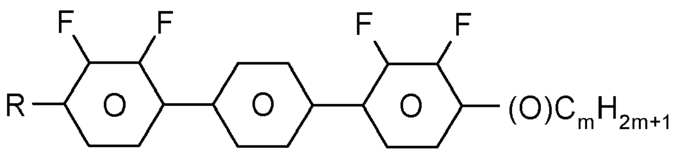 T4

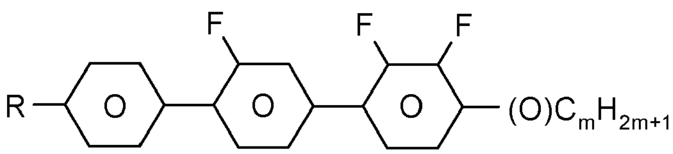 T5

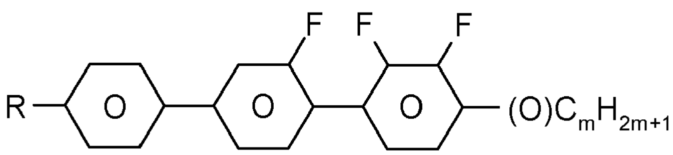 T6

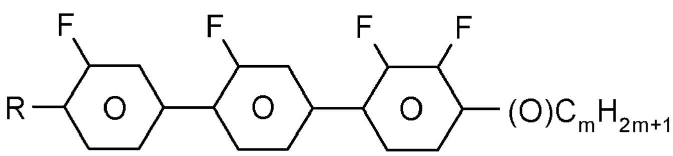 T7

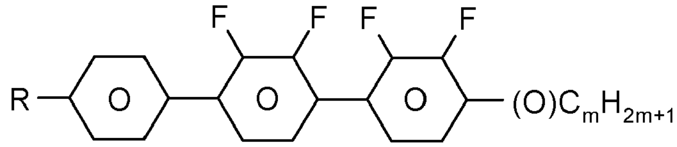

T8

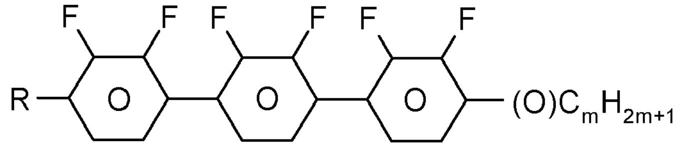

T9

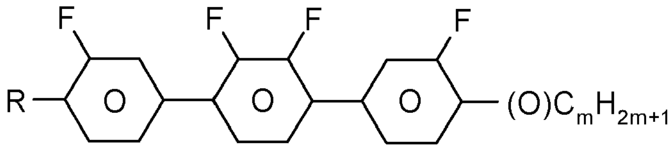

T10

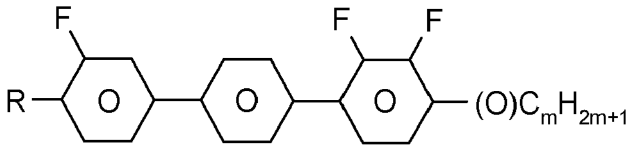

T11

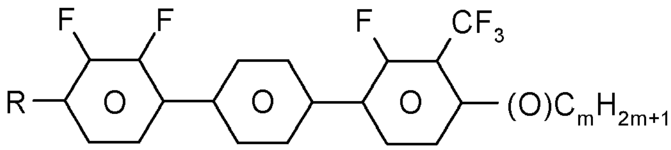

T12

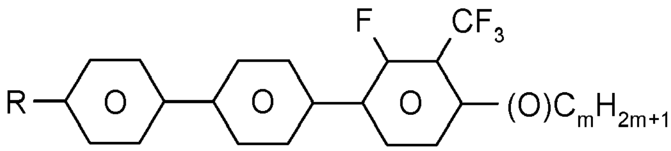

T13

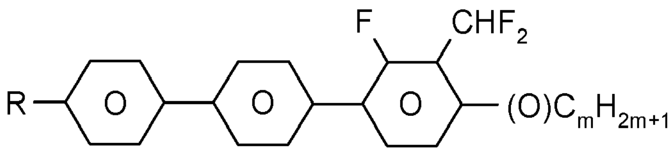

T14

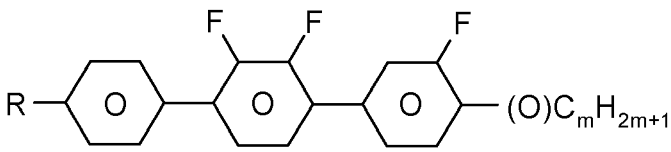

T15

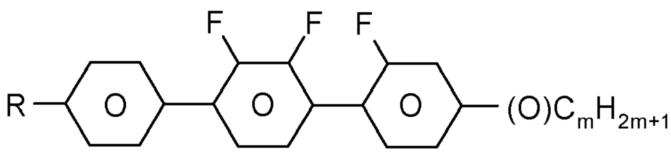

T16

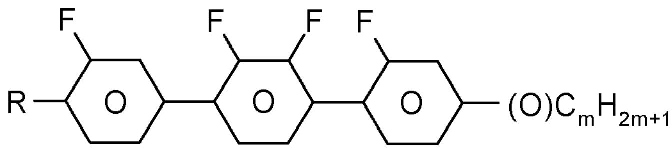

T17

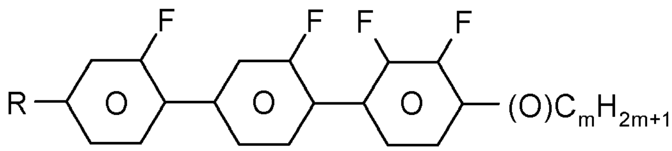

T18

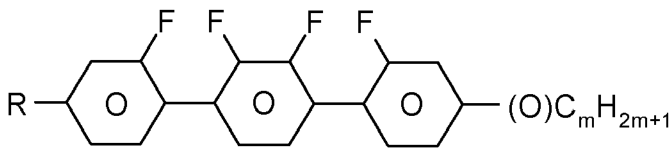

T19

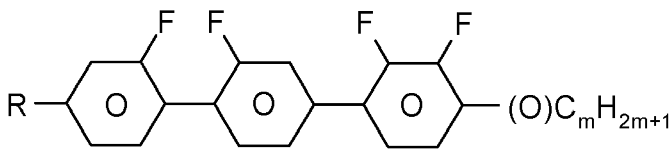

T20

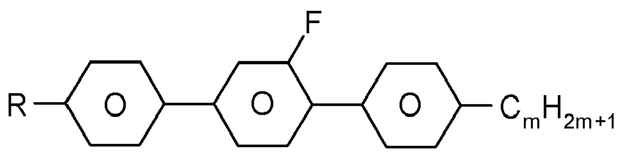

T21

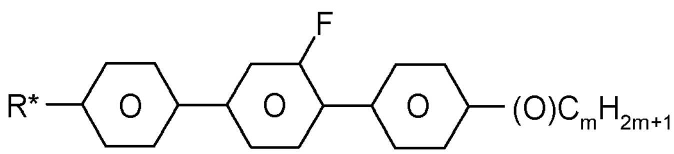

T22

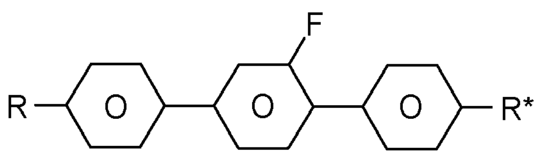

T23

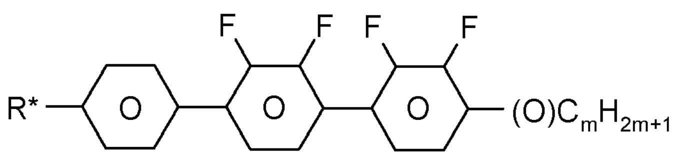

T24

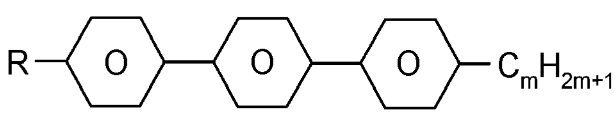

T25

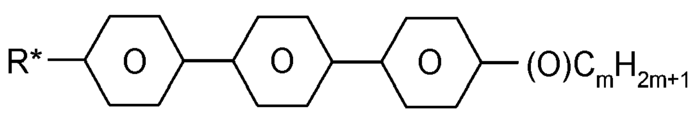

T26

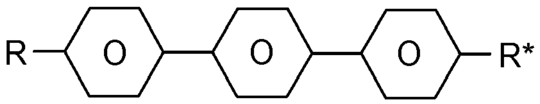

T27

in which R denotes a straight-chain alkyl or alkoxy radical having 1-7 C atoms, R* denotes a straight-chain alkenyl radical having 2-7 C atoms, (O) denotes an oxygen atom or a single bond, and m denotes an integer from 1 to 6. R* preferably denotes $CH_2=CH-$, $CH_2=CHCH_2CH_2-$, $CH_3-CH=CH-$, $CH_3-CH_2-CH=CH-$, $CH_3-(CH_2)_2-CH=CH-$, $CH_3-(CH_2)_3-CH=CH-$ or $CH_3-CH=CH-(CH_2)_2-$.

R preferably denotes methyl, ethyl, propyl, butyl, pentyl, hexyl, methoxy, ethoxy, propoxy, butoxy or pentoxy.

The LC medium according to the invention preferably comprises the terphenyls of the formula T and the preferred sub-formulae thereof in an amount of 0.5-30% by weight, in particular 1-20% by weight.

Particular preference is given to compounds of the formulae T1, T2, T3 and T21. In these compounds, R preferably denotes alkyl, furthermore alkoxy, each having 1-5 C atoms.

The terphenyls are preferably employed in mixtures according to the invention if the $\Delta n$ value of the mixture is to be $\geq 0.1$. Preferred mixtures comprise 2-20% by weight of one or more terphenyl compounds of the formula T, preferably selected from the group of compounds T1 to T22.

i) LC medium which additionally comprises one or more compounds selected from the group consisting of the following formulae:

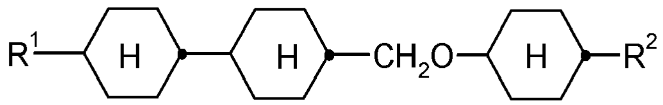

O1

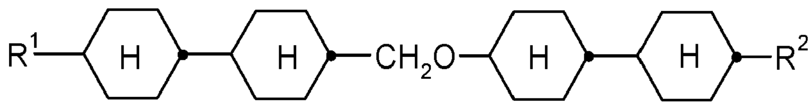

O2

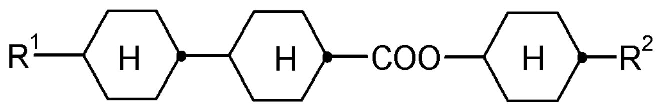

O3

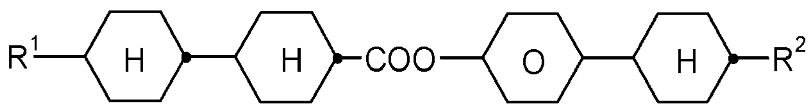

O4

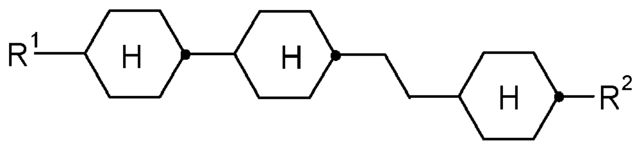

O5

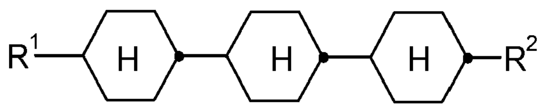

O6

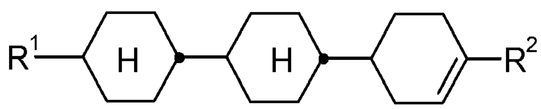

O7

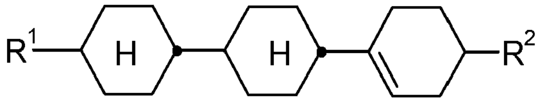
O8

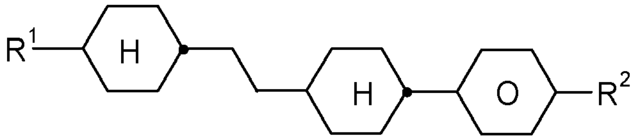
O9

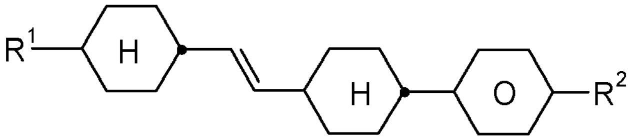
O10

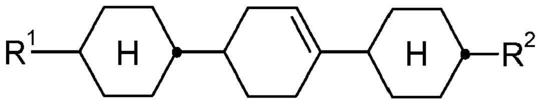
O11

in which $R^1$ and $R^2$ have the meanings indicated above and preferably each, independently of one another, denote straight-chain alkyl having 1 to 6 C atoms or straight-chain alkenyl having 2 to 6 C atoms.

Preferred media comprise one or more compounds selected from the formulae O1, O3 and O4.

k) LC medium which additionally comprises one or more compounds of the following formula:

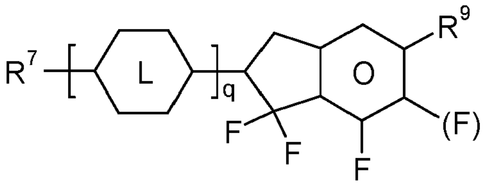
FI

in which

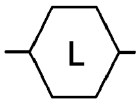

denotes

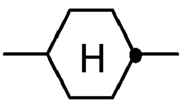 , 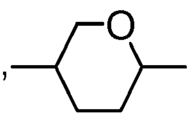 , 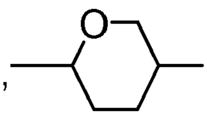 , 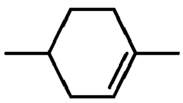

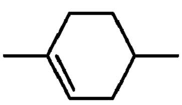 , 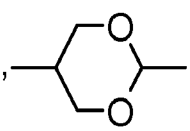 , 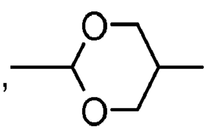 , 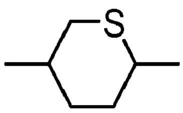

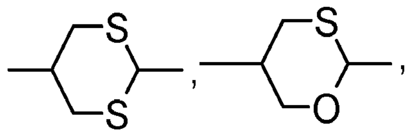

$R^9$ denotes H, $CH_3$, $C_2H_5$ or n-$C_3H_7$, (F) denotes an optional fluorine substituent, and q denotes 1, 2 or 3, and $R^7$ has one of the meanings indicated for $R^1$, preferably in amounts of > 3% by weight, in particular ≥ 5% by weight and very particularly preferably 5-30% by weight.

Particularly preferred compounds of the formula FI are selected from the group consisting of the following sub-formulae:

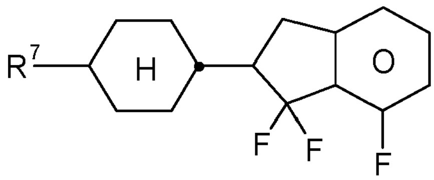

FI1

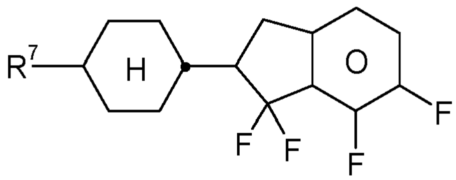

FI2

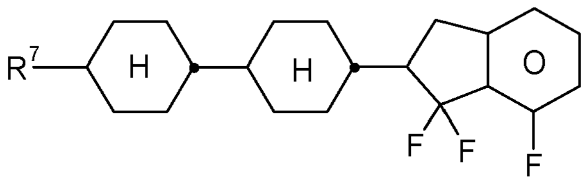

FI3

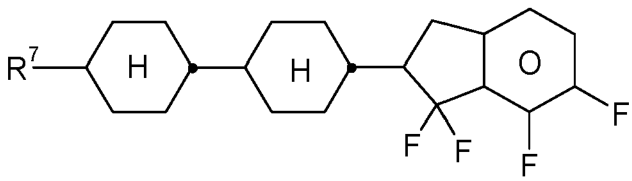

FI4

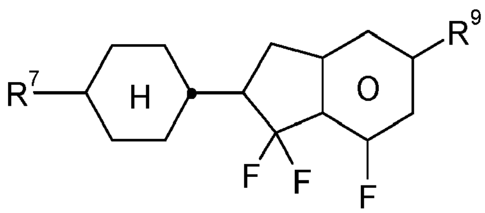

FI5

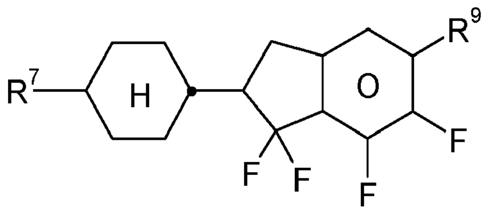

FI6

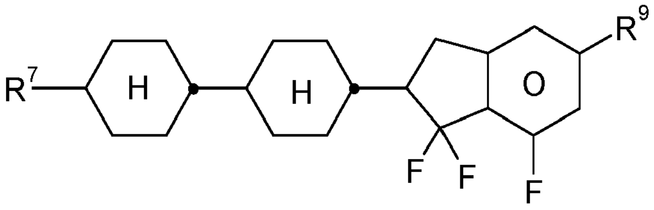

FI7

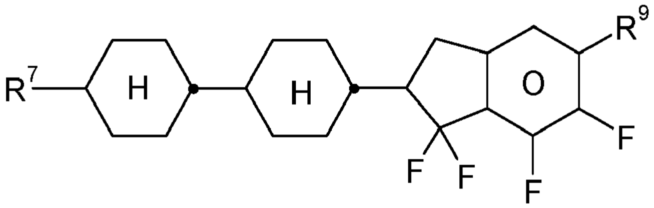

FI8

in which $R^7$ preferably denotes straight-chain alkyl, and $R^9$ denotes $CH_3$, $C_2H_5$ or n-$C_3H_7$. Particular preference is given to the compounds of the formulae FI1, FI2 and FI3.

l) LC medium which additionally comprises one or more compounds selected from the group consisting of the following formulae:

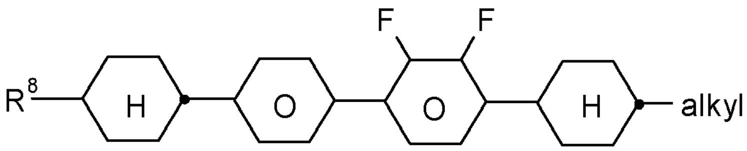

VK1

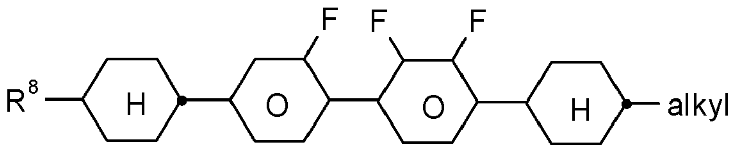

VK2

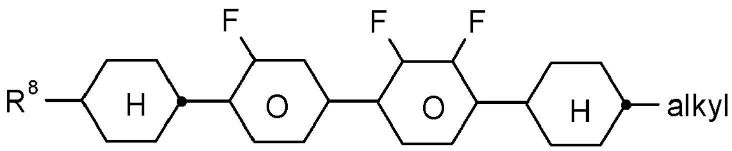

VK3

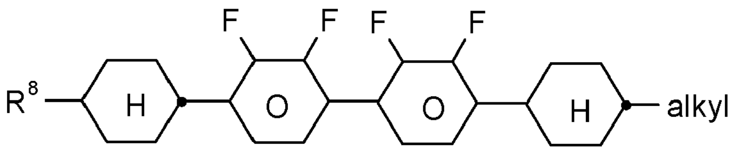

VK4

in which $R^8$ has the meaning indicated for $R^1$, and alkyl denotes a straight-chain alkyl radical having 1-6 C atoms.

m) LC medium which additionally comprises one or more compounds which contain a tetrahydronaphthyl or naphthyl unit, such as, for example, the compounds selected from the group consisting of the following formulae:

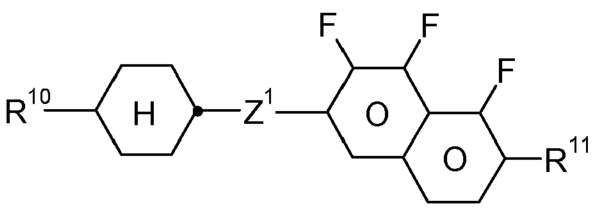

N1

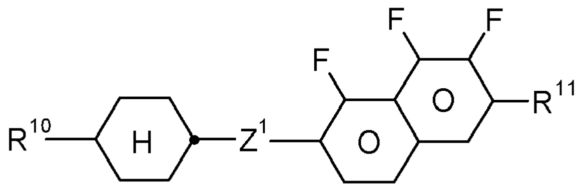

N2

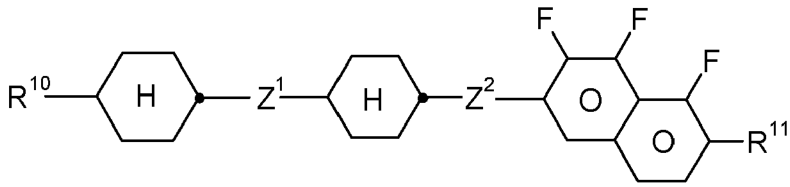

N3

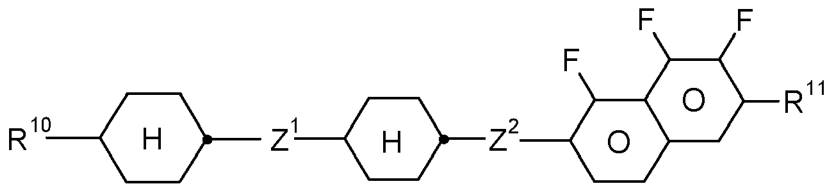

N4

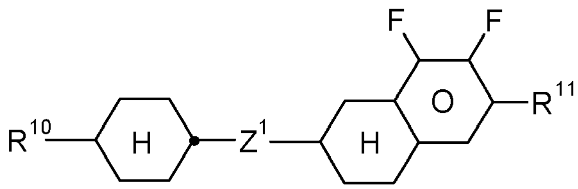

N5

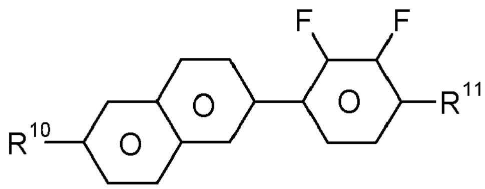

N6

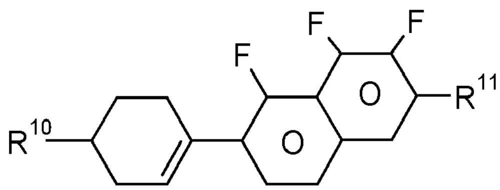

N7

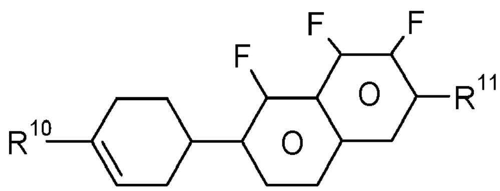

N8

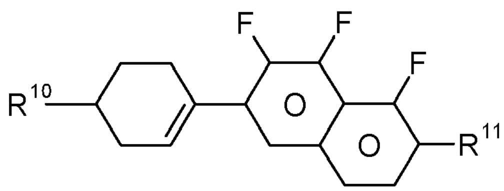

N9

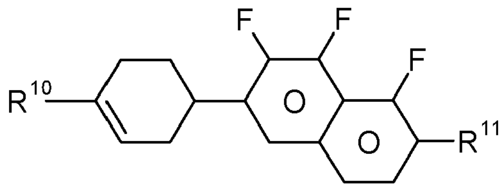

N10

in which

$R^{10}$ and $R^{11}$ each, independently of one another, denote alkyl having 1 to 12 C atoms, where, in addition, one or two non-adjacent $CH_2$ groups may be replaced by -O-, -CH=CH-, -CO-, -OCO- or -COO- in such a way that O atoms are not linked directly to one another, preferably alkyl or alkoxy having 1 to 6 C atoms, and $R^{10}$ and $R^{11}$ preferably denote straight-chain alkyl or alkoxy having 1 to 6 C atoms or straight-chain alkenyl having 2 to 6 C atoms, and

$Z^1$ and $Z^2$ each, independently of one another, denote $-C_2H_4-$, -CH=CH-, $-(CH_2)_4-$, $-(CH_2)_3O-$, $-O(CH_2)_3-$, $-CH=CH-CH_2CH_2-$, $-CH_2CH_2CH=CH-$, $-CH_2O-$,$-OCH_2-$, -CO-O-, -O-CO-, $-C_2F_4-$, -CF=CF-, -CF=CH-, -CH=CF-, $-CH_2-$or a single bond.

n) LC medium which additionally comprises one or more difluorodibenzochromans and/or chromans of the following formulae:

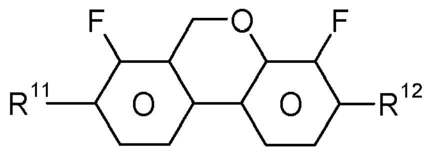

BC

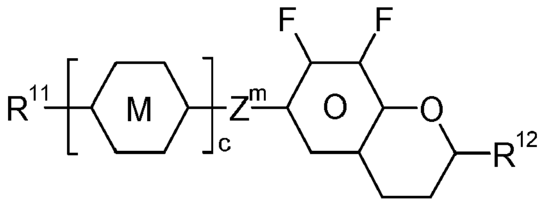

CR

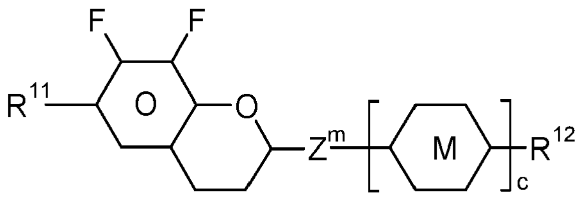

RC

in which

| | |
|---|---|
| $R^{11}$ and $R^{12}$ | each, independently of one another, have one of the meanings indicated above for $R^{11}$ under formula N1 |
| ring M | is trans-1,4-cyclohexylene or 1,4-phenylene, |
| $z^m$ | $-C_2H_4-$, $-CH_2O-$,$-OCH_2-$, -CO-O- or -O-CO-, |
| c | is 0, 1 or 2, |

preferably in amounts of 3 to 20% by weight, in particular in amounts of 3 to 15% by weight.

Particularly preferred compounds of the formulae BC, CR and RC are selected from the group consisting of the following sub-formulae:

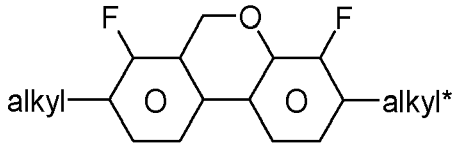

BC1

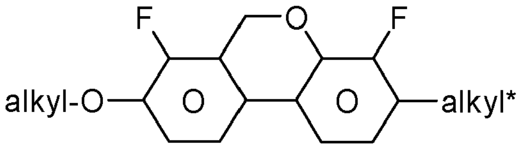

BC2

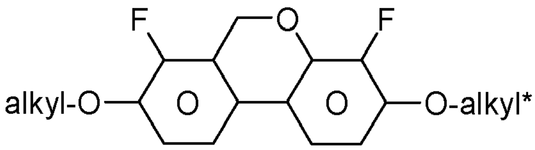

BC3

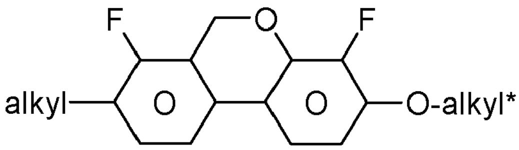

BC4

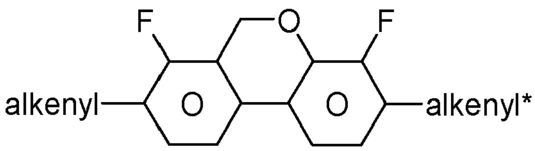

BC5

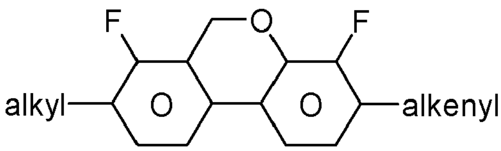

BC6

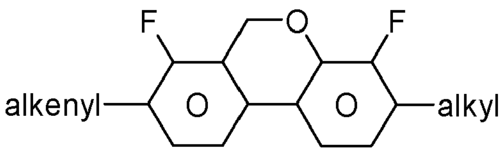

BC7

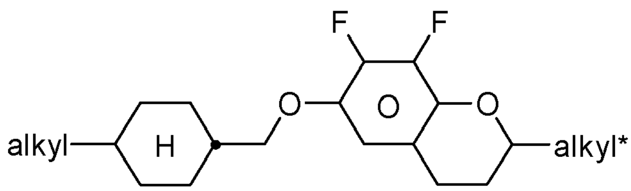

CR1

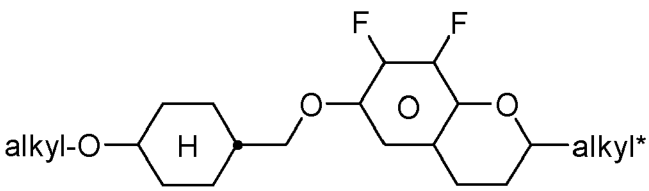

CR2

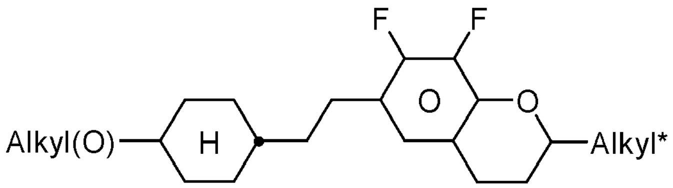

CR3

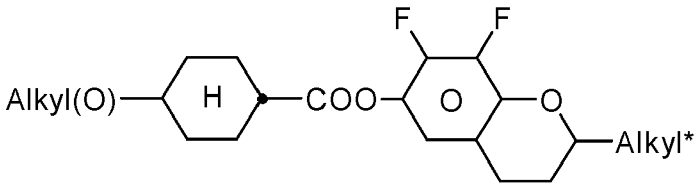

CR4

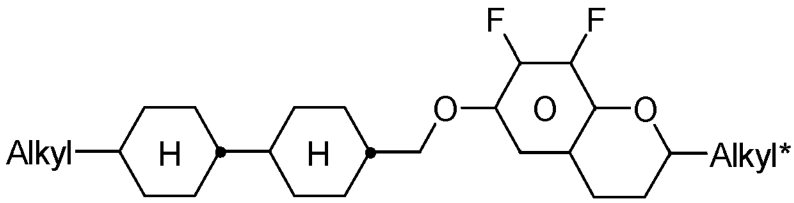

CR5

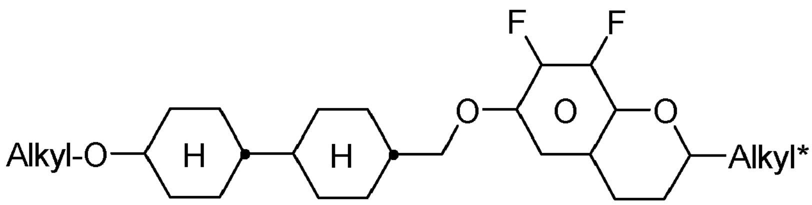

CR6

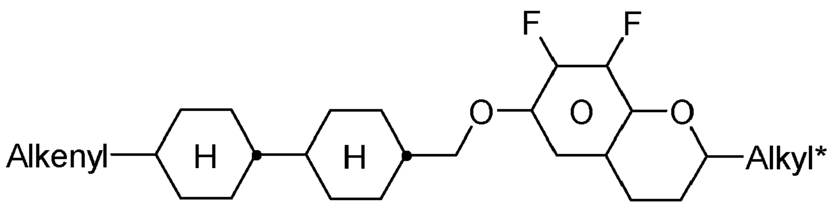

CR7

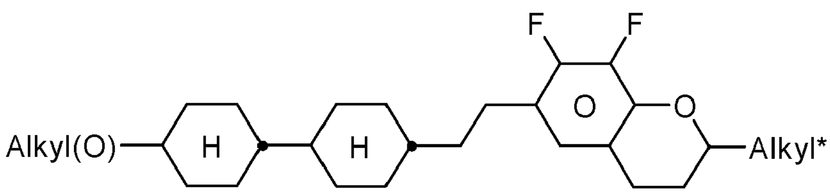

CR8

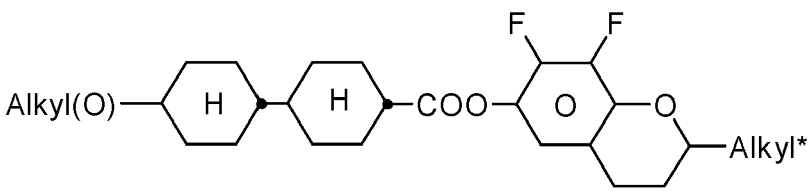

CR9

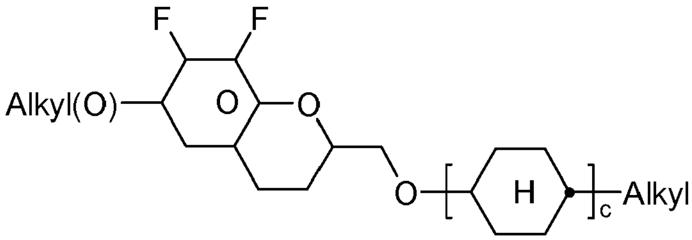

RC1

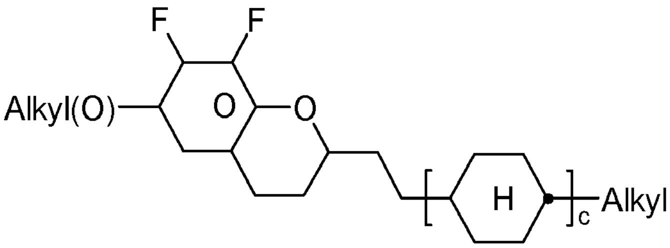

RC2

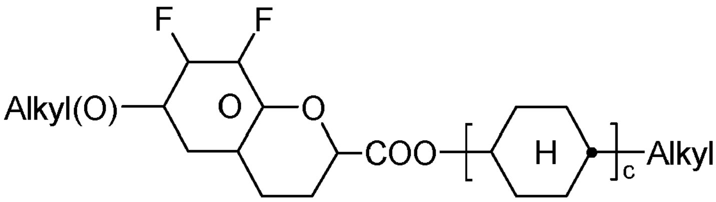

RC3

in which alkyl and alkyl* each, independently of one another, denote a straight-chain alkyl radical having 1-6 C atoms, (O) denotes an oxygen atom or a single bond, c is 1 or 2, and alkenyl and alkenyl* each, independently of one another, denote a straight-chain alkenyl radical having 2-6 C atoms. Alkenyl and alkenyl* preferably denote $CH_2$=CH-, $CH_2$=$CHCH_2CH_2$-, $CH_3$-CH=CH-, $CH_3$-$CH_2$-CH=CH-, $CH_3$-$(CH_2)_2$-CH=CH-, $CH_3$-$(CH_2)_3$-CH=CH- or $CH_3$-CH=CH-$(CH_2)_2$-.

Very particular preference is given to mixtures comprising one, two or three compounds of the formula BC-2.

o) LC medium which additionally comprises one or more fluorinated phenanthrenes and/or dibenzofurans of the following formulae:

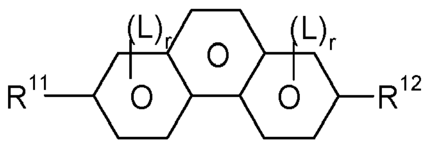

PH

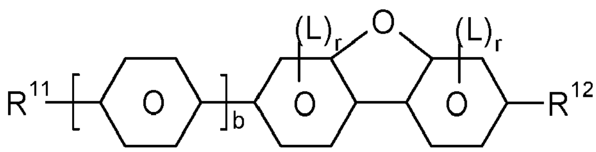

BF

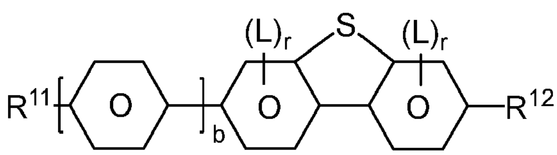

BS

in which $R^{11}$ and $R^{12}$ each, independently of one another, have one of the meanings indicated above for $R^{11}$ under formula N1, b denotes 0 or 1, L denotes F, and r denotes 1, 2 or 3.

Particularly preferred compounds of the formulae PH and BF are selected from the group consisting of the following sub-formulae:

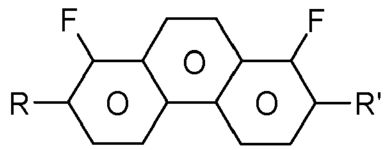

PH1

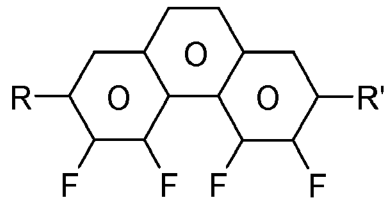

PH2

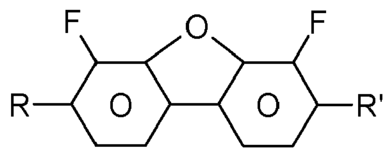

BF1

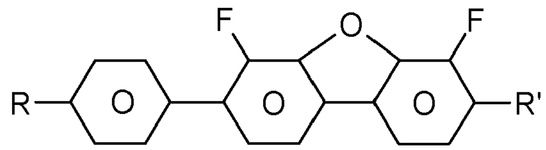

BF2

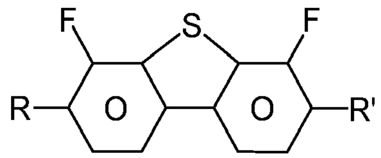

BS1

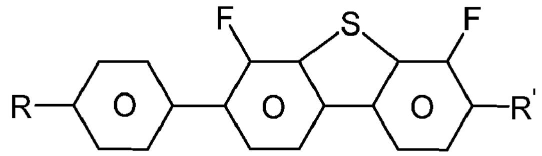

BS2

in which R and R' each, independently of one another, denote a straight-chain alkyl or alkoxy radical having 1-7 C atoms.

p) LC medium which additionally comprises one or more monocyclic compounds of the following formula

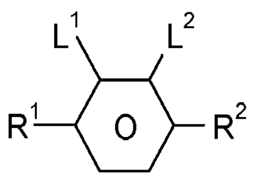

Y

wherein

$R^1$ and $R^2$ each, independently of one another, denote alkyl having 1 to 12 C atoms, where, in addition, one or two non-adjacent $CH_2$ groups may be replaced by -O-, -CH=CH-, -CO-, -OCO- or -COO- in such a way that O atoms are not linked directly to one another, and one or more $CH_2$-groups may be replaced by

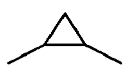,

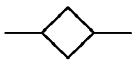, 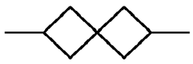, 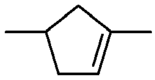 or 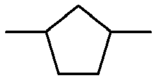

,preferably alkyl or alkoxy having 1 to 6 C atoms,

$L^1$ and $L^2$ each, independently of one another, denote F, Cl, $OCF_3$, $CF_3$, $CH_3$, $CH_2F$, $CHF_2$.

Preferably, both $L^1$ and $L^2$ denote F or one of $L^1$ and $L^2$ denotes F and the other denotes Cl,

The compounds of the formula Y are preferably selected from the group consisting of the following sub-formulae:

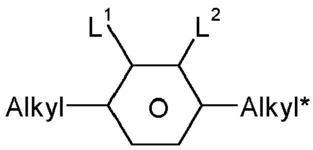

Y1

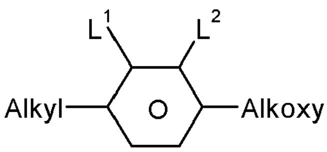

Y2

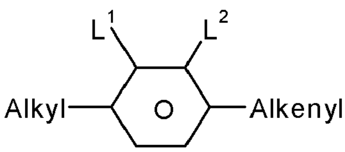

Y3

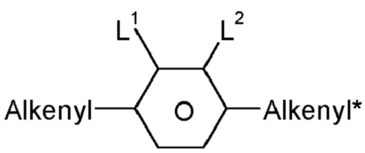

Y4

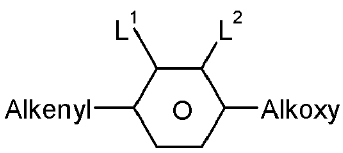

Y5

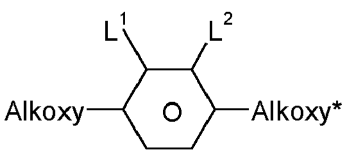

Y6

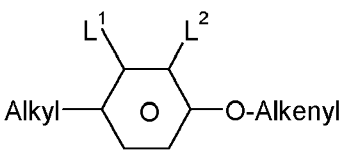

Y7

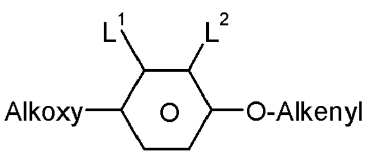

Y8

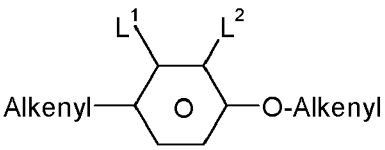

Y9

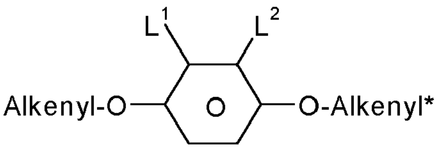

Y10,

in which, Alkyl and Alkyl* each, independently of one another, denote a straight-chain alkyl radical having 1-6 C atoms, Alkoxy denotes a straight-chain alkoxy radical having 1-6 C atoms, Alkenyl and Alkenyl* each, independently of one another, denote a straight-chain alkenyl radical having 2-6 C atoms, and O denotes an oxygen atom or a single bond. Alkenyl and Alkenyl* preferably denote $CH_2$=CH-, $CH_2$=$CHCH_2CH_2$-, $CH_3$-CH=CH-, $CH_3$-$CH_2$-CH=CH-, $CH_3$-$(CH_2)_2$-CH=CH-, $CH_3$-$(CH_2)_3$-CH=CH- or $CH_3$-CH=CH-$(CH_2)_2$-.

Particularly preferred compounds of the formula Y are selected from the group consisting of the following sub-formulae:

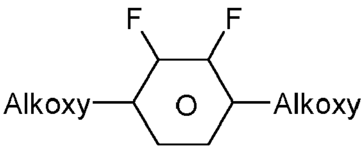

Y6A

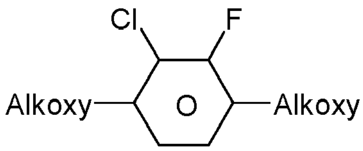

Y6B

wherein Alkoxy preferably denotes straight-chain alkoxy with 3, 4, or 5 C atoms.

q) LC medium which, apart from the stabilisers according to the invention, in particular of the formula I or sub-formulae thereof and the comonomers, comprises no compounds which contain a terminal vinyloxy group (-O-CH=$CH_2$).

r) LC medium which comprises 1 to 5, preferably 1, 2 or 3, stabilisers, preferably selected from stabilisers according to the invention, in particular of the formula I or sub-formulae thereof.

s) LC medium in which the proportion of stabilisers, in particular of the formula I or sub-formulae thereof, in the mixture as a whole is 1 to 1500ppm, preferably 100 to 1000ppm.

t) LC medium which comprises 1 to 8, preferably 1 to 5, compounds of the formulae CY1, CY2, PY1 and/or PY2. The proportion of these compounds in the mixture as a whole is preferably 5 to 60%, particularly preferably 10 to 35%. The content of these individual compounds is preferably in each case 2 to 20%.

u) LC medium which comprises 1 to 8, preferably 1 to 5, compounds of the formulae CY9, CY10, PY9 and/or PY10. The proportion of these compounds in the mixture as a whole is preferably 5 to 60%, particularly preferably 10 to 35%. The content of these individual compounds is preferably in each case 2 to 20%.

v) LC medium which comprises 1 to 10, preferably 1 to 8, compounds of the formula ZK, in particular compounds of the formulae ZK1, ZK2 and/or ZK6. The proportion of these compounds in the mixture as a whole is preferably 3 to 25%, particularly preferably 5 to 45%. The content of these individual compounds is preferably in each case 2 to 20%.

w) LC medium in which the proportion of compounds of the formulae CY, PY and ZK in the mixture as a whole is greater than 70%, preferably greater than 80%.

x) LC medium in which the LC host mixture contains one or more compounds containing an alkenyl group, preferably selected from the group consisting of formula CY, PY and LY, wherein one or both of $R^1$ and $R^2$ denote straight-chain alkenyl having 2-6 C atoms, formula ZK and DK, wherein one or both of $R^3$ and $R^4$ or one or both of $R^5$ and $R^6$ denote straight-chain alkenyl having 2-6 C atoms, and formula B2 and B3, very preferably selected from formulae CY15, CY16, CY24, CY32, PY15, PY16, ZK3, ZK4, DK3, DK6, B2 and B3, most preferably selected from formulae ZK3, ZK4, B2 and B3. The concentration of these compounds in the LC host mixture is preferably from 2 to 70%, very preferably from 3 to 55%.

y) LC medium which contains one or more, preferably 1 to 5, compounds selected of formula PY1-PY8, very

preferably of formula PY2. The proportion of these compounds in the mixture as a whole is preferably 1 to 30%, particularly preferably 2 to 20%. The content of these individual compounds is preferably in each case 1 to 20%.

z) LC medium which contains one or more, preferably 1, 2 or 3, compounds of formula T2. The content of these compounds in the mixture as a whole is preferably 1 to 20%.

In another preferred embodiment of the present invention the LC medium contains one or more nematogenic compounds with positive dielectric anisotropy. Preferred embodiments of such an LC medium are those of sections aa) - mmm) below:

aa) LC-medium, characterised in that it comprises one or more compounds selected from the group of compounds of the formulae II and III

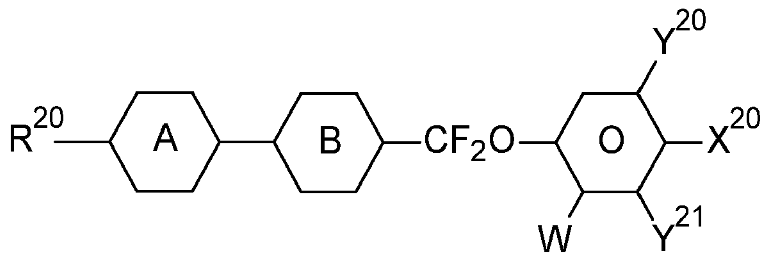

II

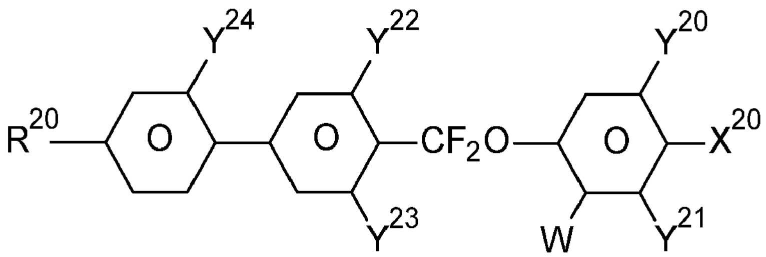

III

wherein

R20 each, identically or differently, denote a halogenated or unsubstituted alkyl or alkoxy radical having 1 to 15 C atoms, where, in addition, one or more $CH_2$ groups in these radicals may each be replaced, independently of one another, by -C≡C-, -$CF_2$O-, -CH=CH-, -O-, -CO-O- or -O-CO- in such a way that O atoms are not linked directly to one another, and one or more $CH_2$-groups may be replaced by

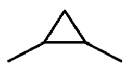
,

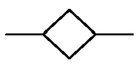
, 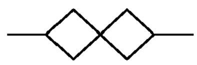
, 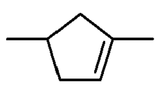
or 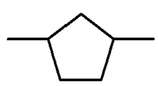
,

$X^{20}$ each, identically or differently, denote F, Cl, CN, SFs, SCN, NCS, a halogenated alkyl radical, a halogenated alkenyl radical, a halogenated alkoxy radical or a halogenated alkenyloxy radical, each having up to 6 C atoms, and

$Y^{20-24}$ each, identically or differently, denote H or F;

W denotes H or methyl,

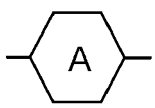
and
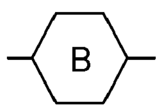

each, independently of one another, denote

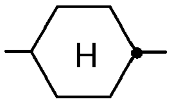 ,

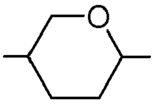 or 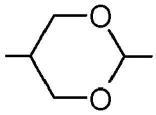 .

The compounds of the formula II are preferably selected from the following formulae:

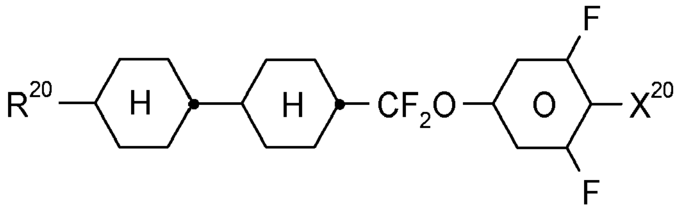 IIa

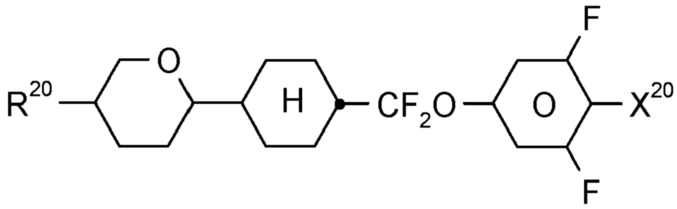 IIb

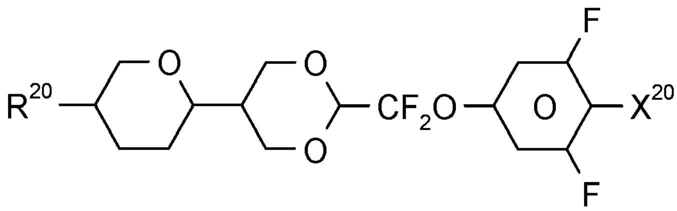 IIc

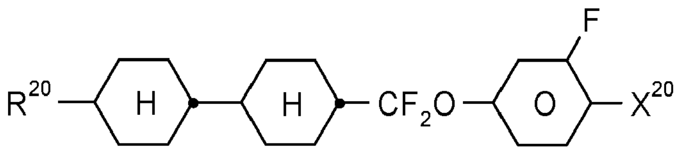 IId

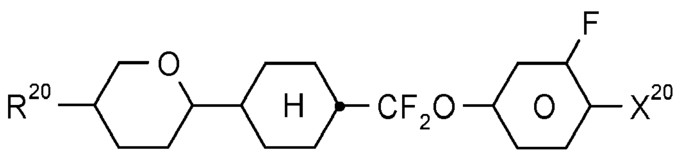 IIe

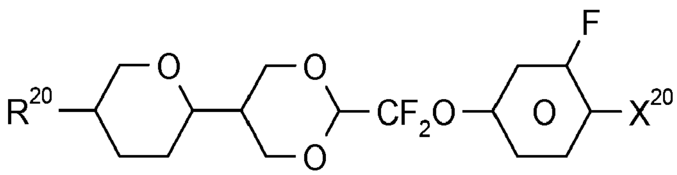 IIf

wherein $R^{20}$ and $X^{20}$ have the meanings indicated above.

$R^{20}$ preferably denotes alkyl having 1 to 6 C atoms. $X^{20}$ preferably denotes F. Particular preference is given to

compounds of the formulae IIa and IIb, in particular compounds of the formulae IIa and IIb wherein X denotes F.

The compounds of the formula III are preferably selected from the following formulae:

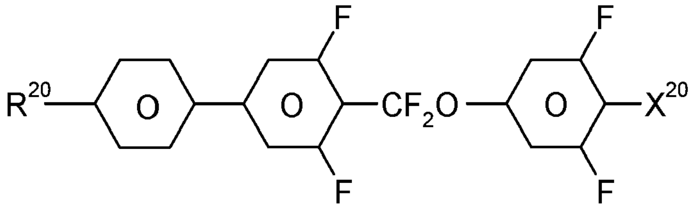

IIIa

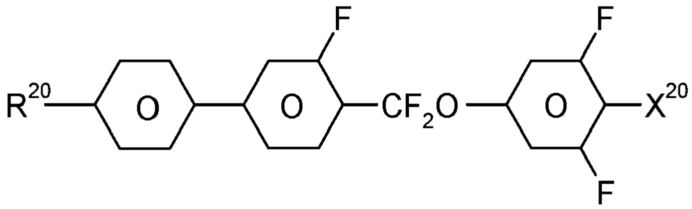

IIIb

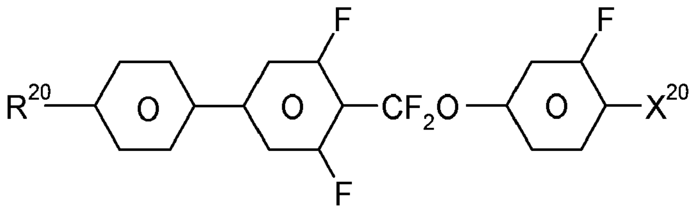

IIIc

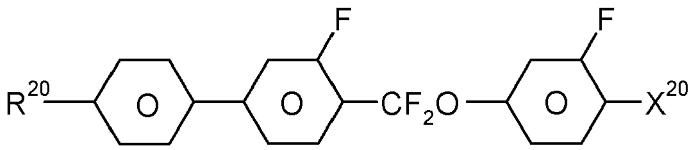

IIId

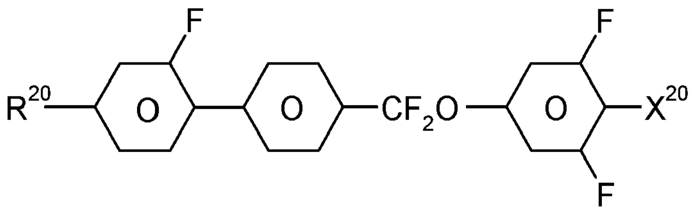

IIIe

wherein $R^{20}$ and $X^{20}$ have the meanings indicated above. $R^{20}$ preferably denotes alkyl having 1 to 6 C atoms. $X^{20}$ preferably denotes F. Particular preference is given to compounds of the formulae IIIa and IIIe, in particular compounds of the formula IIIa;

bb) LC-medium additionally comprising one or more compounds selected from the following formulae:

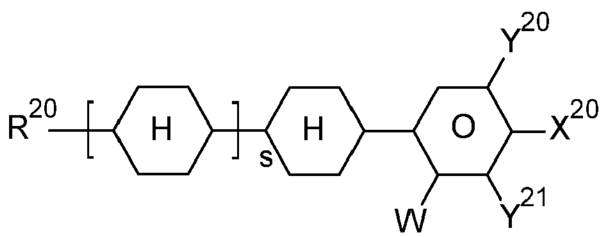

IV

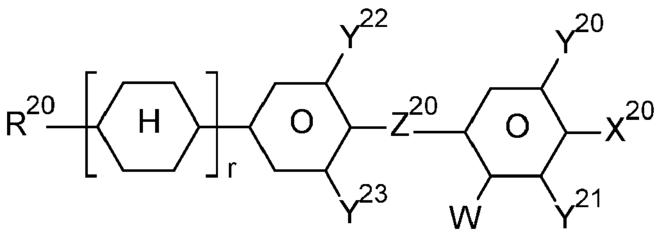

V

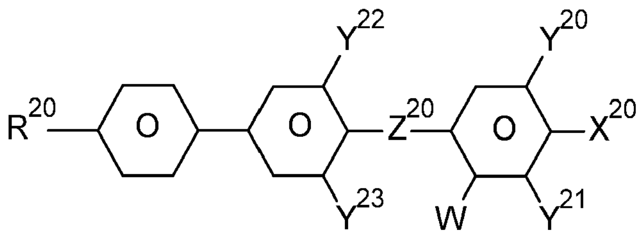

VI

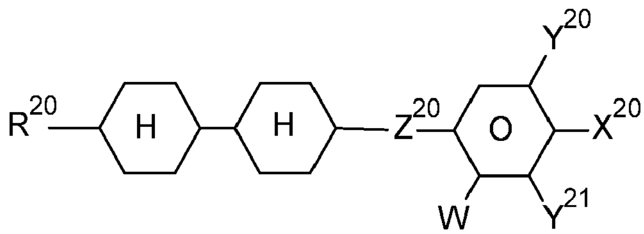

VII

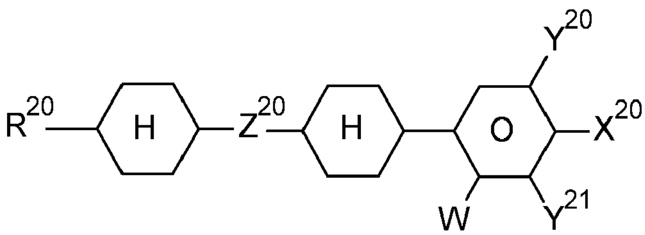

VIII

wherein $R^{20}$, $X^{20}$, W and $Y^{20-23}$ have the meanings indicated above under formula II, and

$Z^{20}$ denotes $-C_2H_4-$, $-(CH_2)_4-$, -CH=CH-, -CF=CF, $-C_2F_4-$, $-CH_2CF_2-$, $-CF_2CH_2-$, $-CH_2O-$, $-OCH_2-$, -COO-or $-OCF_2-$, in formulae V and VI also a single bond, in formulae V and VIII also $-CF_2O-$,

r denotes 0 or 1, and

s denotes 0 or 1;

- The compounds of the formula IV are preferably selected from the following formulae:

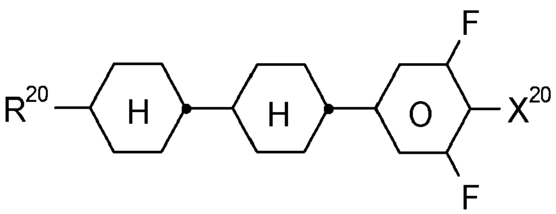

IVa

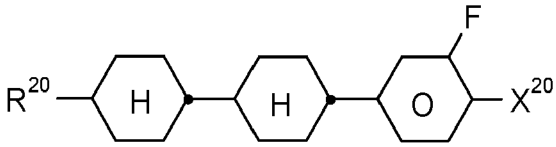

IVb

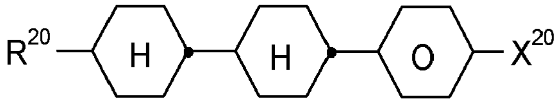

IVc

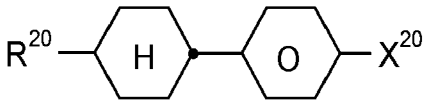

IVd

wherein $R^{20}$ and $X^{20}$ have the meanings indicated above.
$R^{20}$ preferably denotes alkyl having 1 to 6 C atoms. $X^{20}$ preferably denotes F or $OCF_3$, furthermore $OCF=CF_2$ or Cl;

- The compounds of the formula V are preferably selected from the following formulae:

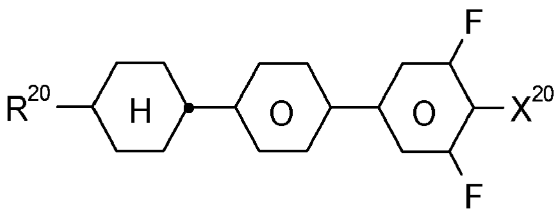

Va

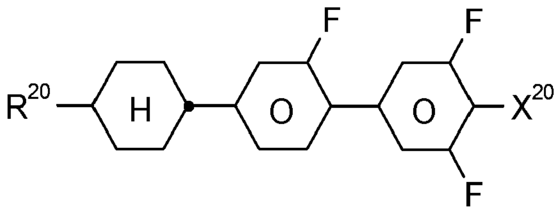

Vb

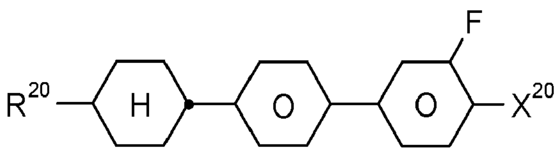

Vc

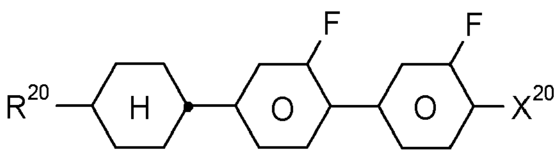

Vd

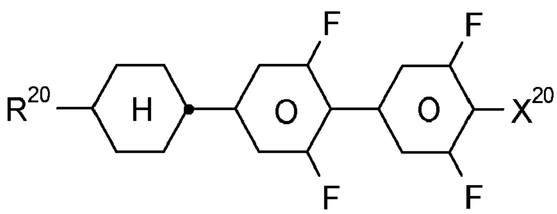

Ve

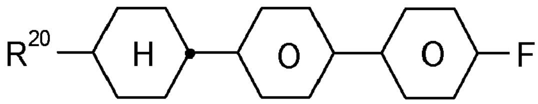

Vf

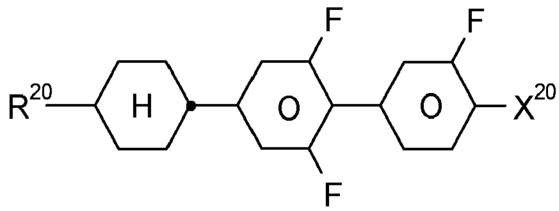

Vg

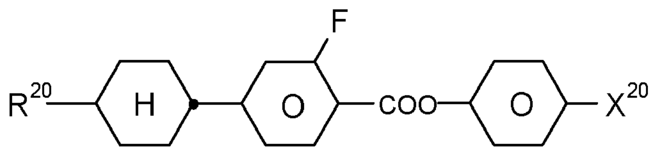

Vh

wherein $R^{20}$ and $X^{20}$ have the meanings indicated above.
$R^{20}$ preferably denotes alkyl having 1 to 6 C atoms. $X^{20}$ preferably denotes F and $OCF_3$, furthermore $OCHF_2$, $CF_3$, $OCF=CF_2$ and $OCH=CF_2$;

- The compounds of the formula VI are preferably selected from the following formulae:

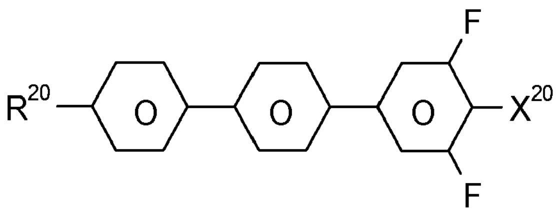

VIa

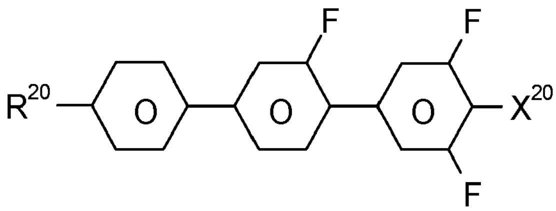

VIb

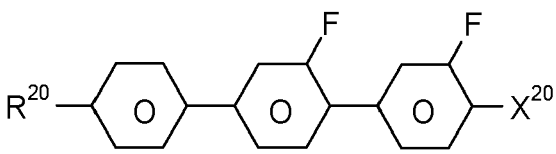

VIc

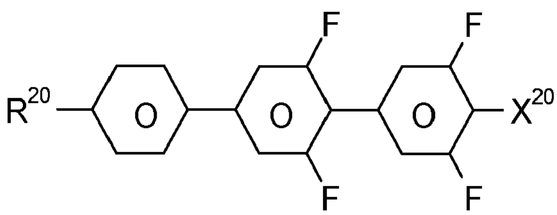

VId

wherein $R^{20}$ and $X^{20}$ have the meanings indicated above.
$R^{20}$ preferably denotes alkyl having 1 to 6 C atoms. $X^{20}$ preferably denotes F, furthermore $OCF_3$, $CF_3$, $CF=CF_2$, $OCHF_2$ and $OCH=CF_2$;

- The compounds of the formula VII are preferably selected from the following formulae:

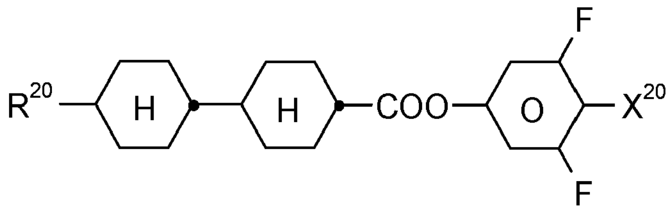

VIIa

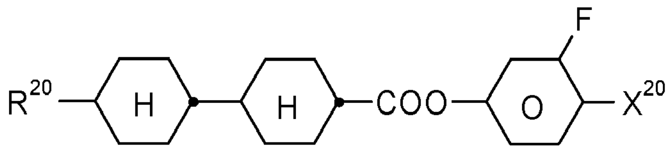

VIIb

wherein $R^{20}$ and $X^{20}$ have the meanings indicated above.
$R^{20}$ preferably denotes alkyl having 1 to 6 C atoms. $X^{20}$ preferably denotes F, furthermore $OCF_3$, $OCHF_2$ and $OCH=CF_2$.

cc) The medium additionally comprises one or more compounds selected from the formulae ZK1 to ZK10 given above. Especially preferred are compounds of formula ZK1 and ZK3. Particularly preferred compounds of formula ZK are selected from the subformulae ZK1a, ZK1b, ZK1c, ZK3a, ZK3b, ZK3c and ZK3d.

dd) The medium additionally comprises one or more compounds selected from the formulae DK1 to DK12 given above. Especially preferred compounds are DK3.

ee) The medium additionally comprises one or more compounds selected from the following formulae:

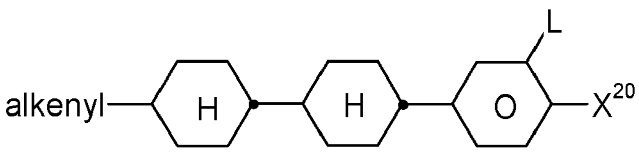

IX

wherein $X^{20}$ has the meanings indicated above, and

L denotes H or F,

"alkenyl" denotes $C_{2-6}$-alkenyl.

ff) The compounds of the formulae DK-3a and IX are preferably selected from the following formulae:

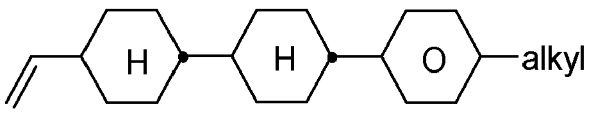

DK3a

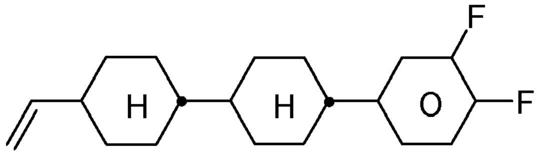

IXa

wherein "alkyl" denotes $C_{1-6}$-alkyl, preferably n-$C_3H_7$, n-$C_4H_9$ or n-$C_5H_{11}$, in particular n-$C_3H_7$.

gg) The medium additionally comprises one or more compounds selected from the formulae B1, B2 and B3 given above, preferably from the formula B2. The compounds of the formulae B1 to B3 are particularly preferably selected from the formulae B1a, B2a, B2b and B2c.

hh) The medium additionally comprises one or more compounds selected from the following formula:

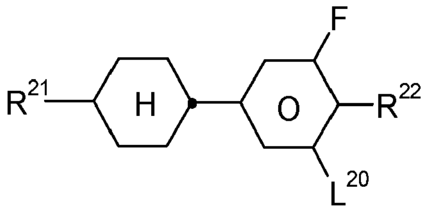

X

wherein $L^{20}$ denotes H or F, and $R^{21}$ and $R^{22}$ each, identically or differently, denote n-alkyl, alkoxy, oxaalkyl, fluoroalkyl or alkenyl, each having up to 6 C atoms, and preferably each, identically or differently, denote alkyl having 1 to 6 C atoms.

ii) The medium comprises one or more compounds of the following formulae:

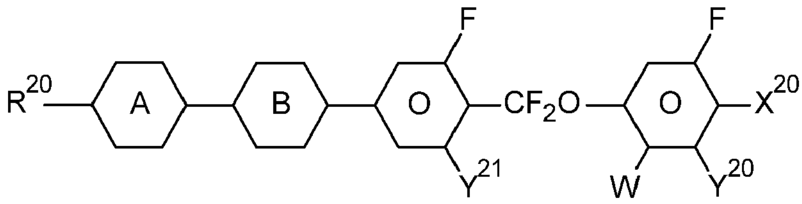

XI

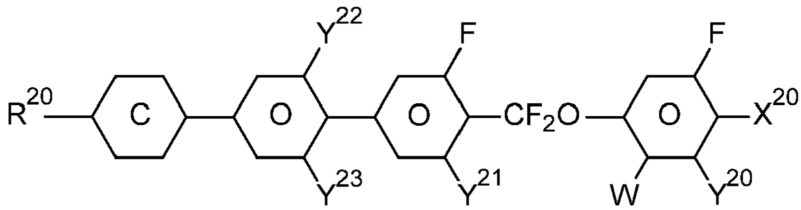

XII

Wherein W, $R^{20}$, $X^{20}$ and $Y^{20-23}$ have the meanings indicated in formula III, and

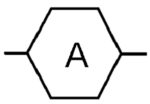 and 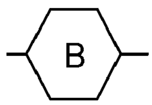

each, independently of one another, denote

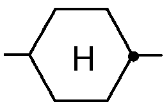 , 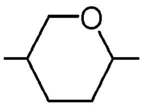 or 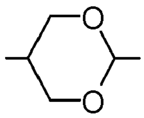

and

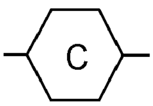

denotes

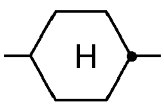 , 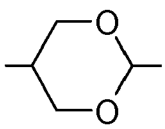 , 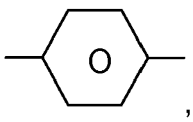 ,

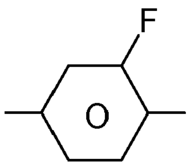 or 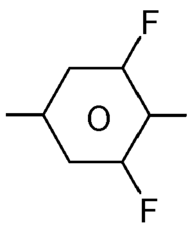

The compounds of the formulae XI and XII are preferably selected from the following formulae:

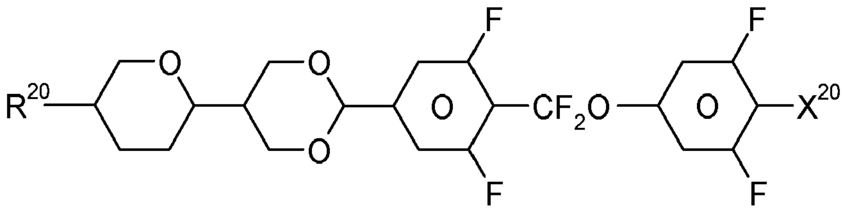 XIa

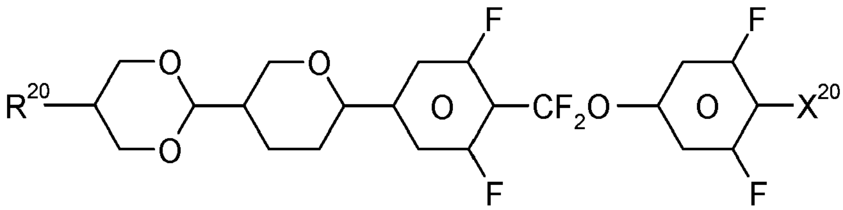 XIb

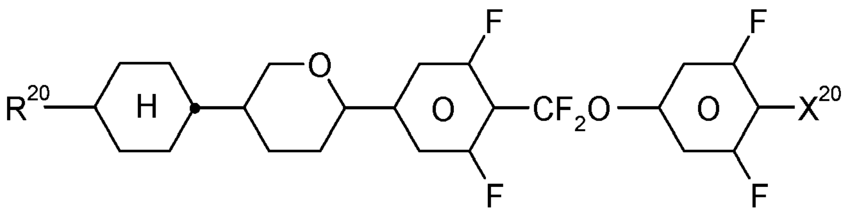 XIc

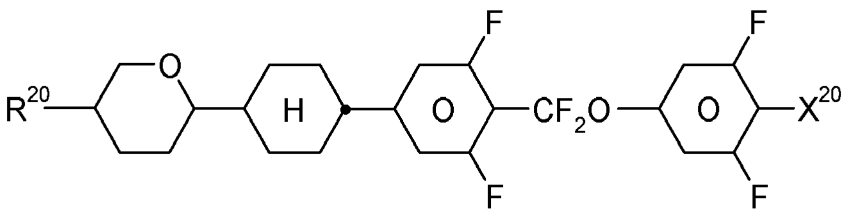 XId

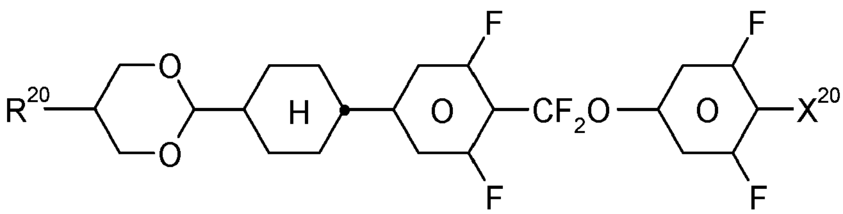 XIe

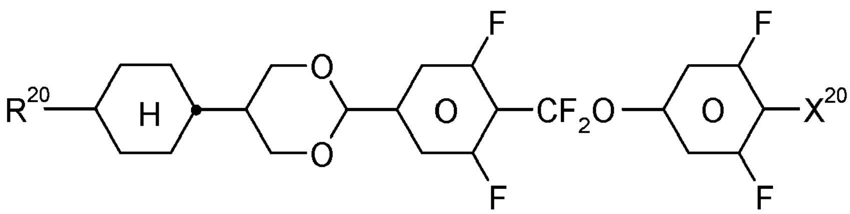 XIf

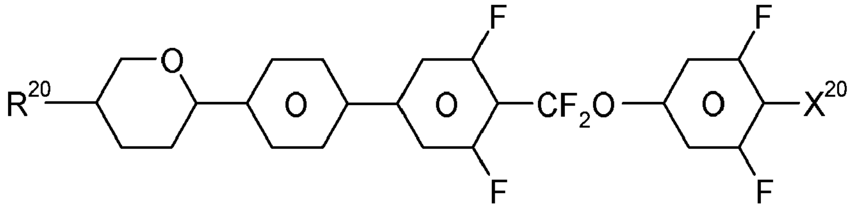 XIIa

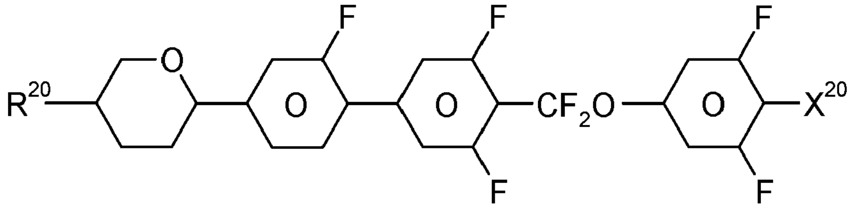 XIIb

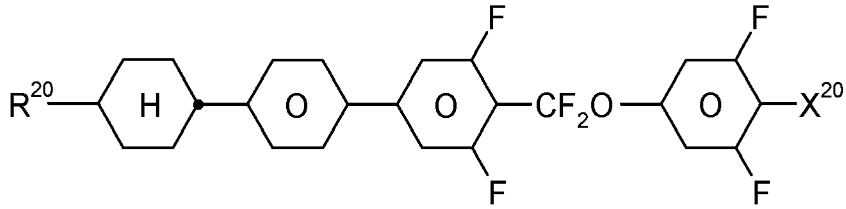 XIIc

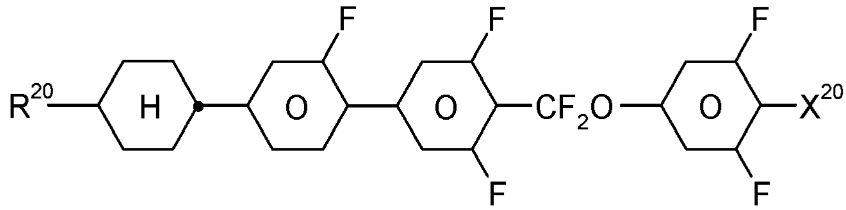 XIId

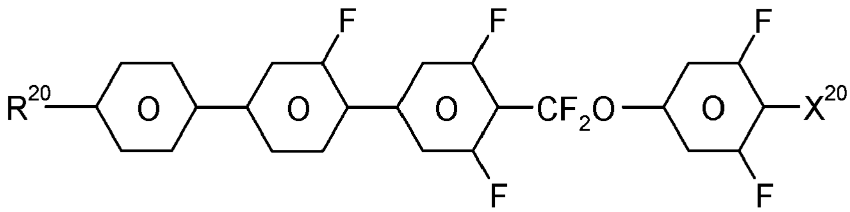 XIIe

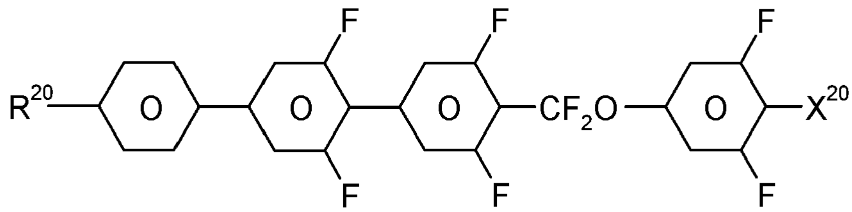 XIIf

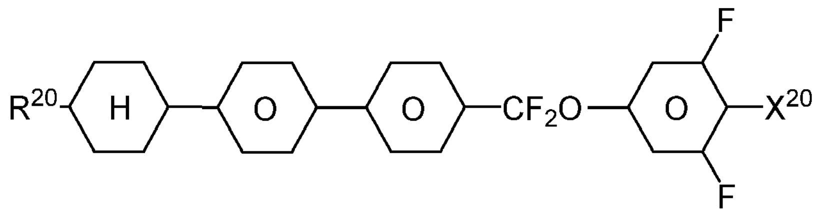 XIIg

wherein $R^{20}$ and $X^{20}$ have the meaning indicated above and preferably $R^{20}$ denotes alkyl having 1 to 6 C atoms and $X^{20}$ denotes F. The mixture according to the invention particularly preferably comprises at least one compound of the

formula XIIa and/or XIIe.

jj) The medium comprises one or more compounds of formula T given above, preferably selected from the group of compounds of the formulae T21 toT23 and T25 to T27.

Particular preference is given to the compounds of the formulae T21 to T23. Very particular preference is given to the compounds of the formulae

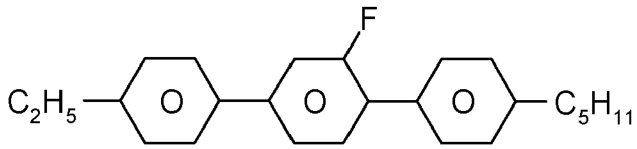

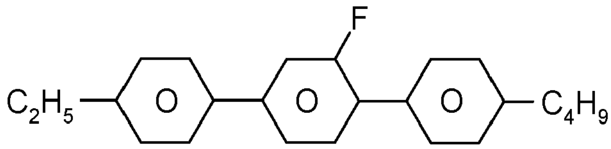

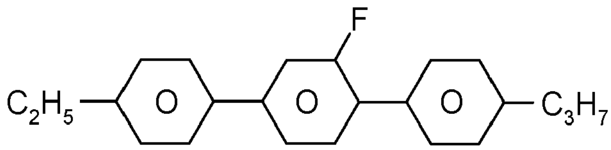

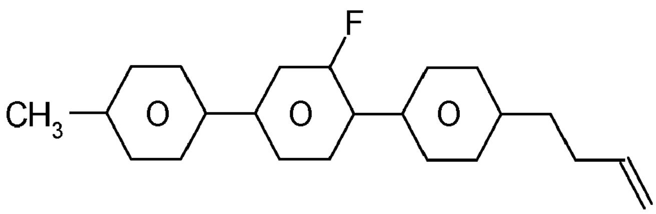

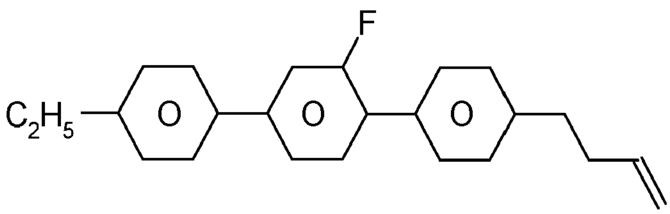

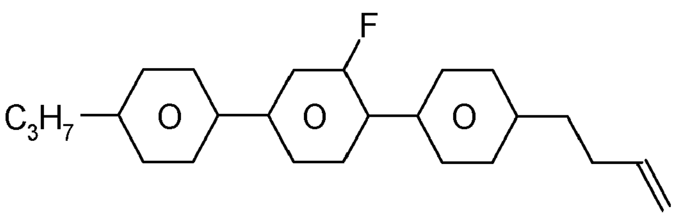

.

kk) The medium comprises one or more compounds selected from the group of formulae DK9, DK10 and DK11 given above.

ll) The medium additionally comprises one or more compounds selected from the following formulae:

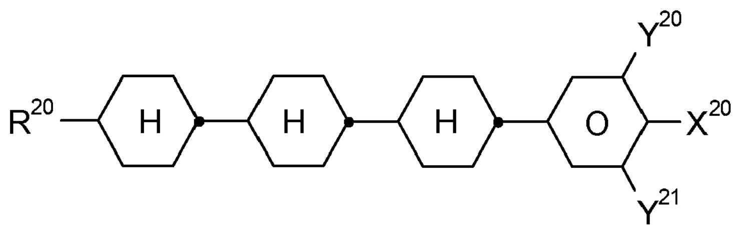

XIII

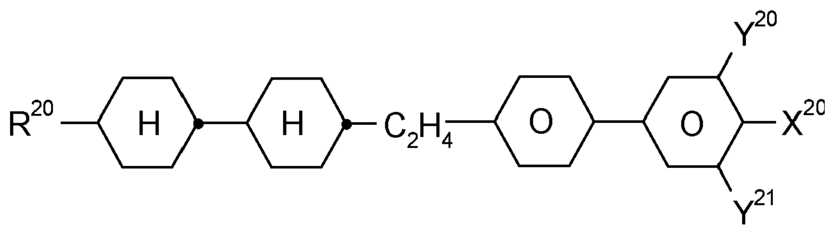

XIV

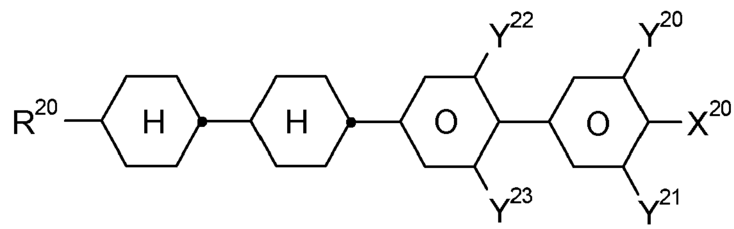

XV

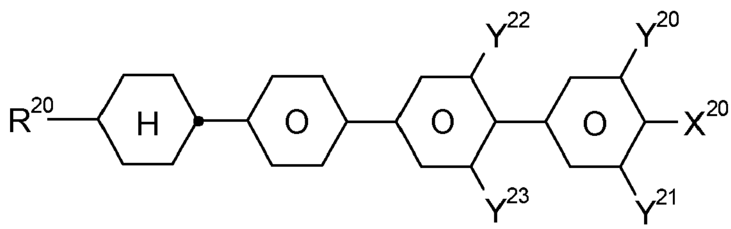

XVI

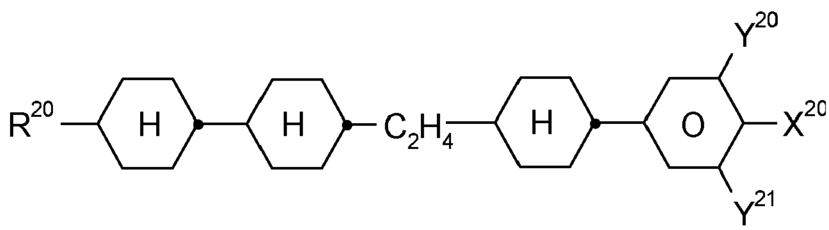

XVII

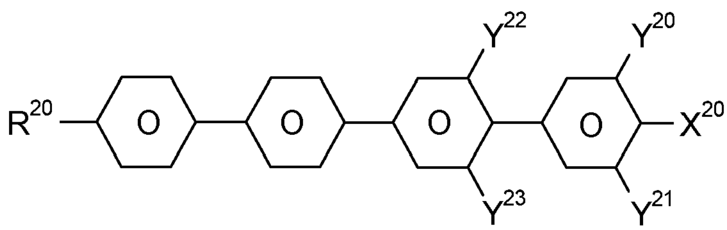

XVIII

wherein $R^{20}$ and $X^{20}$ each, independently of one another, have one of the meanings indicated above, and $Y^{20-23}$ each, independently of one another, denote H or F. $X^{20}$ is preferably F, Cl, $CF_3$, $OCF_3$ or $OCHF_2$. $R^{20}$ preferably denotes alkyl, alkoxy, oxaalkyl, fluoroalkyl or alkenyl, each having up to 6 C atoms.

The mixture according to the invention particularly preferably comprises one or more compounds of the formula

XVIII-a,

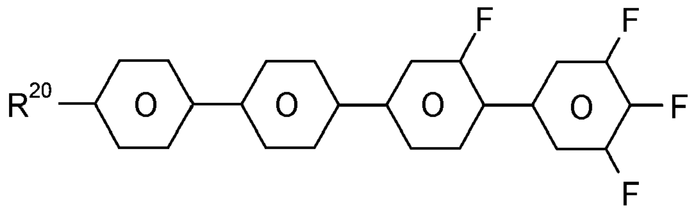

XVIII-a

wherein $R^{20}$ has the meanings indicated above. $R^{20}$ preferably denotes straight-chain alkyl, in particular ethyl, n-propyl, n-butyl and n-pentyl and very particularly preferably n-propyl. The compound(s) of the formula XVIII, in particular of the formula XVIII-a, is (are) preferably employed in the mixtures according to the invention in amounts of 0.5-20% by weight, particularly preferably 1-15% by weight.

mm) The medium additionally comprises one or more compounds of the formula XIX,

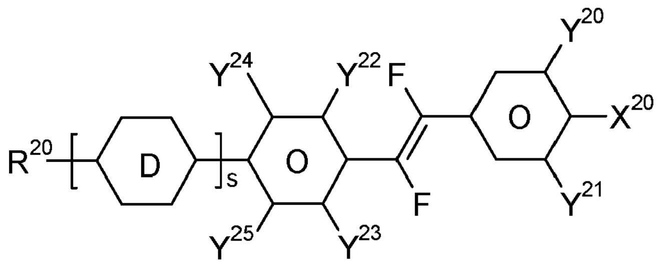

XIX

wherein $R^{20}$, $X^{20}$ and $Y^{20-25}$ have the meanings indicated in formula I, s denotes 0 or 1, and

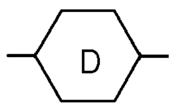

denotes

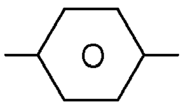 , 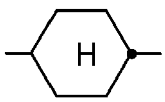 or 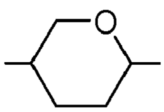 .

In the formula XIX, $X^{20}$ may also denote an alkyl radical having 1-6 C atoms or an alkoxy radical having 1-6 C atoms. The alkyl or alkoxy radical is preferably straight-chain.

$R^{20}$ preferably denotes alkyl having 1 to 6 C atoms. $X^{20}$ preferably denotes F;

- The compounds of the formula XIX are preferably selected from the following formulae:

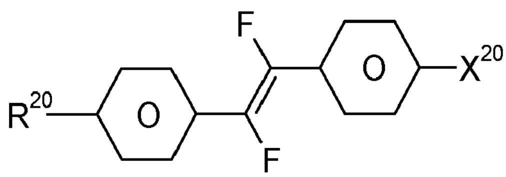

XIXa

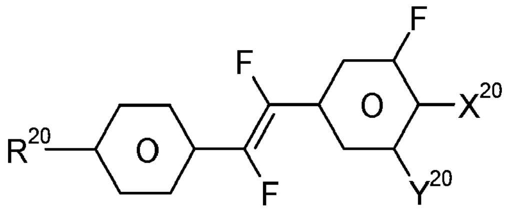

XIXb

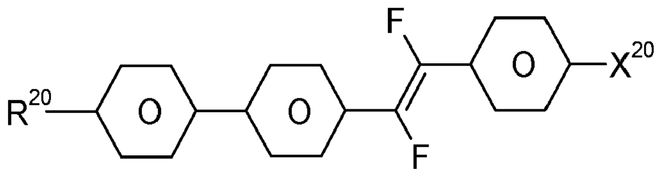

XIXc

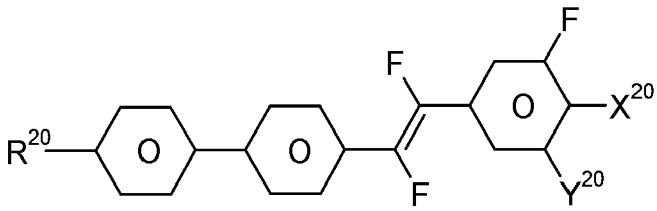

XIXd

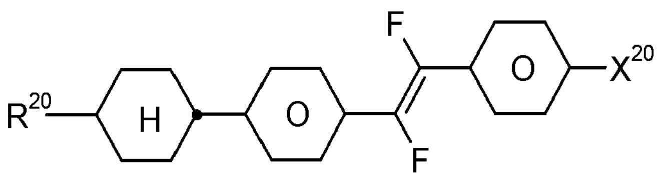

XIXe

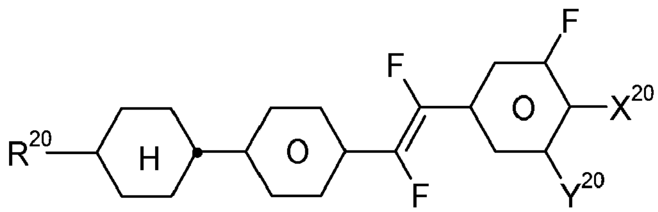

XIXf

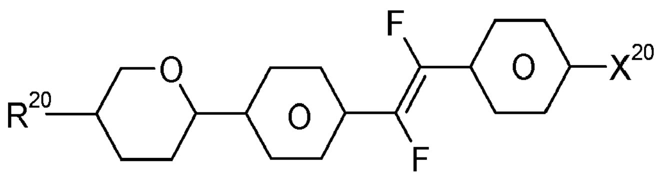

XIXg

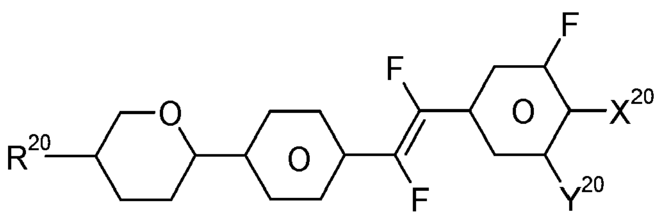

XIXh

wherein $R^{20}$, $X^{20}$ and $Y^{20}$ have the meanings indicated above. $R^{20}$ preferably denotes alkyl having 1 to 6 C atoms. $X^{20}$ preferably denotes F, and $Y^{20}$ is preferably F;

- 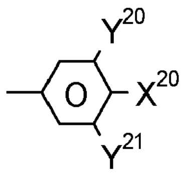

is preferably

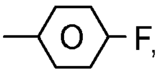, 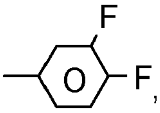, 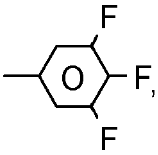,

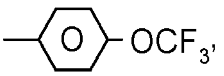, 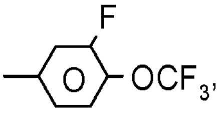, 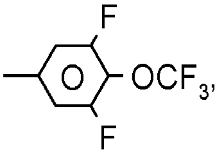, 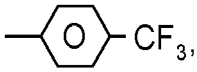,

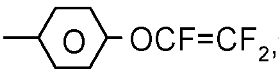, 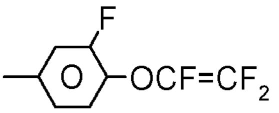, 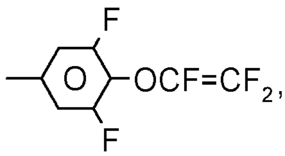,

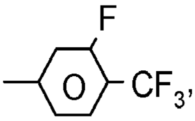, 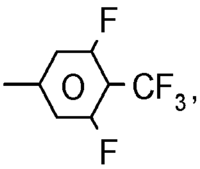, 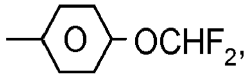, 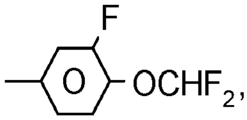,

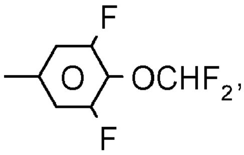, 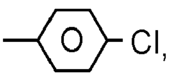, 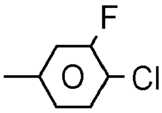 or 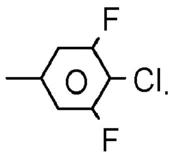.

- $R^{20}$ is straight-chain alkyl or alkenyl having 2 to 6 C atoms;

nn) The medium comprises one or more compounds of the formulae G1 to G4 given above, preferably selected from G1 and G2 wherein alkyl denotes $C_{1-6}$-alkyl, $L^x$ denotes H and X denotes F or Cl. In G2, X particularly preferably denotes Cl.

oo) The medium comprises one or more compounds of the following formulae:

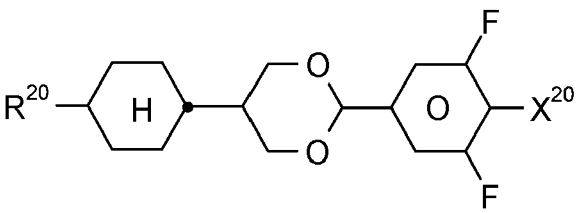

XX

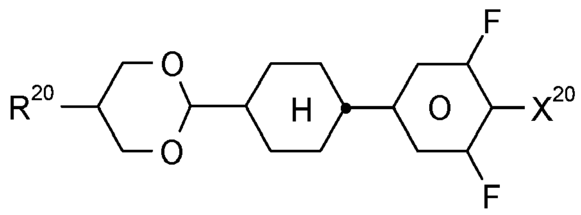

XXI

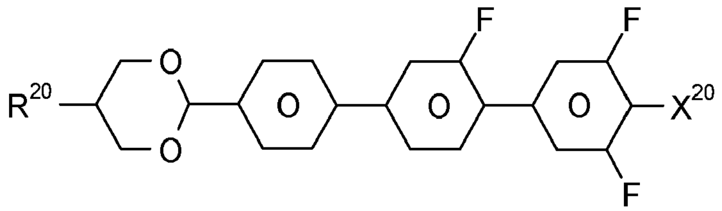

XXII

wherein $R^{20}$ and $X^{20}$ have the meanings indicated above. $R^{20}$ preferably denotes alkyl having 1 to 6 C atoms. $X^{20}$ preferably denotes F. The medium according to the invention particularly preferably comprises one or more compounds of the formula XXII wherein $X^{20}$ preferably denotes F. The compound(s) of the formulae XX - XXII is (are) preferably employed in the mixtures according to the invention in amounts of 1-20% by weight, particularly preferably 1-15% by weight. Particularly preferred mixtures comprise at least one compound of the formula XXII.

pp) The medium comprises one or more compounds of the following pyrimidine or pyridine compounds of the formulae

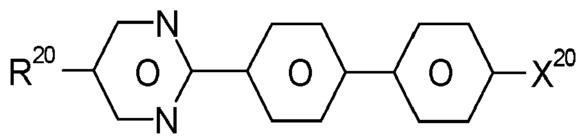

M-1

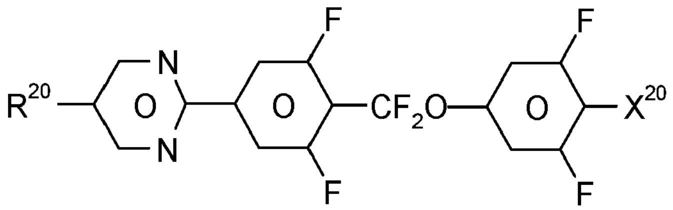

M-2

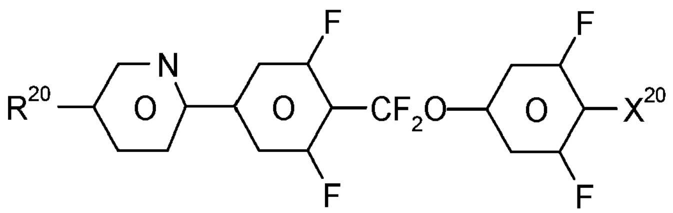

M-3

wherein $R^{20}$ and $X^{20}$ have the meanings indicated above. $R^{20}$ preferably denotes alkyl having 1 to 6 C atoms. $X^{20}$ preferably denotes F. The medium according to the invention particularly preferably comprises one or more compounds of the formula M-1, wherein $X^{20}$ preferably denotes F. The compound(s) of the formulae M-1 - M-3 is (are) preferably employed in the mixtures according to the invention in amounts of 1-20% by weight, particularly preferably 1-15% by weight.

qq) The medium comprises one or more compounds of the following tolane compounds of the formulae

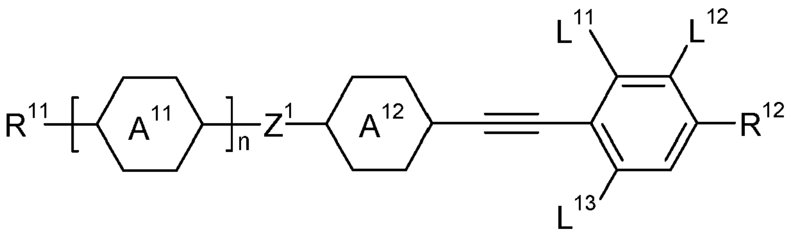 TO

in which

$R^{11}$ and $R^{12}$ identically or differently, denote H, alkyl or alkoxy having 1 to 12 C atoms, or alkenyl, alkenyloxy or alkoxyalkyl having 2 to 12 C atoms, in which one or more $CH_2$-groups may be replaced by

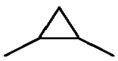, 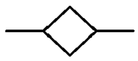, 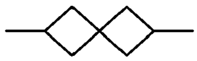,

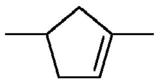 or 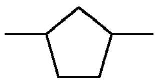,

and in which one or more H atoms may be replaced by fluorine,

$L^{11}$, $L^{12}$, $L^{13}$ independently of one another, denote H, methyl, Cl or F,

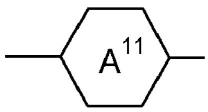

denotes

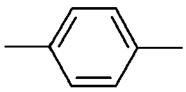, 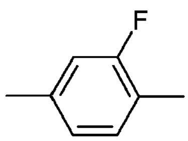, 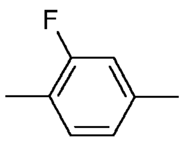,

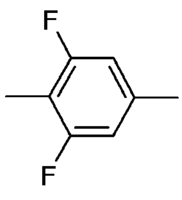, 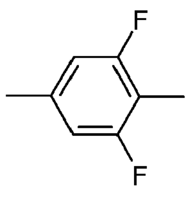,

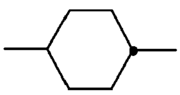, 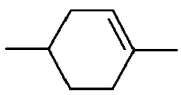, 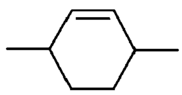,

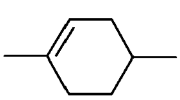, 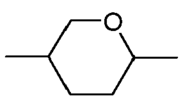, 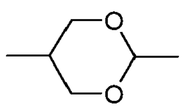,

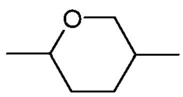,
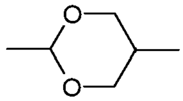

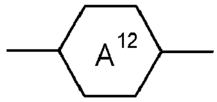

denotes

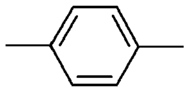, 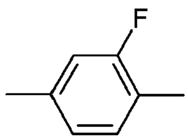, 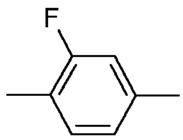,

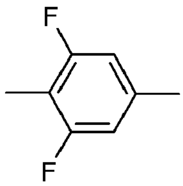 or 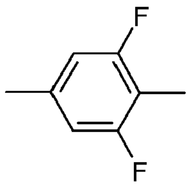,

$Z^1$ denotes denote a single bond, $-CH_2CH_2-$, -CH=CH-, $-CF_2O-$,$-OCF_2-$, $-CH_2O-$, $-OCH_2-$, -COO-, -OCO-, $-C_2F_4-$, -CF=CF-, $-CH=CHCH_2O-$,

n is 0 or 1.

The compounds of formula TO are preferably selected from the group of compounds of formulae TO-1 to TO-3, particularly preferably from formula TO-3

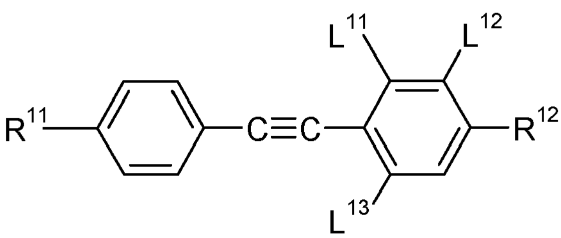

TO-1

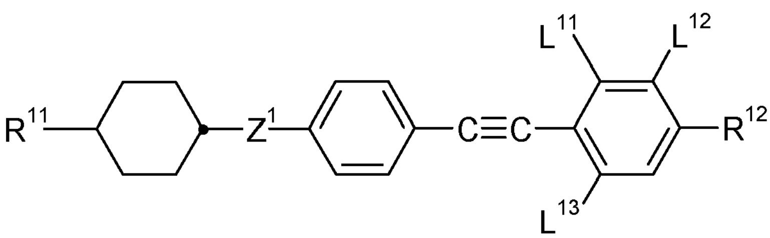

TO-2

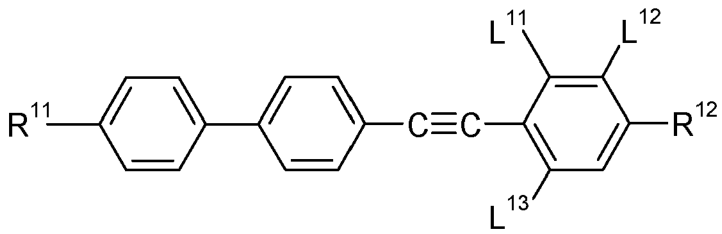

TO-3

in which the occurring groups have the respective meanings given above under formula TO, and in formulae TO-1 and TO-2 preferably

$R^{11}$ is n-alkyl or alkenyl having up to 7 C atoms, most preferably *n*-alkyl having 1 to 5 C atoms, and

$R^{12}$ is *n*-alkoxy or alkenyloxy having 1 to 6 C atoms, most preferably *n*-alkoxy having 1 to 4 C atoms,

and in formula TO-3 preferably

$R^{11}$ is *n*-alkyl or alkenyl having up to 7 C atoms, most preferably *n*-alkyl having 1 to 5 C atoms, and

$R^{12}$ is *n*-alkyl or alkenyl having up to 7 C atoms, most preferably *n*-alkyl having up to 5 C atoms.

The liquid-crystal media according to the present invention preferably comprise one or more compounds of formula TO-1, preferably selected from the group of compounds of formulae TO-1a to TO-1d, preferably of formulae TO-1a and/or TO-1 d, most preferably of formula TO-1a,

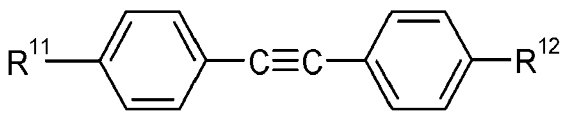

TO-1a

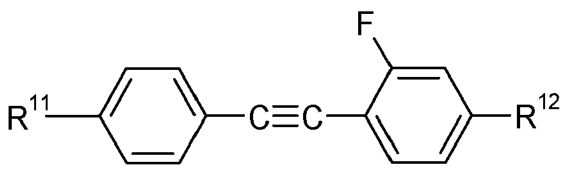

TO-1b

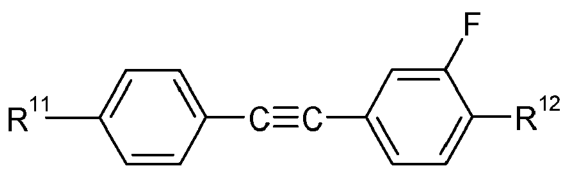

TO-1c

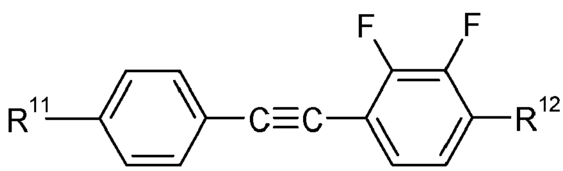

TO-1d

wherein the occurring groups have the meanings given above for TO.

The liquid-crystal media according to the present invention preferably comprise one or more compounds of formula TO-2, preferably selected from the group of compounds of formulae TO-2a to TO-2f, preferably of formulae TO-2a and/or TO-2d, most preferably of formula TO-2d,

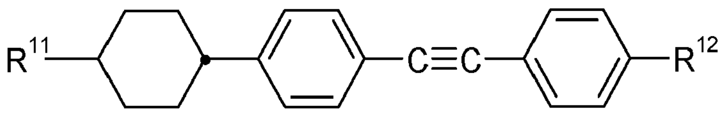

TO-2a

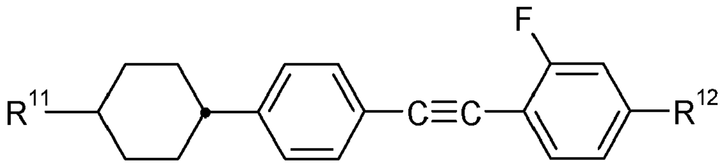

TO-2b

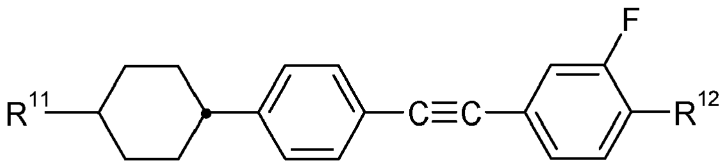

TO-2c

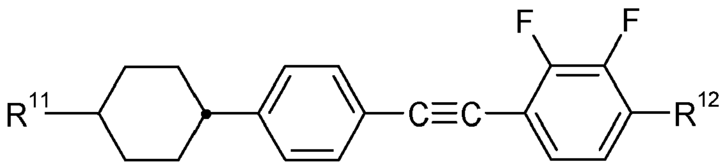

TO-2d

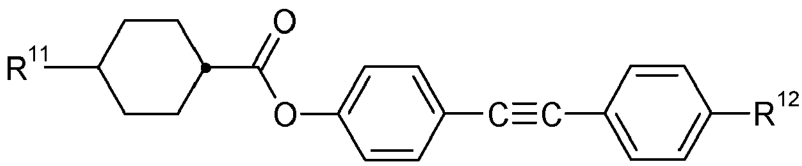

TO-2e

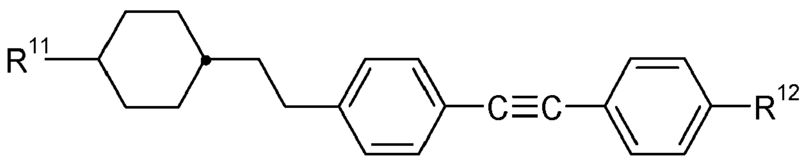

TO-2f

wherein the occurring groups have the respective meanings given above for TO.

The liquid-crystal media according to the present invention preferably comprise one or more compounds of formula TO-3, preferably selected from the group of compounds of formulae TO-3a to TO-3d, preferably of formulae TO-3c and/or TO-3c and/or TO-3d, most preferably of formula TO-3d,

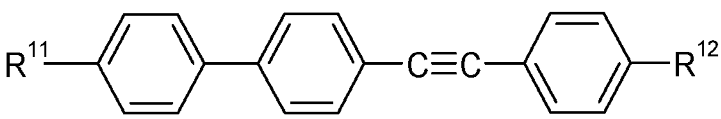

TO-3a

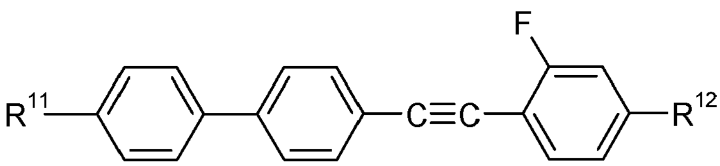

TO-3b

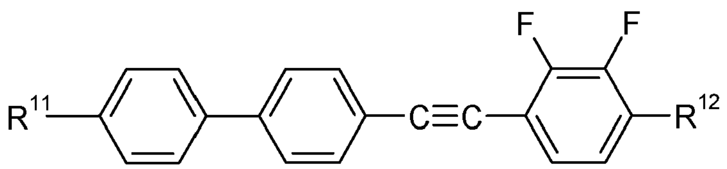

TO-3c

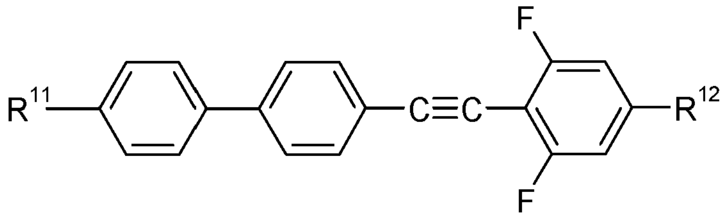

TO-3d

wherein the occurring groups have the respective meanings given above for TO.

Very preferably, the medium comprises one or more compounds of formula TO-3d.

Further preferred embodiments are indicated below:

rr) The medium comprises two or more compounds of the formula XII, in particular of the formula XIIe;

ss) The medium comprises 2-30% by weight, preferably 3-20% by weight, particularly preferably 3-15% by weight, of compounds of the formula XII;

tt) Besides the compounds of the formulae XII, the medium comprises further compounds selected from the group of the compounds of the formulae II, III, IX-XIII, XVII and XVIII;

uu) The proportion of compounds of the formulae II, III, IX-XI, XIII, XVII and XVIII in the mixture as a whole is 40 to 95% by weight;

vv) The medium comprises 10-50% by weight, particularly preferably 12-40% by weight, of compounds of the formulae II and/or III;

ww) The medium comprises 20-70% by weight, particularly preferably 25-65% by weight, of compounds of the formulae IX-XIII;

xx) The medium comprises 4-30% by weight, particularly preferably 5-20% by weight, of compounds of the formula XVII;

yy) The medium comprises 1-20% by weight, particularly preferably 2-15% by weight, of compounds of the formula XVIII;

zz) The medium comprises at least two compounds of the formulae

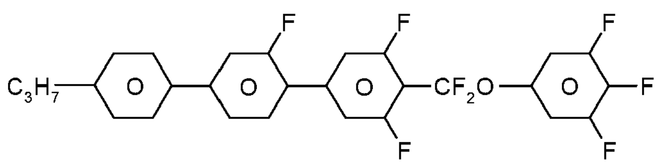

XIIe-1

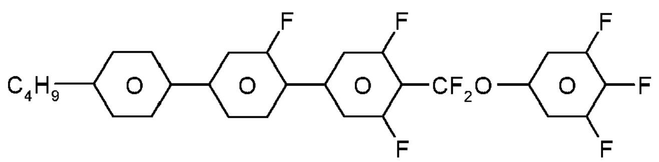

XIIe-2

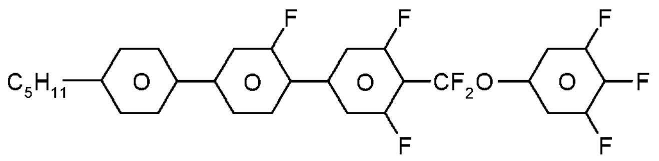

XIIe-3.

Aaa) The medium comprises at least two compounds of the formulae

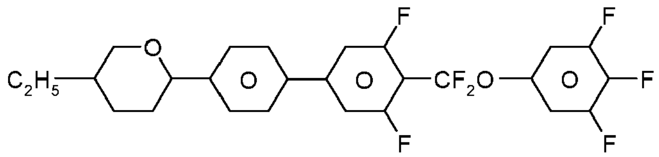

XIIa-1

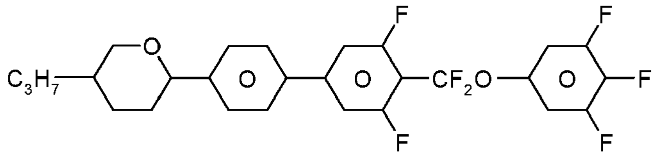

XIIa-2

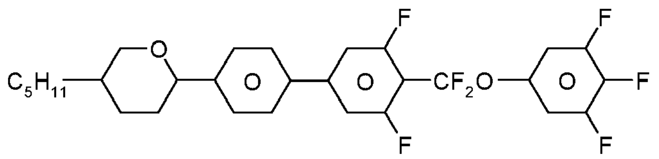

XIIa-3.

Bbb) The medium comprises at least two compounds of the formula XIIa and at least two compounds of the formula XIIe.

ccc) The medium comprises at least one compound of the formula XIIa and at least one compound of the formula XIIe and at least one compound of the formula IIIa.

Ddd) The medium comprises at least two compounds of the formula XIIa and at least two compounds of the formula XIIe and at least one compound of the formula IIIa.

Eee) The medium comprises in total ≥ 25% by weight, preferably ≥ 30% by weight, of one or more compounds of the formula XII.

Fff) The medium comprises ≥ 20% by weight, preferably ≥ 24% by weight, preferably 25-60% by weight, of compounds of the formula ZK3, in particular the compound of the formula ZK3a,

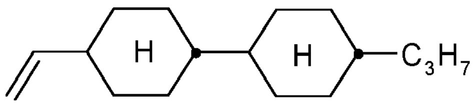

ZK3a

ggg) The medium comprises at least one compound selected from the group of compounds ZK3a, ZK3b and ZK3c, preferably ZK3a, in combination with compound ZK3d

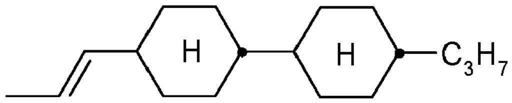

ZK3d

hhh) The medium comprises at least one compound of the formula DPGU-n-F.

iii) The medium comprises at least one compound of the formula CDUQU-n-F.

jjj) The medium comprises at least one compound of the formula CPU-n-OXF.

Kkk) The medium comprises at least one compound of the formula CPGU-3-OT.

Lll) The medium comprises at least one compound of the formula PPGU-n-F.

mmm) The medium comprises at least one compound of the formula PGP-n-m, preferably two or three compounds.

Nnn) The medium comprises at least one compound of the formula PGP-2-2V having the structure

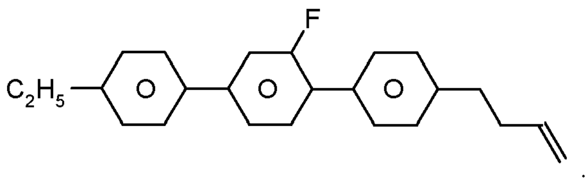

In a preferred embodiment, the liquid crystal mixture according to the present invention further comprises a polymerizable component C) comprising one or more polymerizable compounds.

The polymerizable compounds can be selected from isotropic or mesogenic polymerizable compounds known to the skilled person in the art.

Preferably, the liquid crystal mixture according to the present invention further comprises one or more polymerizable compounds of formula P,

$$P^a\text{-}Sp^a\text{-}(A^p)\text{-}P^b \qquad P$$

wherein the individual radicals have the following meanings:

$P^a$ and $P^b$ denotes each and independently a polymerizable group, preferably selected from the group consisting of acrylate, methacrylate, ethacrylate, fluoroacrylate, vinyloxy, chloroacrylate, oxetane, or epoxide groups

$Sp^a$ denotes a spacer group or a single bond,

$A^p$ is a group selected from the following formulae

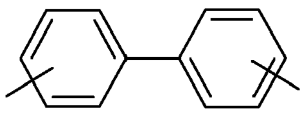

Ar1

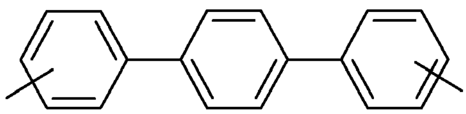

Ar2

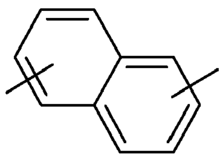

Ar3

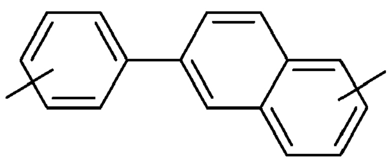

Ar4

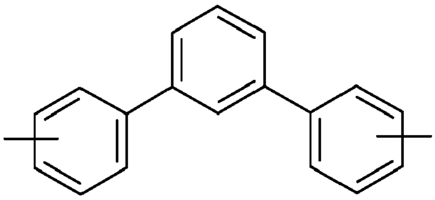

Ar5

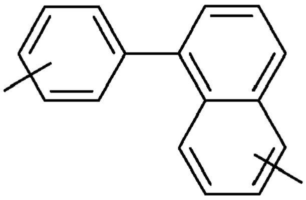

Ar6

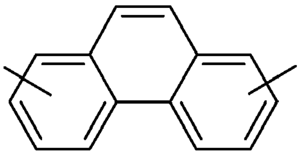

Ar7

which is optionally substituted by one or more groups $L^a$,

$L^a$ is on each occurrence identically or differently F, Cl, -CN, P-Sp-, or straight chain, branched or cyclic alkyl having 1 to 25 C atoms, wherein one or more non-adjacent $CH_2$-groups are optionally replaced by -O-, -S-, -CO-, -CO-O-, -O-CO-, -O-CO-O- in such a manner that O- and/or S-atoms are not directly connected with each other, and wherein one or more H atoms are each optionally replaced by F or Cl, and

Preferred spacer groups $Sp^a$ are selected from the formula Sp"-X", so that the radicals P-Sp- and $P^{a/b}$-$Sp^{a/b}$- conforms to the formulae P-Sp"-X"- and $P^{a/b}$-Sp"-X"-, respectively, wherein

Sp" denotes alkylene having 1 to 20, preferably 1 to 12, C atoms, which is optionally mono- or polysubstituted by F, Cl, Br, I or CN and wherein, in addition, one or more non-adjacent $CH_2$ groups may each be replaced, independently of one another, by -O-, -S-, -NH-, -N($R^0$)-, -Si($R^{00}R^{000}$)-, -CO-, -CO-O-, -O-CO-, -O-CO-O-, -S-CO-, -CO-S-, -N($R^{00}$)-CO-O-, -O-CO-N($R^{00}$)-, -N($R^{00}$)-CO-N($R^{00}$)-, -CH=CH- or -C≡- in such a way that O and/or S atoms are not linked directly to one another, or a single bond,

X" denotes -O-, -S-, -CO-, -CO-O-, -O-CO-, -O-CO-O-, -CO-N($R^{00}$)-, -N($R^{00}$)-CO-, -N($R^{00}$)-CO-N($R^{00}$)-,-$OCH_2$-, -$CH_2O$-, -$SCH_2$-, -$CH_2S$-, -$CF_2O$-, -$OCF_2$-, -$CF_2S$-,-$SCF_2$-, -$CF_2CH_2$-, -$CH_2CF_2$-, -$CF_2CF_2$-, -CH=N-, -N=CH-,-N=N-, -CH=CR$^0$-, -CY$^3$=CY$^4$-, -C≡-, -CH=CH-CO-O-, -O-CO-CH=CH- or a single bond, preferably a single bond

$R^0$, $R^{00}$ and $R^{000}$ each, independently of one another, denote H or alkyl having 1 to 12 C atoms, and

$Y^3$ and $Y^4$ each, identically or differently, denote H, F, Cl or CN.

X" is preferably -O-, -S-, -CO-, -C(O)O-, -OC(O)-, -O-C(O)O-, -CO-NR$^0$-, -NR$^0$-CO-, -NR$^0$-CO-NR$^0$- or a single bond.

Typical spacer groups Sp" are, for example, a single bon, -$(CH_2)_{p1}$-, -$(CH_2CH_2O)_{q1}$-$CH_2CH_2$-, -$CH_2CH_2$-S-$CH_2CH_2$-, -$CH_2CH_2$-NH-$CH_2CH_2$- or -($SiR^{00}R^{000}$-O)$_{p1}$-, wherein p1 is an integer from 1 to 12, q1 is an integer from 1 to 3, and $R^{00}$ and $R^{000}$ have the meanings indicated above.

Particularly preferred groups -Sp"-X"- are a single bond, -$(CH_2)_{p1}$-, -$(CH_2)_{p1}$-O-, -$(CH_2)_{p1}$-O-CO-, -$(CH_2)_{p1}$-O-CO-O-, wherein p1 and q1 have the meanings indicated above.

Particularly preferred groups Sp" are, for example, in each case straight-chain methylene, ethylene, propylene, butylene, pentylene, hexylene, heptylene, octylene, nonylene, decylene, undecylene, dodecylene, octadecylene, ethyleneoxyethylene, methyleneoxybutylene, ethylenethioethylene, ethylene-N-methyliminoethylene, 1-methylalkylene,

ethenylene, propenylene and butenylene.

The compounds of formula P and subformulae thereof used in the present invention are prepared by methods known per se, as described in the literature (for example in the standard works, such as Houben-Weyl, Methoden der organischen Chemie [Methods of Organic Chemistry], Georg-Thieme-Verlag, Stuttgart), to be precise under reaction conditions which are known and suitable for the said reactions. Use can also be made here of variants known per se, which are not mentioned here in greater detail.

The amount of one, two, three or more polymerizable compounds of formula P in the LC mixture as a whole is preferably ranging from 0.1 to 5 %, more preferably ranging from 0.3 to 3 %, especially ranging from 0.5 to 2 %.

The polymerizable compounds of formulae I and P are also suitable for polymerisation without an initiator, which is associated with considerable advantages, such as, for example, lower material costs and, in particular, reduced contamination of the LC medium by possible residual amounts of the initiator or degradation products thereof. The polymerisation can thus also be carried out without addition of an initiator. The LC medium thus, in a preferred embodiment, comprises no polymerisation initiator.

LC medium as a whole may also comprise one or more stabilisers in order to prevent undesired spontaneous polymerisation of the polymerizable compounds, for example during storage or transport. Suitable types and amounts of stabilisers are known to the person skilled in the art and are described in the literature. Particularly suitable are, for example, the commercially available stabilisers from the Irganox® series (BASF SE), such as, for example, Irganox® 1076. If stabilisers are employed, their proportion, based on the total amount of the polymerizable compounds as a whole, is preferably 10 - 10,000 ppm, particularly preferably 50 - 1000 ppm.

In another preferred embodiment of the present invention the LC medium contains one or more stabilisers selected from the the group consisting of the following formulae

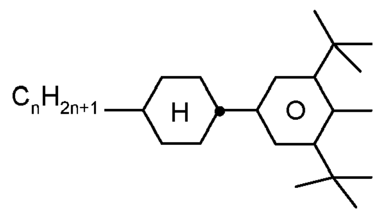

S1

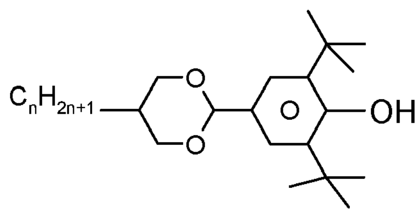

S2

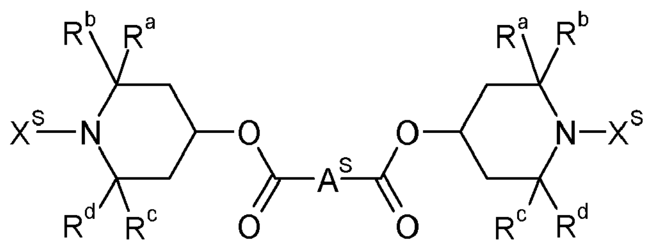

S3

wherein the individual radicals, independently of each other and on each occurrence identically or differently, have the following meanings

$R^{a-d}$ straight-chain or branched alkyl with 1 to 10, preferably 1 to 6, very preferably 1 to 4 C atoms, most preferably methyl,

$X^S$ H, $CH_3$, OH or O•,

$A^S$ straight chain, branched or cyclic alkylene with 1 to 20 C atoms which is optionally substituted,

n an integer from 1 to 6, preferably 3.

Preferred stabilizers of formula S3 are selected from formulaS3A

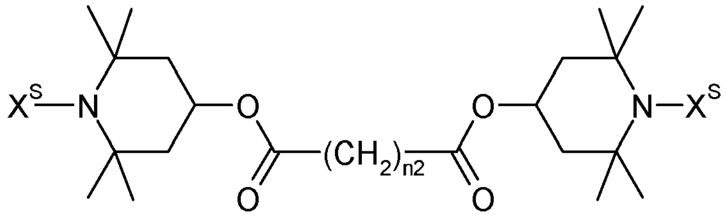

S3A

wherein n2 is an integer from 1 to 12, and wherein one or more H atoms in the group $(CH_2)_{n2}$ are optionally replaced by methyl, ethyl, propyl, butyl, pentyl or hexyl.

Very preferred stabilizers are selected from the group consisting of the following formulae

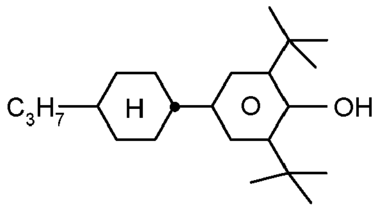

S1-1

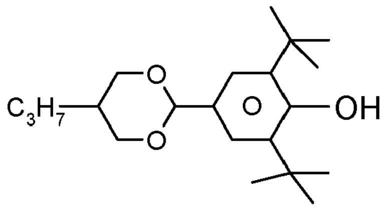

S2-1

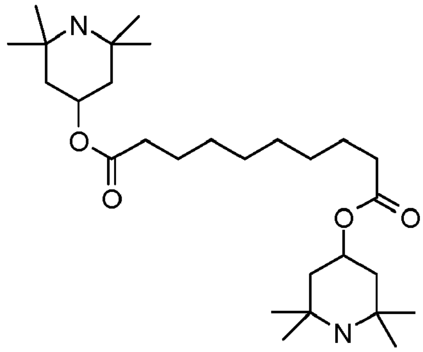

S3-1

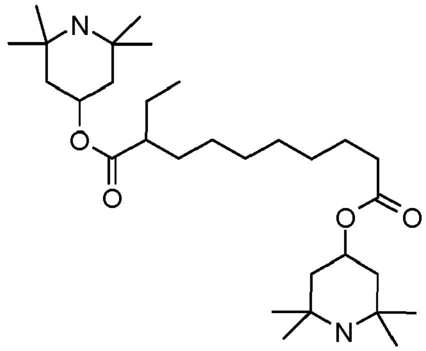

S3-2

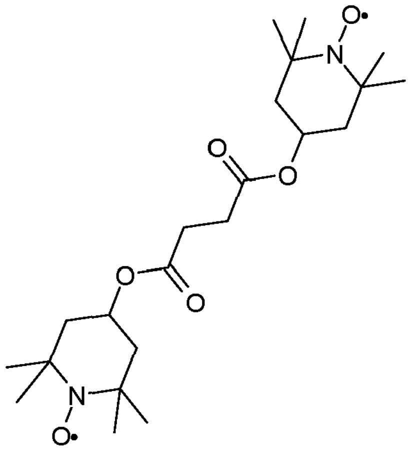

S3-3

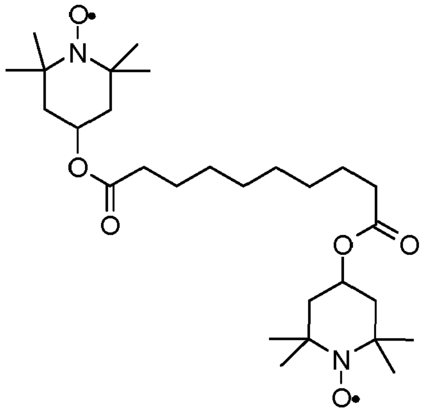

S3-4

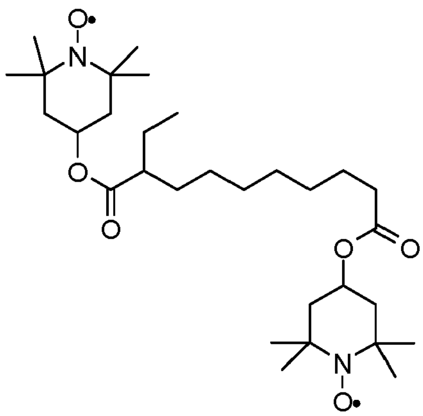

S3-5

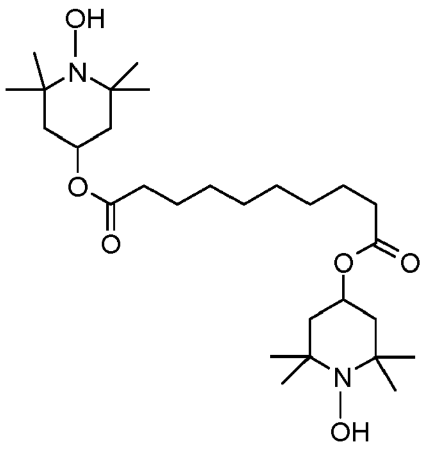

S3-6

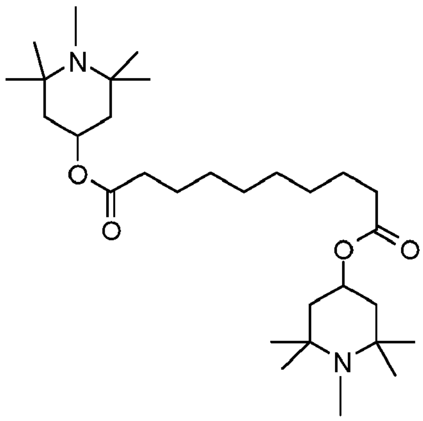

S3-7

In a preferred embodiment the liquid-crystalline medium comprises one or more stabilisers selected from the group consisting of formulae S1-1, S2-1, S3-1, S3-1 and S3-3.

The media are prepared in a manner conventional per se. In general, the components are dissolved in one another, preferably at elevated temperature.

The present invention further relates to a process for the fabrication of liquid crystal device comprising at least the steps of:

- providing a first substrate and/or a second substrate with an electrode layer having a surface roughness ≤ 10 nm RMS as determined by AFM,
- assembling a cell,
- interposing a liquid crystal mixture as given above, between the first substrate and the second substrate,
- irradiating the liquid crystal mixture with linearly polarised light causing photoalignment of the liquid crystal,
- curing the polymerizable compounds of the liquid crystal mixture by irradiation with ultraviolet light or visible light having a wavelength of 450nm or below.

In one embodiment of the present invention the liquid crystal medium is injected between the first and second substrate or is filled into the cell by capillary force after combining the first and second substrate. In an alternative embodiment, the liquid crystal composition may be interposed between the first and second substrates by combining the second substrate to the first substrate after loading the liquid crystal composition on the first substrate. Preferably, the liquid crystal is dispensed dropwise onto a first substrate in a process known as "one drop filling" (ODF) process, as disclosed in for example JPS63-179323 and JPH10-239694 or using the Ink Jet Printing (IJP) method.

In a preferred embodiment, the process according to the invention contains a process step where the liquid crystal inside the device cell is allowed to rest for a period of time in order to evenly redistribute the liquid crystal medium inside the cell (herein referred to as "annealing").

However, it is likewise preferred that the annealing step is combined with a previous step, such as edge sealant pre-curing. In which case a 'separate' annealing step may not be necessary at all.

To produce the devices according to the present invention, the photoreactive mesogen of formula I is preferably

allowed to redistribute in the cell. After filling and assembly, the cell is annealed for a time between 1 min and 3h, preferably between 2 min and 1h and most preferably between 5 min and 30 min. The annealing is preferably performed at room temperature.

In an alternative embodiment, the annealing is performed at elevated temperature, preferably at above 20°C and below 140°C, more preferably above 40°C and below 100°C and most preferably above 50°C and below 80°C.

In a preferred embodiment, one or more of the process steps of filling the cell, annealing, photoalignment and curing of the polymerizable compound is performed at a temperature above the clearing point of the liquid crystal host mixture.

During the photoalignment of the liquid crystal inside the liquid crystal panel, anisotropy is induced by exposing the cell or the liquid crystal layer to linearly polarised light.

In a preferred embodiment of the present invention one or more compounds of formula I, are photoaligned in a first step using linearly polarised light and in a second step further cured using linearly polarized or unpolarised UV light. In the second step all polymerizable compounds are also further cured.

In another preferred embodiment, the linearly polarised light applied according to the inventive process is ultraviolet light which enables simultaneous photoalignment and photocuring of one or more compounds of formula I, and photocuring of the polymerizable compounds of formula P.

Photoalignment of the photoreactive compounds of formula I and curing of the polymerizable groups of compounds of formula I and the curing of the optional polymerizable compounds of formula P can be performed simultaneously or stepwise, preferably stepwise. In case the process is split into different steps, the individual steps can be performed at the same temperature or at different temperatures.

After the photoalignment and curing step(s) a so-called "post-curing" step can optionally be performed by irradiation with UV-light and/or visible light (both either linearly or unpolarised) at reduced temperature in order to remove unreacted polymerizable compounds. The post-curing is preferably performed at above 0°C and below the clearing point of the utilized LC mixture, preferably 20°C and below 60°C°C, and most preferably above 20°C and below 40°C.

The polymerizable compounds are optionally polymerised or crosslinked (if a polymerizable compound contains two or more polymerizable groups) with the application of an electrical field. The polymerisation can be carried out in one or more steps.

The devices according to the present invention can be used in various electro-optic applications such as for example applications for augmented reality or virtual reality.

Consequently, the invention further relates to the use of a device according to the present invention in an electro-optical device and to an electro-optical device, preferably for augmented reality or virtual reality applications, comprising the device according to present invention as such.

Such electro-optical device includes but is not limited to head mounted displays or eye-ware, preferably goggles or contact lenses.

Unless the context clearly indicates otherwise, as used herein plural forms of the terms herein are to be construed as including the singular form and vice versa.

The parameter ranges indicated in this application all include the limit values including the maximum permissible errors as known by the expert. The different upper and lower limit values indicated for various ranges of properties in combination with one another give rise to additional preferred ranges.

Throughout this application, the following conditions and definitions apply, unless expressly stated otherwise. All concentrations are quoted in per cent by weight and relate to the respective mixture as a whole, all temperatures are quoted in degrees Celsius and all temperature differences are quoted in differential degrees. All physical properties are determined in accordance with "Merck Liquid Crystals, Physical Properties of Liquid Crystals", Status Nov. 1997, Merck KGaA, Germany, and are quoted for a temperature of 20°C, unless expressly stated otherwise. The optical anisotropy ($\Delta n$) is determined at a wavelength of 589.3 nm. The dielectric anisotropy ($\Delta\varepsilon$) is determined at a frequency of 1 kHz or if explicitly stated at a frequency 19 GHz. The threshold voltages, as well as all other electro-optical properties, are determined using test cells produced at Merck KGaA, Germany. The test cells for the determination of $\Delta\varepsilon$ have a cell thickness of approximately 20 $\mu$m. The electrode is a circular ITO electrode having an area of 1.13 $cm^2$ and a guard ring. The orientation layers are SE-1211 from Nissan Chemicals, Japan, for homeotropic orientation ($\varepsilon$ | |) and polyimide AL-1054 from Japan Synthetic Rubber, Japan, for homogeneous orientation ($\varepsilon\perp$). The capacitances are determined using a Solatron 1260 frequency response analyser using a sine wave with a voltage of 0.3 $V_{rms}$. The light used in the electro-optical measurements is white light. A set-up using a commercially available DMS instrument from Autronic-Melchers, Germany, is used here.

Throughout the description and claims of this specification, the words "comprise" and "contain" and variations of the words, for example "comprising" and "comprises", mean "including but not limited to", and are not intended to (and do not) exclude other components. On the other hand, the word "comprise" also encompasses the term "consisting of" but is not limited to it.

It will be appreciated that many of the features described above, particularly of the preferred embodiments, are

inventive in their own right and not just as part of an embodiment of the present invention. Independent protection may be sought for these features in addition to, or alternative to any invention presently claimed.

Throughout the present application it is to be understood that the angles of the bonds at a C atom being bound to three adjacent atoms, e.g. in a C=C or C=O double bond or e.g. in a benzene ring, are 120° and that the angles of the bonds at a C atom being bound to two adjacent atoms, e.g. in a C=C or in a C=N triple bond or in an allylic position C=C=C are 180°, unless these angles are otherwise restricted, e.g. like being part of small rings, like 3-, 5- or 5-atomic rings, notwithstanding that in some instances in some structural formulae these angles are not represented exactly.

It will be appreciated that variations to the foregoing embodiments of the invention can be made while still falling within the scope of the invention. Alternative features serving the same, equivalent or similar purpose may replace each feature disclosed in this specification, unless stated otherwise. Thus, unless stated otherwise, each feature disclosed is one example only of a generic series of equivalent or similar features.

All the features disclosed in this specification may be combined in any combination, except combinations where at least some of such features and/or steps are mutually exclusive. In particular, the preferred features of the invention are applicable to all aspects of the invention and may be used in any combination. Likewise, features described in non-essential combinations may be used separately (not in combination).

Without further elaboration, it is believed that one skilled in the art can, using the preceding description, utilize the present invention to its fullest extent. The following examples are, therefore, to be construed as merely illustrative and not limitative of the remainder of the disclosure in any way whatsoever.

The following abbreviations are used to illustrate the liquid crystalline phase behavior of the compounds: K = crystalline; N = nematic; N2 = Twist-Bend nematic; S = smectic; Ch = cholesteric; I = isotropic; Tg = glass transition. The numbers between the symbols indicate the phase transition temperatures in °C.

In the present application and especially in the following examples, the structures of the liquid crystal compounds are represented by abbreviations, which are also called "acronyms". The transformation of the abbreviations into the corresponding structures is straightforward according to the following three tables A to C.

All groups $C_nH_{2n+1}$, $C_mH_{2m+1}$, and $C_lH2_{l+1}$ are preferably straight chain alkyl groups with n, m and l C-atoms, respectively, all groups $C_nH_{2n}$, $C_mH_{2m}$ and $C_lH_{2l}$ are preferably $(CH_2)_n$, $(CH_2)_m$ and $(CH_2)_l$, respectively and -CH=CH- preferably is *trans*- respectively *E* vinylene.

Table A lists the symbols used for the ring elements, table B those for the linking groups and table C those for the symbols for the left hand and the right-hand end groups of the molecules.

**Table A: Ring Elements**

| | | | |
|---|---|---|---|
| C | 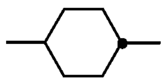 | P | 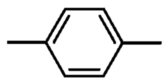 |
| D | 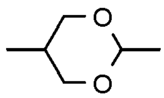 | DI | 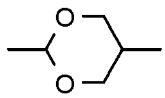 |
| A | 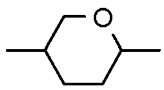 | AI | 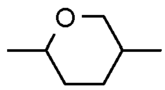 |
| G | 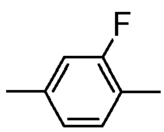 | GI | 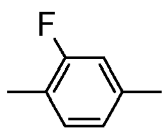 |
| G(Cl) | 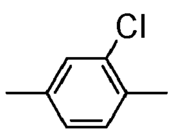 | GI(Cl) | 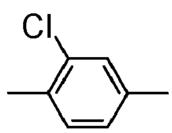 |
| G(1) | 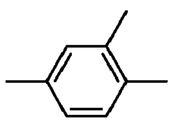 | GI(1) | 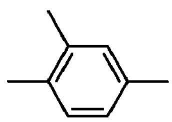 |

(continued)

U 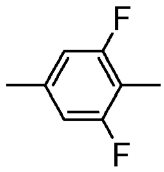

UI 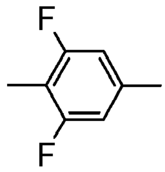

Y 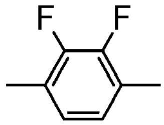

M 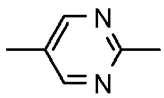

MI 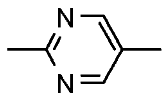

N 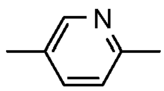

NI 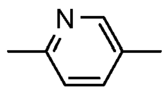

np 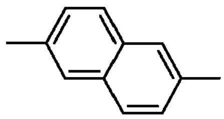

n3f 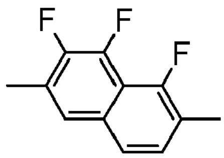

n3fI 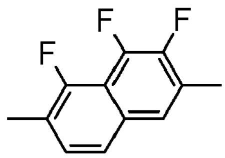

th 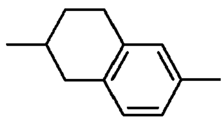

thI 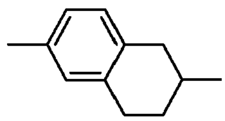

th2f 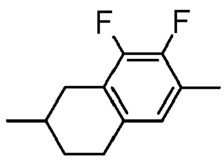

th2fI 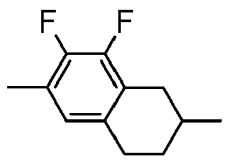

o2f 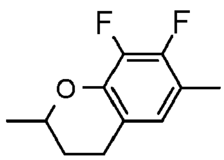

o2fI 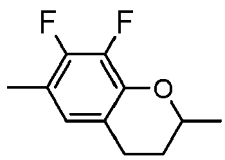

dh 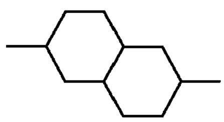

K 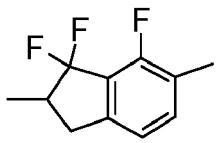

KI 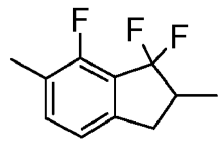

L 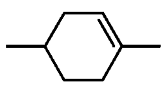

LI 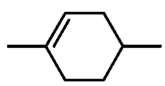

(continued)

| | | | |
|---|---|---|---|
| **F** | 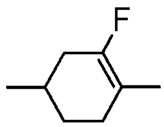 | **FI** | 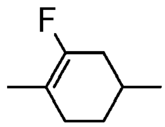 |

**Table B: Linking Groups**

| | | | |
|---|---|---|---|
| **n** | $(-CH_2-)_n$ | "n" is an integer except 0 and 2 | |
| **E** | $-CH_2-CH_2-$ | | |
| **V** | -CH=CH- | | |
| **T** | -C≡C- | | |
| **w** | $-CF_2-CF_2-$ | | |
| **B** | -CF=CF- | | |
| **Z** | -CO-O- | **ZI** | -O-CO- |
| **X** | -CF=CH- | XI | -CH=CF- |
| **O** | $-CH_2-O-$ | **OI** | $-O-CH_2-$ |
| **Q** | $-CF_2-O-$ | **QI** | $-O-CF_2-$ |

**Table C: End Groups**

| **Left hand side, used alone or in combination with others** | | **Right hand side, used alone or in combination with others** | |
|---|---|---|---|
| **-n-** | $C_nH_{2n+1}-$ | **-n** | $-C_nH_{2n+1}$ |
| **-nO-** | $C_nH_{2n+1}-O-$ | **-nO** | $-O-C_nH_{2n+1}$ |
| **-V-** | $CH_2=CH-$ | **-V** | $-CH=CH_2$ |
| **-nV-** | $C_nH_{2n+1}-CH=CH-$ | **-nV** | $-C_nH_{2n}-CH=CH_2$ |
| **-Vn-** | $CH_2=CH-\ C_nH_{2n}-$ | **-Vn** | $-CH=CH-C_nH_{2n+1}$ |
| **-nVm-** | $C_nH_{2n+1}-CH=CH-C_mH_{2m}-$ | **-nVm** | $-C_nH_{2n}-CH=CH-C_mH_{2m+1}$ |
| **-N-** | N=C- | **-N** | -C=N |
| **-S-** | S=C=N- | **-S** | -N=C=S |
| **-F-** | F- | **-F** | -F |
| **-CL-** | Cl- | **-CL** | -Cl |
| **-M-** | $CFH_2-$ | **-M** | $-CFH_2$ |
| **-D-** | $CF_2H-$ | **-D** | $-CF_2H$ |
| **-T-** | $CF_3-$ | **-T** | $-CF_3$ |
| **-MO-** | $CFH_2O-$ | **-OM** | $-OCFH_2$ |
| **-DO-** | $CF_2HO-$ | **-OD** | $-OCF_2H$ |
| **-TO-** | $CF_3O-$ | **-OT** | $-OCF_3$ |
| **-A-** | H-C=C- | **-A** | -C=C-H |
| **-nA-** | $C_nH_{2n+1}-C≡C-$ | **-An** | $-C≡C-C_nH_{2n+1}$ |
| **-NA-** | N=C-C=C- | **-AN** | -C=C-C=N |
| **Left hand side, used in combination with others only** | | **Right hand side, used in combination with others only** | |
| **-...n...-** | $-C_nH_{2n}-$ | **-...n...** | $-C_nH_{2n}-$ |
| **-...M...-** | -CFH- | **-...M...** | -CFH- |
| **-...D...-** | $-CF_2-$ | **-...D...** | $-CF_2-$ |
| **-...V...-** | -CH=CH- | **-...V...** | -CH=CH- |
| **-...Z...-** | -CO-O- | **-...Z...** | -CO-O- |
| **-...ZI...-** | -O-CO- | **-...ZI...** | -O-CO- |
| **-...K...-** | -CO- | **-...K...** | -CO- |
| **-...W...-** | -CF=CF- | **-...W...** | -CF=CF- |

wherein n und m each are integers and three points "..." indicate a space or other symbols of this table.

**Examples**

The invention will now be described in more detail by reference to the following working examples, which are illustrative only, and do not limit the scope of the invention.

Utilized photoreactive compounds

RM-1

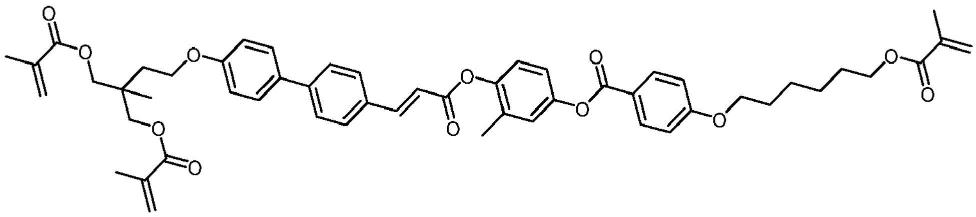

Utilized nematic host mixtures

The nematic LC host mixture are prepared as indicated in the following tables:

| **M-1** | | | |
|---|---|---|---|
| CC-3-V | 36.0 | cl.p. [°C]: | 78 |
| CC-3-V1 | 5.0 | Δn [589 nm, 20°C]: | 0.1095 |
| CCP-V-1 | 8.0 | $n_e$ [589 nm, 20°C]: | 1.5907 |
| PGP-2-2V | 3.0 | $n_o$ [589 nm, 20°C]: | 1.4812 |
| CCQU-3-F | 9.5 | Δε [1 kHz, 20°C]: | 12.9 |
| PUQU-3-F | 8.5 | ε‖ [1 kHz, 20°C]: | 16.6 |
| APUQU-2-F | 5.0 | ε⊥ [1 kHz, 20°C]: | 3.7 |
| APUQU-3-F | 8.0 | | |
| PGUQU-3-F | 4.0 | | |
| PGUQU-4-F | 8.0 | | |
| PGUQU-5-F | 5.0 | | |
| Σ | 100.0 | | |

**Example 1:**

Conventional ITO coated glass substrates for use in LCD production is deliberately made to be 'rough' on the nano-scale in order to improve adhesion of the polyimide layer. and typically has a surface surface roughness variation of ~15nm RMS. The ITO roughness can be controlled by varying the sputtering conditions and annealing what leads to a typical surface roughness variation of ~10nm RMS, which is confirmed in this example by AFM.

Two of these substrates are constructed into cells (d=~4μm), filled with a homgenized mixture comprising 0.7% w/w RM-1 and 99.3 % w/w of M1 using capillary action at room temp., annealed for 1 h at 100°C and then irradiated at the same temperature with linearly polarised UV light (35 mW/cm2, Omnicure S2000 Mercury Lamp) for 60 seconds. The cell is cooled to room temperature and the alignment quality is studied between crossed polarisers on a light box.

**Example 2:**

A Conventional ITO coated glass substrates for use in OLED production exhibits surface roughness variation of ~2nm RMS, which is confirmed in this example by AFM.

Two of these substrates are constructed into cells (d=~4μm), filled with a homgenized mixture comprising 0.7% w/w RM-1 and 99.3 % w/w of M1 using capillary action at room temp., annealed for 1 h at 100°C and then irradiated at the same temperature with linearly polarised UV light (35 mW/cm2, Omnicure S2000 Mercury Lamp) for 60 seconds. The cell is cooled to room temperature and the alignment quality is studied between crossed polarisers on a light box.

**Summary**

From a comparison of both examples It is observed that the dark state quality is significantly improved utilizing the substrates of example 2.

**Claims**

1. Device comprising at least two opposing transparent substrates, at least one liquid crystal switching layer sandwiched between said opposing substrates, comprising one or more nematogenic compounds, an electrode structure provided on one or both of the opposing substrates, **characterized in that** the electrode structure comprises one or more electrode layers provided on one or both inner sides of the opposing substrates having a surface roughness ≤ 10 nm RMS.

2. Device according to claim 1, comprising two electrode layers each provided on the inner sides of the opposing substrates having a surface roughness ≤ 10 nm RMS.

3. Device according to claim 1 or 2, wherein the LC switching layer comprises a polymer obtainable from one or more polymerizable photoreactive mesogens of formula I,

$$R^{11}\text{-}Sp^{11}\text{-}X^{11}[\text{-}A\text{-}Z]_0\text{-}A^{11}\text{-}CY^{11}\text{=}CY^{12}[\text{-}C\text{=}O]_x[\text{-}O]_y\text{-}A[\text{-}Z\text{-}A]_p\text{-}X^{21}\text{-}Sp^{21}\text{-}R^{21} \qquad \mathbf{I}$$

wherein

$A^{11}$ denotes a radical selected from the following groups: a) a group consisting of 1,4-phenylene and 1,3-phenylene, wherein, in addition, one or two CH groups are optionally replaced by N and wherein, in addition, one or more H atoms are optionally replaced by L, b) a group selected from the group consisting of

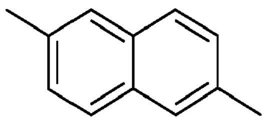 , 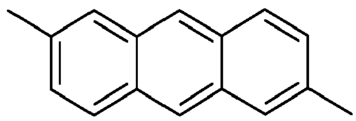 ,

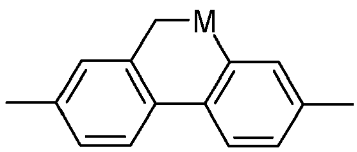 , 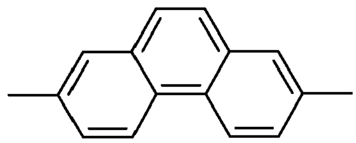 ,

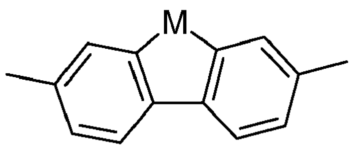 , 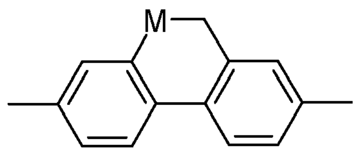 ,

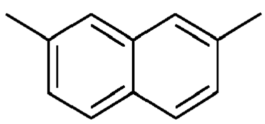 , 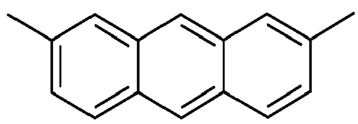 ,

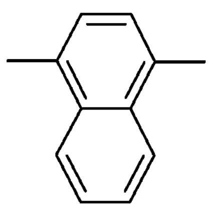 , 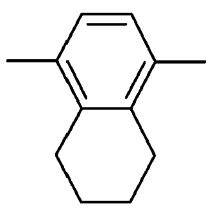 ,

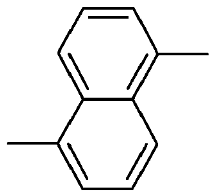

,

where, in addition, one or more H atoms in these radicals are optionally replaced by L, and/or one or more double bonds are optionally replaced by single bonds, and/or one or more CH groups are optionally replaced by N, A have each, independently of one another, in each occurrence one of the meanings for $A^{11}$ or a) group consisting of trans-1,4-cyclohexylene, 1,4-cyclohexenylene, wherein, in addition, one or more non-adjacent $CH_2$ groups are optionally replaced by -O-and/or -S- and wherein, in addition, one or more H atoms are optionally replaced by F, or b) a group consisting of tetrahydropyran-2,5-diyl, 1,3-dioxane-2,5-diyl, tetrahydrofuran-2,5-diyl, cyclobutane-1,3-diyl, piperidine-1,4-diyl, thiophene-2,5-diyl and selenophene-2,5-diyl, each of which may also be mono- or polysubstituted by L,

L on each occurrence, identically or differently, denotes -OH, -F, -Cl, -Br, -I, -CN, $-NO_2$, $SF_5$, -NCO, -NCS, -OCN, -SCN, $-C(=O)N(R^z)_2$, $-C(=O)R^z$, $-N(R^z)_2$, optionally substituted silyl, optionally substituted aryl having 6 to 20 C atoms, or straight-chain or branched or cyclic alkyl, alkoxy, alkylcarbonyl, alkoxycarbonyl, alkylcarbonyloxy or alkoxycarbonyloxy having 1 to 25 C atoms, or $X^{21}$-$Sp^{21}$-$R^{21}$,

M denotes -O-, -S-, $-CH_2-$, $-CHR^z-$ or $-CR^yR^z-$,

$R^y$ and $R^z$ each, independently of one another, denote H, CN, F or alkyl having 1-12 C atoms, wherein one or more H atoms are optionally replaced by F,

$Y^{11}$ and $Y^{12}$ each, independently of one another, denote H, F, phenyl or optionally fluorinated alkyl having 1-12 C atoms,

Z denotes, independently of each other, in each occurrence, a single bond, -COO-, -OCO-, -O-CO-O-, -OCH2-, $-CH_2O-$, $-OCF_2-$, $-CF_2O-$, $-(CH_2)_n-$, $-CF_2CF_2-$, -CH=CH-, -CF=CF-, -CH=CH-COO-, -OCO-CH=CH-, -CO-S-, -S-CO-, -CS-S-, -S-CS-, -S-CSS- or -C≡C-,

n denotes an integer between 2 and 8,

o and p denote each and independently 0, 1 or 2,

x and y denote each and independently 0 or 1, however under the condition that if x denotes 0, y cannot denote 1.

$X^{11}$ and $X^{21}$ denote independently from one another, in each occurrence a single bond, -CO-O-, -O-CO-, -O-COO-, -O-, -CH=CH-, -C=C-, $-CF_2-O-$, $-O-CF_2-$, $-CF_2-CF_2-$, $-CH_2-O-$, $-O-CH_2-$, -CO-S-, -S-CO-, -CS-S-, -S-CS-, -S-CSS- or -S-,

$Sp^{11}$ and $Sp^{21}$ denote each and independently, in each occurrence a single bond or a spacer group comprising 1 to 20 C atoms, wherein one or more non-adjacent and non-terminal $CH_2$ groups are optionally replaced by -O-, -S-, -NH-, $-N(CH_3)-$, -CO-, -O-CO-, -S-CO-, -O-COO-, -CO-S-, -CO-O-, $-CF_2-$, $-CF_2O-$ $-OCF_2-$ -C(OH)-, -CH(alkyl)-, -CH(alkenyl)-, -CH(alkoxyl)-, -CH(oxaalkyl)-, -CH=CH- or -C≡C-, however in such a way that no two O-atoms are adjacent to one another and no two groups selected from -O-CO-, -S-CO-, -O-COO-, -CO-S-, -CO-O- and -CH=CH- are adjacent to each other,

$R^{11}$ denotes P,

$R^{21}$ denotes P, halogen, CN, optionally fluorinated alkyl or alkenyl with up to 15 C atoms in which one or more non-adjacent $CH_2$-groups are optionally replaced by -O-, -S-, -CO-, -C(O)O-, -O-C(O)-, O-C(O)-O-,

P each and independently from another in each occurrence a polymerizable group.

**4.** Device according to one or more of claims 1 to 3, the LC switching layer comprises one or more nematogenic compounds selected from the following formulae:

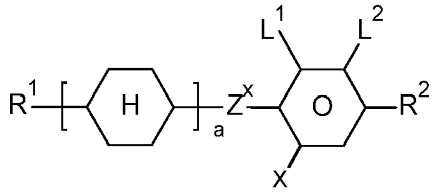

CY

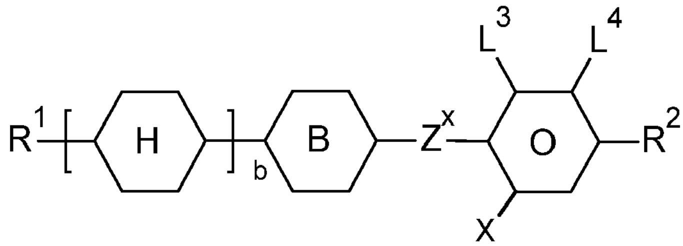

PY

wherein

a is 1 or 2,
b is 0 or 1,

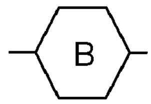

denotes

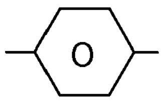

or

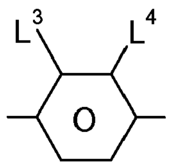

$R^1$ and $R^2$ each, independently of one another, denote alkyl having 1 to 12 C atoms, where, in addition, one or more non-adjacent $CH_2$ groups are optionally replaced by -O-, -CH=CH-, -CO-, -O-CO- or -CO-O- in such a way that O atoms are not linked directly to one another,
X denotes H or $CH_3$,
$Z^x$ denotes -CH=CH-, $-CH_2O-$, $-OCH_2-$, $-CF_2O-$,$-OCF_2-$, -O-, $-CH_2-$, $-CH_2CH_2-$ or a single bond,
$L^{1-4}$ each, independently of one another, denote F, Cl, $OCF_3$, $CF_3$, $CH_3$, $CH_2F$, $CHF_2$.

**5.** Device according to one or more of claims 1 to 4, wherein the LC switching layer comprises one or more nematogenic compounds selected from the following formulae:

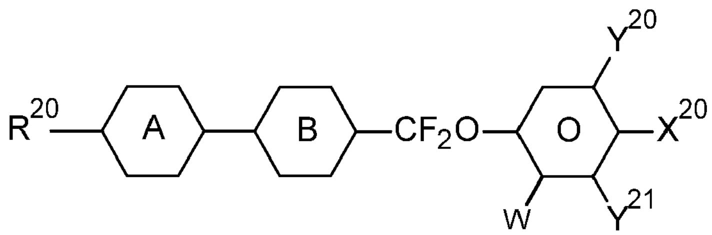

II

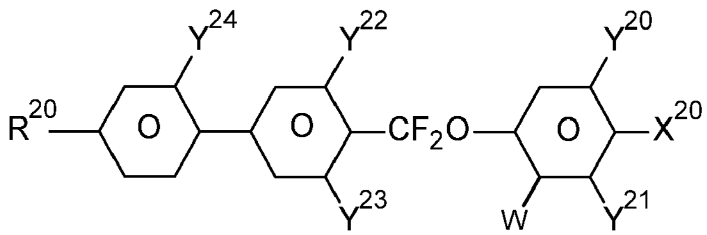

III

wherein

$R^{20}$ each, identically or differently, denote a halogenated or unsubstituted alkyl or alkoxy radical having 1 to 15 C atoms, where, in addition, one or more $CH_2$ groups in these radicals are optionally replaced, independently of one another, by -C≡C-, $-CF_2O-$ -CH=CH-, 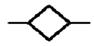 , 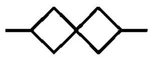 , -O-, -CO-O- or -O-CO- in such a way that O atoms are not linked directly to one another,
$X^{20}$ each, identically or differently, denote F, Cl, CN, $SF_5$, SCN, NCS, a halogenated alkyl radical, a halogenated alkenyl radical, a halogenated alkoxy radical or a halogenated alkenyloxy radical, each having up to 6 C atoms, and
$Y^{20-24}$ each, identically or differently, denote H or F,
W denotes H or methyl,

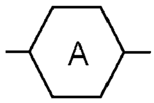 and 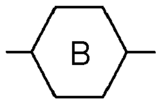

each, identically or differently, denote

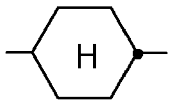 ,

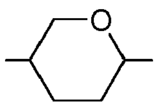 or 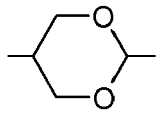 .

6. Device according to one or more of claims 1 to 5, the LC switching layer comprises one or more nematogenic compounds selected from the following formulae:

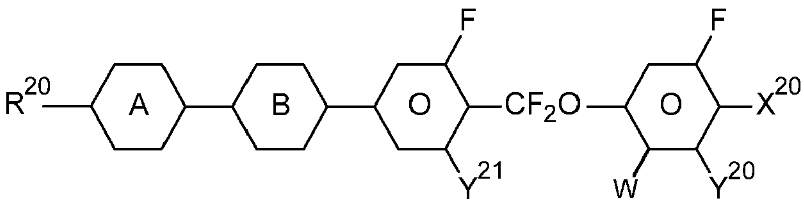 XI

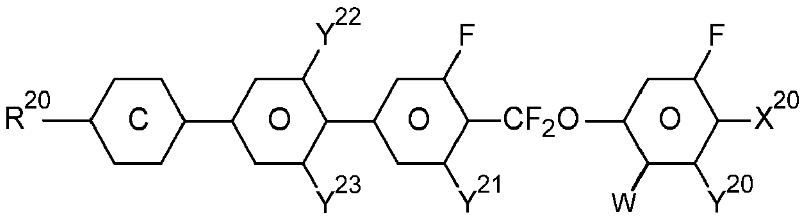 XII

wherein $R^{20}$, $X^{20}$, W and $Y^{20-23}$ have the meanings indicated in formula III in claim 5, and

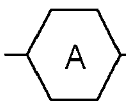 and 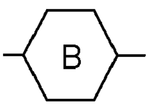

each, independently of one another, denote

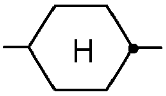,

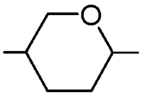 or 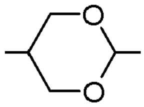

and

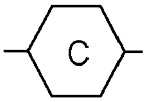

denotes

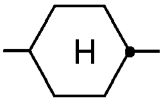, 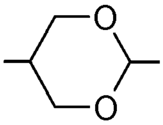, 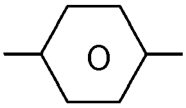

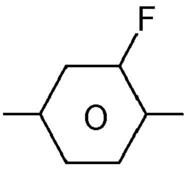 or 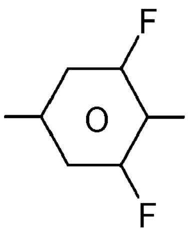

**7.** Device according to one or more of claims 1 to 6, wherein the LC switching layer comprises one or more nematogenic compounds of the following formula:

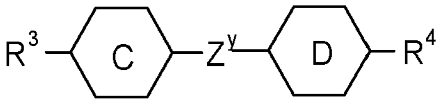 ZK

in which the individual radicals have the following meanings:

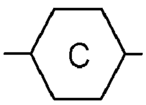

denotes

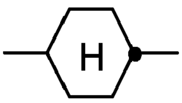, 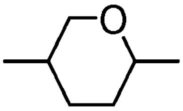, 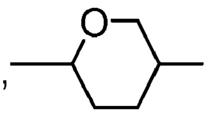,

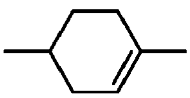 or 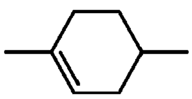,

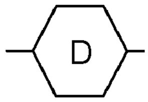

denotes

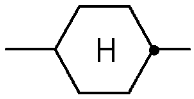 or 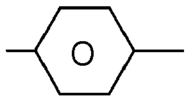 ,

$R^3$ and $R^4$ each, independently of one another, denote alkyl having 1 to 12 C atoms, in which, in addition, one or two non-adjacent $CH_2$ groups are optionally replaced by -O-, -CH=CH-, -CO-, -O-CO- or -CO-O- in such a way that O atoms are not linked directly to one another,

$Z^y$ denotes $-CH_2CH_2-$, -CH=CH-, $-CF_2O-$,$-OCF_2-$, $-CH_2O-$, $-OCH_2-$, -CO-O-, -O-CO-, $-C_2F_4-$, -CF=CF-, -CH=CH-$CH_2O$- or a single bond.

**8.** Process for the fabrication of liquid crystal device comprising at least the steps of providing a first substrate and/or a second substrate with an electrode layer having a surface roughness ≤10 nm RMS; assembling a cell, interposing a liquid crystal mixture according to one or more of claims 1 to 7 between the first substrate and the second substrate, irradiating the liquid crystal mixture with linearly polarised light causing photoalignment of the liquid crystal and curing the polymerizable compounds of the liquid crystal mixture by irradiation with ultraviolet light or visible light having a wavelength of 450nm or below.

Europäisches Patentamt
European Patent Office
Office européen des brevets

# EUROPEAN SEARCH REPORT

Application Number
EP 21 21 3024

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2006/083865 A1 (OKABE MASATO [JP] ET AL) 20 April 2006 (2006-04-20)<br>* paragraphs [0002], [0256], [0282], [0291]; claim 1 * | 1-8<br>3-7 | INV.<br>C09K19/20<br>C09K19/30<br>C09K19/04<br>C09K19/34<br>C09K19/12 |
| X<br>Y | US 2007/026165 A1 (OKABE MASATO [JP] ET AL) 1 February 2007 (2007-02-01)<br>* paragraphs [0210], [0219], [0285]; claim 1 * | 1-8<br>3-7 | |
| Y,D | WO 2017/102068 A1 (MERCK PATENT GMBH [DE]) 22 June 2017 (2017-06-22)<br>* claims; examples; compounds 1-32 * | 3-7 | |
| A | US 2003/170449 A1 (KLOPPEL ANDREAS [DE] ET AL) 11 September 2003 (2003-09-11)<br>* claims; figures; examples * | 1-8 | |

TECHNICAL FIELDS SEARCHED (IPC)

C09K

The present search report has been drawn up for all claims

1

| Place of search | Date of completion of the search | Examiner |
|---|---|---|
| The Hague | 29 April 2022 | Schoenhentz, Jérôme |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 21 21 3024

This annex lists the patent family members relating to the patent documents cited in the above-mentioned European search report. The members are as contained in the European Patent Office EDP file on
The European Patent Office is in no way liable for these particulars which are merely given for the purpose of information.

29-04-2022

| Patent document cited in search report | Publication date | Patent family member(s) | Publication date |
|---|---|---|---|
| US 2006083865 A1 | 20-04-2006 | NONE | |
| US 2007026165 A1 | 01-02-2007 | NONE | |
| WO 2017102068 A1 | 22-06-2017 | CN 108368425 A | 03-08-2018 |
| | | EP 3390570 A1 | 24-10-2018 |
| | | JP 2019508511 A | 28-03-2019 |
| | | KR 20180096688 A | 29-08-2018 |
| | | TW 201736581 A | 16-10-2017 |
| | | US 2020255740 A1 | 13-08-2020 |
| | | WO 2017102068 A1 | 22-06-2017 |
| US 2003170449 A1 | 11-09-2003 | DE 10023459 A1 | 15-11-2001 |
| | | EP 1282919 A1 | 12-02-2003 |
| | | JP 5144868 B2 | 13-02-2013 |
| | | JP 2003532997 A | 05-11-2003 |
| | | KR 20030024665 A | 26-03-2003 |
| | | TW I253477 B | 21-04-2006 |
| | | US 2003170449 A1 | 11-09-2003 |
| | | US 2005175862 A1 | 11-08-2005 |
| | | WO 0186731 A1 | 15-11-2001 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2012104008 A
- WO 2012038026 A
- WO 9949360 A
- US 6849165 B2
- EP 19178130
- EP 18168779
- EP 18168775
- EP 18168774
- EP 18168776
- EP 18199489
- EP 18211999
- WO 2017102068 A
- JP 20066232809 B
- JP S63179323 B
- JP H10239694 B


### Non-patent literature cited in the description


- **N.A. CLARK et al.** *Langmuir,* 2010, vol. 26 (22), 17482-17488
- **M.H. LEE et al.** *Liquid Crystals, https://doi.org/10.1080/02678292.2018.1441459*
- *Pure Appl. Chem.,* 2001, vol. 73 (5), 888
- **C. TSCHIERSKE ; G. PELZL ; S. DIELE.** *Angew. Chem.,* 2004, vol. 116, 6340-6368
- **KIM et al.** *Jpn. J. Appl. Phys.,* 2002, vol. 41, 1523-1526
- Merck Liquid Crystals, Physical Properties of Liquid Crystals. Merck KGaA, Germany, November 1997